(19) Europäisches Patentamt
European Patent Office
Office européen des brevets

(11) **EP 4 676 155 A1**

(12) **EUROPEAN PATENT APPLICATION**
published in accordance with Art. 153(4) EPC

(43) Date of publication:
**07.01.2026  Bulletin 2026/02**

(21) Application number: 23927962.3

(22) Date of filing: **20.03.2023**

(51) International Patent Classification (IPC):
*H04W 74/08* (2024.01)

(52) Cooperative Patent Classification (CPC):
**H04W 74/08**

(86) International application number:
**PCT/CN2023/082622**

(87) International publication number:
**WO 2024/192645 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: HUAWEI TECHNOLOGIES CO., LTD.
**Shenzhen, Guangdong 518129 (CN)**

(72) Inventors:
• **FENG, Qi**
  **Shenzhen, Guangdong 518129 (CN)**
• **WANG, Fan**
  **Shenzhen, Guangdong 518129 (CN)**
• **ZHANG, Zhang**
  **Shenzhen, Guangdong 518129 (CN)**
• **WEI, Dongdong**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, COMMUNICATION APPARATUS, AND COMMUNICATION SYSTEM**

(57)    Embodiments of this application provide a communication method, a communication apparatus, and a communication system. The method may include: A first apparatus obtains a cyclic shift sequence. The cyclic shift sequence is obtained by performing a cyclic shift on a root sequence based on a cyclic shift index. The cyclic shift index includes a delay domain index and a Doppler domain index. The cyclic shift index is a first group of indexes or a second group of indexes. The first group of indexes is determined in ascending order or descending order of delays, and the second group of indexes is determined in ascending order or descending order of Doppler. The first apparatus outputs the cyclic shift sequence. According to embodiments of this application, a capacity of available sequences can be increased.

FIG. 5A

**Description**

TECHNICAL FIELD

This application relates to the field of communication technologies, and in particular, to a communication method, a communication apparatus, and a communication system.

BACKGROUND

In wireless communication, a user terminal device may perform initial network access or short message service message transmission by sending a random access signal. In a long term evolution (long term evolution, LTE) technology and a new radio (new radio, NR) technology, a Zadoff-Chu (ZC) sequence may be used to generate a random access signal sequence set. The sequence set is obtained by performing cyclic shifts on a ZC root sequence.
A Doppler shift affects a correlation property of the ZC sequence, affecting orthogonality of different sequences in a ZC sequence set. Therefore, to improve a capability of the ZC sequence in resisting a frequency offset, the cyclic shift of the ZC sequence is restricted, and a cyclic shift is selected from a restricted set of the ZC sequence, to resist a frequency offset of one or two subcarrier spacings. However, the existing restricted set limits a sequence capacity, affecting communication performance.

SUMMARY

This application provides a communication method, a communication apparatus, and a communication system, to increase a sequence capacity.
A first aspect of this application provides a communication method, including: A first apparatus obtains a cyclic shift sequence. The cyclic shift sequence is obtained by performing a cyclic shift on a root sequence based on a cyclic shift index. The cyclic shift index includes a delay domain index and a Doppler domain index. The cyclic shift index is a first group of indexes or a second group of indexes. The first group of indexes is determined in ascending order or descending order of delays, and the second group of indexes is determined in ascending order or descending order of Doppler. The first apparatus sends the cyclic shift sequence.
A second aspect of embodiments of this application provides a communication method, including: A second apparatus receives a cyclic shift sequence. The cyclic shift sequence is obtained by performing a cyclic shift on a root sequence based on a cyclic shift index. The cyclic shift index includes a delay domain index and a Doppler domain index. The cyclic shift index is a first group of indexes or a second group of indexes. The first group of indexes is determined in ascending order or descending order of delays, and the second group of indexes is determined in ascending order or descending order of Doppler. The second apparatus processes the cyclic shift sequence.
A third aspect of embodiments of this application provides a communication system. The communication system includes a first apparatus and a second apparatus. The first apparatus is configured to: obtain a cyclic shift sequence, where the cyclic shift sequence is obtained by performing a cyclic shift on a root sequence based on a cyclic shift index, the cyclic shift index includes a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and send the cyclic shift sequence. The second apparatus is configured to: receive the cyclic shift sequence, and process the cyclic shift sequence.
In the method according to the first aspect or the second aspect or in the communication system according to the third aspect, the first apparatus may be a terminal device or a functional module (for example, a circuit or a chip) in the terminal device, or may be a network device or a functional module (for example, a circuit or a chip) in the network device. The second apparatus may be a terminal device or a functional module (for example, a circuit or a chip) in the terminal device, or may be a network device or a functional module (for example, a circuit or a chip) in the network device.
For example, in some scenarios (for example, random access), when the first apparatus is a terminal device or a functional module (for example, a circuit or a chip) in the terminal device, the second apparatus is a network device or a functional module (for example, a circuit or a chip) in the network device. In some other scenarios (for example, sensing), when the first apparatus is a network device or a functional module (for example, a circuit or a chip) in the network device, the second apparatus may be a terminal device or a functional module (for example, a circuit or a chip) in the terminal device; or when the first apparatus is a terminal device or a functional module (for example, a circuit or a chip) in the terminal device, the second apparatus may be a terminal device or a functional module (for example, a circuit or a chip) in the terminal device. When the first apparatus is a network device or a functional module (for example, a circuit or a chip) in the network device, the second apparatus may be a network device or a functional module (for example, a circuit or a chip) in the network device.
It can be learned that, in embodiments of this application, one group of indexes may be determined in ascending order of delays, and one group of indexes may be determined in ascending order of Doppler. There are a total of two groups of indexes. The cyclic shift index is one of the foregoing two groups of indexes, and an available cyclic shift sequence may be searched for in different dimensions. Therefore, when one or two subcarriers are resisted, the cyclic shift sequence determined based on the cyclic shift index determined in embodiments of this application can increase a sequence capacity. Further, when this application is further applicable to an increase in the sequence capacity when any subcarrier frequency offset is resisted, thereby improving resource utilization.

The method according to the first aspect or the second aspect or the communication system according to the third aspect includes but is not limited to the following possible implementations.

In a possible implementation, the cyclic shift index is determined based on a first sequence capacity and a second sequence capacity. The first sequence capacity is a sequence capacity obtained after a cyclic shift is performed on the root sequence based on the first group of indexes, and the second sequence capacity is a sequence capacity obtained after a cyclic shift is performed on the root sequence based on the second group of indexes.

It can be learned that, in embodiments of this application, the sequence capacities may be separately determined in a delay domain dimension and a Doppler domain dimension, to search for more available sequences. The cyclic shift index is related to the sequence capacity. Therefore, the cyclic shift sequence obtained based on the cyclic shift index can increase the sequence capacity and improve the resource utilization.

In a possible implementation, when the first sequence capacity is greater than or equal to the second sequence capacity, the cyclic shift index is the first group of indexes; or when the first sequence capacity is less than the second sequence capacity, the cyclic shift index is the second group of indexes.

It can be learned that the first group of indexes corresponds to the first sequence capacity, the second group of indexes corresponds to the second sequence capacity, and the cyclic shift index is an index corresponding to a larger group in the two groups of sequence capacities. Therefore, the cyclic shift sequence obtained based on the cyclic shift index can increase the sequence capacity and improve the resource utilization. It is easy to understand that a case of "equal to" may be placed in another branch of determining. For example, if the first sequence capacity is less than or equal to the second sequence capacity, the second group of indexes is the cyclic shift index.

In a possible implementation, the cyclic shift sequence is a sequence in a sequence set, zero ambiguity zones of cyclic shift sequences included in the sequence set do not overlap each other, the sequence set is obtained by performing cyclic shifts on the root sequence based on a cyclic shift index set, and the cyclic shift index is one index in the cyclic shift index set.

It may be understood that the cyclic shift index set includes a plurality of cyclic shift indexes, and a plurality of cyclic shift sequences whose zero ambiguity zones do not overlap each other may be obtained by performing the cyclic shifts on the root sequence based on the cyclic shift index set, so that a sequence capacity of the zero ambiguity zone can be increased.

In a possible implementation, the first group of indexes is determined based on delay constraint coordinates. The delay constraint coordinates are coordinates of a peak with a smallest delay in peaks of a zero ambiguity zone that is of the root sequence and that overlaps a zero ambiguity zone of a delay cyclic shift sequence. The delay cyclic shift sequence is a sequence obtained by performing, in delay domain, a cyclic shift on the root sequence located at an origin of a delay domain-Doppler domain coordinate system.

It may be understood that, to resist a frequency offset, an ambiguity function of a cyclic shift sequence has only a single peak within a zero ambiguity zone, and cyclic shift sequences do not overlap each other. To avoid overlapping of zero ambiguity zones of cyclic shift sequences obtained by performing Doppler cyclic shifts on the root sequence, the delay constraint coordinates may be used as an "end point" for performing cyclic shifts on the root sequence in delay domain. Therefore, a maximum quantity of available sequences obtained by performing cyclic shifts on the root sequence in delay domain may be determined based on the delay constraint coordinates. Therefore, the cyclic shift sequence is determined based on the first group of indexes, so that a capacity of available sequences can be increased on the basis of resisting the frequency offset.

In a possible implementation, the first group of indexes is determined based on the delay constraint coordinates, a preset maximum delay, and a preset maximum Doppler shift. The delay constraint coordinates and the preset maximum delay are used to determine a first quantity of cyclic shifts. The first quantity of cyclic shifts is a quantity of sequences that are obtained by performing cyclic shifts on the root sequence in delay domain and whose zero ambiguity zones are adjacent and do not overlap each other.

It may be understood that, if only a single peak appears within an interval including the preset maximum delay and the preset maximum Doppler shift, the interval including the preset maximum delay and the preset maximum Doppler shift is referred to as a zero ambiguity zone, and there is orthogonality between sequences that each have only a single peak within a zero ambiguity zone. Therefore, cyclic shift sequences determined based on the first group of indexes are orthogonal to each other. In a possible implementation, the first group of indexes is determined based on the delay constraint coordinates, a quantity of complete cyclic shifts in Doppler domain, and a quantity of residual cyclic shifts in delay domain. The quantity of complete cyclic shifts in Doppler domain is a quantity of Doppler domain complete sequences, and the Doppler domain complete sequence is a Doppler domain fixed sequence that satisfies a first preset condition. The quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition. The Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

It can be learned that the quantity of complete cyclic shifts in Doppler domain and the quantity of residual cyclic shifts in delay domain are values related to the delay constraint coordinates and the Doppler domain, and a maximum quantity of available sequences obtained by performing the cyclic shifts on the root sequence in delay domain may be determined based on the delay constraint coordinates. Therefore, the quantity of complete cyclic shifts in Doppler domain and the quantity of residual cyclic shifts in delay domain are a maximum quantity of available sequences obtained by performing the cyclic shifts on the root sequence in Doppler domain. Therefore, the cyclic shift sequence is determined based on the first group of indexes, to increase the capacity of available sequences.

In a possible implementation, the quantity of complete cyclic shifts in Doppler domain is determined based on a Doppler spacing. The quantity of residual cyclic shifts in delay domain is determined based on the quantity of complete cyclic shifts in Doppler domain, the delay constraint coordinates, and inverse delay constraint coordinates. The inverse delay constraint coordinates and the delay constraint coordinates are used to determine the Doppler spacing.

In a possible implementation, the first quantity of cyclic shifts, the quantity of complete cyclic shifts in Doppler domain, and the quantity of residual cyclic shifts in delay domain are used to determine the first sequence capacity.

It can be learned that the first group of indexes is determined in ascending order of delays. First, a quantity of sequences whose zero ambiguity zones are adjacent to and do not overlap each other, that is, the first quantity of cyclic shifts, is determined in delay domain. Then, a cyclic shift sequence that satisfies a requirement of the zero ambiguity zone continues to be searched for in Doppler domain based on the first quantity of cyclic shifts. The applicant finds that a method in an existing NR/LTE protocol may be considered as searching for a cyclic shift sequence that satisfies the requirement of the zero ambiguity zone in delay domain. The cyclic shift sequence determined in this application includes not only a sequence in delay domain but also a sequence in Doppler domain. Therefore, the capacity of available sequences can be increased. It should be noted that, even if a cyclic shift sequence that satisfies the requirement of the zero ambiguity zone is searched for in delay domain in this application, in comparison with the existing NR/LTE protocol, this application can still increase the capacity of available sequences due to different methods for determining cyclic shifts.

In a possible implementation, the second group of indexes is determined based on Doppler constraint coordinates. The Doppler constraint coordinates are coordinates of a peak with a smallest Doppler shift in peaks of a zero ambiguity zone that is of the root sequence and that overlaps a zero ambiguity zone of a Doppler cyclic shift sequence. The Doppler cyclic shift sequence is a sequence obtained by performing, in Doppler domain, a cyclic shift on the root sequence located at an origin of a delay domain-Doppler domain coordinate system.

It may be understood that, to resist a frequency offset, an ambiguity function of a cyclic shift sequence has only a single peak within a zero ambiguity zone, and cyclic shift sequences do not overlap each other. To avoid overlapping of zero ambiguity zones of cyclic shift sequences obtained by performing cyclic shifts on the root sequence in Doppler domain, the Doppler constraint coordinates may be used as an "end point" for performing cyclic shifts on the root sequence in Doppler domain. Therefore, a maximum quantity of available sequences obtained by performing cyclic shifts on the root sequence in Doppler domain may be determined based on the Doppler constraint coordinates. Therefore, the cyclic shift sequence is determined based on the second group of indexes, so that a capacity of available sequences can be increased on the basis of resisting the frequency offset.

In a possible implementation, the second group of indexes is determined based on the Doppler constraint coordinates, a preset maximum delay, and a preset maximum Doppler shift. The Doppler constraint coordinates and the preset maximum Doppler shift are used to determine a second quantity of cyclic shifts. The second quantity of cyclic shifts is a quantity of sequences that are obtained by performing cyclic shifts on the root sequence in Doppler domain and whose zero ambiguity zones are adjacent and do not overlap each other.

It may be understood that, if only a single peak appears within an interval including the preset maximum delay and the preset maximum Doppler shift, the interval including the preset maximum delay and the preset maximum Doppler shift is referred to as a zero ambiguity zone, and there is orthogonality between sequences that each have only a single peak within the zero ambiguity zone. Therefore, cyclic shift sequences determined based on the second group of indexes are orthogonal to each other.

In a possible implementation, the second group of indexes is determined based on the Doppler constraint coordinates, a quantity of complete cyclic shifts in delay domain, and a quantity of residual cyclic shifts in Doppler domain. The quantity of complete cyclic shifts in delay domain is a quantity of delay domain complete sequences, and the delay domain complete sequence is a delay domain fixed sequence that satisfies a second preset condition. The quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition. The delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

It can be learned that the quantity of complete cyclic shifts in delay domain and the quantity of residual cyclic shifts in Doppler domain are values related to the Doppler constraint coordinates and the delay domain, and a maximum quantity of available sequences obtained by performing the cyclic shifts on the root sequence in Doppler domain may be determined based on the Doppler constraint coordinates. Therefore, the quantity of complete cyclic shifts in delay domain and the quantity of residual cyclic shifts in Doppler domain are a maximum quantity of available sequences obtained by performing the cyclic shifts on the root sequence in delay domain. Therefore, the cyclic shift sequence is determined based on the second group of indexes, to increase the capacity of available sequences.

In a possible implementation, the quantity of complete cyclic shifts in delay domain is determined based on a delay spacing. The quantity of residual cyclic shifts in Doppler domain is determined based on the quantity of complete cyclic shifts in delay domain, the Doppler constraint coordinates, and inverse Doppler constraint coordinates. The inverse Doppler constraint coordinates and the Doppler constraint coordinates are used to determine the delay spacing.

In a possible implementation, the second quantity of cyclic shifts, the quantity of complete cyclic shifts in delay domain, and the quantity of residual cyclic shifts in Doppler domain are used to determine the second sequence capacity.

It can be learned that the second group of indexes is determined in ascending order of Doppler. First, a quantity of sequences whose zero ambiguity zones are adjacent to and do not overlap each other, that is, the second quantity of cyclic shifts, is determined in Doppler domain. Then, a cyclic shift sequence that satisfies a requirement of the zero ambiguity zone continues to be searched for in delay domain based on the second quantity of cyclic shifts. The applicant finds that a method in an existing NR/LTE protocol may be considered as searching for a cyclic shift sequence that satisfies the requirement of the zero ambiguity zone in delay domain. The cyclic shift sequence determined in this application includes not only a sequence in delay domain but also a sequence in Doppler domain. Therefore, the capacity of available sequences can be increased.

In a possible implementation, the cyclic shift sequence is used to generate a random access signal or a sensing signal.

In a possible implementation, an expression of the first group of indexes is:

$$\begin{cases} \tau_{k,l} = k\Delta_{\mathrm{T}} - l \cdot (\bar{\tau}_{\mathrm{T}} \bmod \Delta_{\mathrm{T}}) \\ \nu_{k,l} = \mathrm{sgn}(\bar{\nu}_{\mathrm{T}} - N/2) \cdot l\Delta_{\mathrm{F}} \end{cases}$$

where $\tau_{k,l}$ represents a delay domain index in the first group of indexes, $\nu_{k,l}$ represents a Doppler domain index in the first group of indexes, $\langle \bar{\tau}_{\mathrm{T}}, \bar{\nu}_{\mathrm{T}} \rangle$ represents the delay constraint coordinates, $k$ represents a first parameter, $l$ represents a second parameter, a value range of $k$ and $l$ is $\left\{ 0 \leq k < \lfloor \bar{\tau}_{\mathrm{T}}/\Delta_{\mathrm{T}} \rfloor, 0 \leq l < \bar{l}_{\mathrm{T}} \right\} \cup \left\{ 0 \leq k < \bar{k}_{\mathrm{T}}, l = \bar{l}_{\mathrm{T}} \right\}$, $\bar{l}_{\mathrm{T}}$ represents the quantity of complete cyclic shifts in Doppler domain, $\bar{k}_{\mathrm{T}}$ represents the quantity of residual cyclic shifts in delay domain, and $\Delta_{\mathrm{T}}$ represents the preset maximum delay.

In a possible implementation of the first aspect, an expression of the delay constraint coordinates $\langle \bar{\tau}_{\mathrm{T}}, \bar{\nu}_{\mathrm{T}} \rangle$ is:

$$\begin{cases} \bar{\tau}_{\mathrm{T}} = \min_{\nu \in \{\pm 1, \pm 2, \ldots, \pm(\Delta_{\mathrm{F}}-1)\}} - u^{-1}\nu \bmod N \\ \bar{\nu}_{\mathrm{T}} = - u\bar{\tau}_{\mathrm{T}} \bmod N \end{cases}$$

where $N$ represents a sequence length, the sequence length is a prime number, $u$ represents a root index, $v$ represents a Doppler shift, and $\Delta_{\mathrm{F}}$ represents the preset maximum Doppler shift;

an expression of the quantity of complete cyclic shifts in Doppler domain is:

$$\bar{l}_{\mathrm{T}} = \left\lfloor \frac{\bar{d}_{\mathrm{T}} + (\Delta_{\mathrm{F}} - 1)/2}{\Delta_{\mathrm{F}}} \right\rfloor$$

where $\bar{l}_T$ represents the quantity of complete cyclic shifts in Doppler domain, and $\bar{d}_T$ represents the delay spacing; an expression of the quantity of residual cyclic shifts in delay domain is as follows:

$$\bar{k}_T = \max\left\{\left\lfloor\left(\bar{\bar{\tau}}_T - \bar{\tau}_T \cdot \left\lfloor\frac{(\bar{l}_T + 1)\Delta_F - \min\{\bar{\bar{v}}_T, N - \bar{\bar{v}}_T\} - 1}{\min\{\bar{v}_T, N - \bar{v}_T\}}\right\rfloor + \bar{l}_T \cdot (\bar{\tau}_T \bmod \Delta_T)\right)\middle/\Delta_T\right\rfloor, 0\right\}$$

where $\bar{k}_T$ represents the quantity of residual cyclic shifts in delay domain, $\langle\bar{\bar{\tau}}_T, \bar{\bar{v}}_T\rangle$ represents the inverse delay constraint coordinates, and $\Delta_T$ represents the preset maximum delay; an expression of the delay spacing $\bar{d}_T$ is:

$$\bar{d}_T = \min\left\{d_T \middle| \bar{\tau}_T \cdot \left\lfloor\frac{d_T - \min\{\bar{v}_T, N - \bar{v}_T\} + (\Delta_F - 1)/2}{\min\{\bar{v}_T, N - \bar{v}_T\}}\right\rfloor - \bar{\tau}_T \bmod \Delta_T \cdot \left(\left\lfloor\frac{d_T + (\Delta_F - 1)/2}{\Delta_F}\right\rfloor + 1\right) \geq \bar{\bar{\tau}}_T - \bar{\tau}_T\right\};$$

and

an expression of the inverse delay constraint coordinates $\langle\bar{\bar{\tau}}_T, \bar{\bar{v}}_T\rangle$ is as follows:

$$\begin{cases}\bar{\bar{\tau}}_T = \min_{v\in\{1,2,\ldots,\Delta_F-1\}} - \operatorname{sgn}(\bar{v}_T - N/2)\, u^{-1}v \bmod N \\ \bar{\bar{v}}_T = -u\bar{\bar{\tau}}_T \bmod N\end{cases}.$$

In a possible implementation, an expression of the second group of indexes is:

$$\begin{cases}\tau_{k,l} = \operatorname{sgn}(\bar{\tau}_F - N/2) \cdot k\Delta_T \\ v_{k,l} = l\Delta_F - k \cdot (\bar{v}_F \bmod \Delta_F)\end{cases}$$

where $\tau_{k,l}$ represents a delay domain cyclic shift in the second group of indexes, $v_{k,l}$ represents a Doppler cyclic shift in the second group of indexes, $\langle\bar{\tau}_F, \bar{v}_F\rangle$ represents the Doppler constraint coordinates, $k$ represents a first parameter, $l$ represents a second parameter, a value range of $k$ and $l$ is

$$\left\{0 \leq k < \bar{k}_F, 0 \leq l < \lfloor\bar{v}_F/\Delta_F\rfloor\right\}\cup\left\{k = \bar{k}_F, 0 \leq l < \bar{l}_F\right\}$$, $\bar{l}_F$ represents the quantity of complete cyclic shifts in delay domain, $\bar{k}_F$ represents the quantity of residual cyclic shifts in Doppler domain, and $\Delta_F$ represents the preset maximum Doppler shift.

In a possible implementation, an expression of the Doppler constraint coordinates $\langle\bar{\tau}_F, \bar{v}_F\rangle$ is as follows:

$$\begin{cases}\bar{v}_F = \min_{\tau\in\{\pm1,\pm2,\ldots,\pm(\Delta_T-1)\}} - u\tau \bmod N \\ \bar{\tau}_F = -u^{-1}\bar{v}_F \bmod N\end{cases}$$

where $N$ represents a sequence length, the sequence length is a prime number, $u$ represents a root index, $\bar{\tau}$ represents a delay, and $\Delta_T$ represents the preset maximum delay;

an expression of the quantity of complete cyclic shifts in delay domain is as follows:

$$\bar{k}_F = \left\lceil\frac{\bar{d}_F}{\Delta_T}\right\rceil$$

where $\bar{k}_F$ represents the quantity of complete cyclic shifts in delay domain, and $\bar{d}_F$ represents the Doppler spacing; an expression of the quantity $\bar{l}_F$ of residual cyclic shifts in Doppler domain is as follows:

$$\bar{l}_{\mathrm{F}} = \max\left\{\left\lceil \left(\bar{\bar{v}}_{\mathrm{F}} - \bar{v}_{\mathrm{F}} \cdot \left\lfloor \frac{(\bar{k}_{\mathrm{F}}+1)\Delta_{\mathrm{T}} - \min\{\bar{\bar{\tau}}_{\mathrm{F}}, N-\bar{\bar{\tau}}_{\mathrm{F}}\} - 1}{\min\{\bar{\tau}_{\mathrm{F}}, N-\bar{\tau}_{\mathrm{F}}\}} \right\rfloor + \bar{k}_{\mathrm{F}} \cdot (\bar{v}_{\mathrm{F}} \bmod \Delta_{\mathrm{F}})\right)\Big/ \Delta_{\mathrm{F}} \right\rceil, 0\right\}$$

where $\langle \bar{\bar{\tau}}_{\mathrm{F}}, \bar{\bar{v}}_{\mathrm{F}}\rangle$ represents the inverse Doppler constraint coordinates, and $\Delta_{\mathrm{F}}$ represents the preset maximum Doppler shift;

an expression of the delay spacing $\bar{d}_{\mathrm{F}}$ is as follows:

$$\bar{d}_{\mathrm{F}} = \min\left\{d_{\mathrm{F}} \middle| \bar{v}_{\mathrm{F}} \cdot \left\lfloor \frac{d_{\mathrm{F}} - \min\{\bar{\bar{\tau}}_{\mathrm{F}}, N-\bar{\bar{\tau}}_{\mathrm{F}}\}}{\min\{\bar{\tau}_{\mathrm{F}}, N-\bar{\tau}_{\mathrm{F}}\}} \right\rfloor - \bar{v}_{\mathrm{F}} \bmod \Delta_{\mathrm{F}} \cdot \left(\left\lfloor \frac{d_{\mathrm{F}}}{\Delta_{\mathrm{T}}} \right\rfloor + 1\right) \geq \bar{\bar{v}}_{\mathrm{F}} - \bar{v}_{\mathrm{F}}\right\}; \;$$

and

an expression of the inverse Doppler constraint coordinates $\langle \bar{\bar{\tau}}_{\mathrm{F}}, \bar{\bar{v}}_{\mathrm{F}}\rangle$ is as follows:

$$\begin{cases} \bar{\bar{v}}_{\mathrm{F}} = \min_{\tau \in \{1,2,\dots,\Delta_{\mathrm{T}}-1\}} - \mathrm{sgn}(\bar{\tau}_{\mathrm{F}} - N/2)\, u\tau \bmod N \\ \bar{\bar{\tau}}_{\mathrm{F}} = -u^{-1}\bar{\bar{v}}_{\mathrm{F}} \bmod N \end{cases}.$$

In a possible implementation, when $\bar{l}_{\mathrm{T}} \cdot \lfloor \bar{\tau}_{\mathrm{T}}/\Delta_{\mathrm{T}}\rfloor + \bar{k}_{\mathrm{T}} \geq \bar{k}_{\mathrm{F}} \cdot \lfloor \bar{v}_{\mathrm{F}}/\Delta_{\mathrm{F}}\rfloor + \bar{l}_{\mathrm{F}}$, the cyclic shift index is the first group of indexes; or

when $\bar{l}_{\mathrm{T}} \cdot \lfloor \bar{\tau}_{\mathrm{T}}/\Delta_{\mathrm{T}}\rfloor + \bar{k}_{\mathrm{T}} < \bar{k}_{\mathrm{F}} \cdot \lfloor \bar{v}_{\mathrm{F}}/\Delta_{\mathrm{F}}\rfloor + \bar{l}_{\mathrm{F}}$, the cyclic shift index is the second group of indexes.

In a possible implementation, an expression of a discrete-time signal of the cyclic shift sequence is:

$$s_{u,k,l}(n) = e^{-j\pi u(n+C_{k,l})(n+C_{k,l}+1)/N}, n = 0, 1, \dots, N-1$$

where $s_{u,k,l}(n)$ represents the cyclic shift sequence, $N$ represents the sequence length, the sequence length is a prime number, $u$ represents the root index, $C_{k,l}$ represents the cyclic shift index, $C_{k,l} = (\tau_{k,l} + u^{-1}v_{k,l}) \bmod N$, $\tau_{k,l}$ represents the delay domain index, $v_{k,l}$ represents the Doppler domain index, $k$ represents the first parameter, and $l$ represents the second parameter.

Compared with the existing LTE/NR protocol in which one cyclic shift sequence corresponds to one expression, in embodiments of this application, a unified expression of cyclic shift sequences may be provided, so that any delay offset and Doppler shift can be supported, and complexity can be reduced to some extent.

According to a fourth aspect, an embodiment of this application provides a communication apparatus. The communication apparatus may include modules or units that are in one-to-one correspondence with the methods/operations/steps/actions described in the first aspect. The module or the unit may be implemented by a hardware circuit, software, or a combination of the hardware circuit and the software.

In a possible implementation of the fourth aspect, the communication apparatus includes a communication unit and a processing unit. The processing unit is configured to obtain a cyclic shift sequence. The cyclic shift sequence is obtained by performing a cyclic shift on a root sequence based on a cyclic shift index. The cyclic shift index includes a delay domain index and a Doppler domain index. The cyclic shift index is a first group of indexes or a second group of indexes. The first group of indexes is determined in ascending order or descending order of delays, and the second group of indexes is determined in ascending order or descending order of Doppler. The communication unit is configured to send the cyclic shift sequence.

According to a fifth aspect, an embodiment of this application provides a communication apparatus. The communication apparatus may include modules or units that are in one-to-one correspondence with the methods/operations/steps/actions described in the second aspect. The module or the unit may be implemented by a hardware circuit, software, or a combination of the hardware circuit and the software.

In a possible implementation of the fifth aspect, the communication apparatus includes a communication unit and a processing unit. The communication unit is configured to receive a cyclic shift sequence. The cyclic shift sequence is obtained by performing a cyclic shift on a root sequence based on a cyclic shift index. The cyclic shift index includes a delay domain index and a Doppler domain index. The cyclic shift index is a first group of indexes or a second group of indexes. The first group of indexes is determined in ascending order or descending order of delays, and the second group of indexes is determined in ascending order or descending order of Doppler. The processing unit is configured to process the cyclic shift sequence.

The communication apparatus according to the fourth aspect or the fifth aspect includes but is not limited to the following possible implementations.

In a possible implementation, the cyclic shift index is determined based on a first sequence capacity and a second sequence capacity. The first sequence capacity is a sequence capacity obtained after a cyclic shift is performed on the root sequence based on the first group of indexes, and the second sequence capacity is a sequence capacity obtained after a cyclic shift is performed on the root sequence based on the second group of indexes.

In a possible implementation, when the first sequence capacity is greater than or equal to the second sequence capacity, the cyclic shift index is the first group of indexes; or when the first sequence capacity is less than the second sequence capacity, the cyclic shift index is the second group of indexes.

In a possible implementation, the cyclic shift sequence is a sequence in a sequence set, zero ambiguity zones of cyclic shift sequences included in the sequence set do not overlap each other, the sequence set is obtained by performing cyclic shifts on the root sequence based on a cyclic shift index set, and the cyclic shift index is one index in the cyclic shift index set.

In a possible implementation, the first group of indexes is determined based on delay constraint coordinates. The delay constraint coordinates are coordinates of a peak with a smallest delay in peaks of a zero ambiguity zone that is of the root sequence and that overlaps a zero ambiguity zone of a delay cyclic shift sequence. The delay cyclic shift sequence is a sequence obtained by performing, in delay domain, a cyclic shift on the root sequence located at an origin of a delay domain-Doppler domain coordinate system.

In a possible implementation, the first group of indexes is determined based on the delay constraint coordinates, a preset maximum delay, and a preset maximum Doppler shift. The delay constraint coordinates and the preset maximum delay are used to determine a first quantity of cyclic shifts. The first quantity of cyclic shifts is a quantity of sequences that are obtained by performing cyclic shifts on the root sequence in delay domain and whose zero ambiguity zones are adjacent and do not overlap each other.

In a possible implementation, the first group of indexes is determined based on the delay constraint coordinates, a quantity of complete cyclic shifts in Doppler domain, and a quantity of residual cyclic shifts in delay domain. The quantity of complete cyclic shifts in Doppler domain is a quantity of Doppler domain complete sequences, and the Doppler domain complete sequence is a Doppler domain fixed sequence that satisfies a first preset condition. The quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition. The Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

In a possible implementation, the quantity of complete cyclic shifts in Doppler domain is determined based on a Doppler spacing. The quantity of residual cyclic shifts in delay domain is determined based on the quantity of complete cyclic shifts in Doppler domain, the delay constraint coordinates, and inverse delay constraint coordinates. The inverse delay constraint coordinates and the delay constraint coordinates are used to determine the Doppler spacing.

In a possible implementation, the first quantity of cyclic shifts, the quantity of complete cyclic shifts in Doppler domain, and the quantity of residual cyclic shifts in delay domain are used to determine the first sequence capacity.

In a possible implementation, the second group of indexes is determined based on Doppler constraint coordinates. The Doppler constraint coordinates are coordinates of a peak with a smallest Doppler shift in peaks of a zero ambiguity zone that is of the root sequence and that overlaps a zero ambiguity zone of a Doppler cyclic shift sequence. The Doppler cyclic shift sequence is a sequence obtained by performing, in Doppler domain, a cyclic shift on the root sequence located at an origin of a delay domain-Doppler domain coordinate system.

In a possible implementation, the second group of indexes is determined based on the Doppler constraint coordinates, a preset maximum delay, and a preset maximum Doppler shift. The Doppler constraint coordinates and the preset maximum Doppler shift are used to determine a second quantity of cyclic shifts. The second quantity of cyclic shifts is a quantity of sequences that are obtained by performing cyclic shifts on the root sequence in Doppler domain and whose zero ambiguity zones are adjacent and do not overlap each other.

In a possible implementation, the second group of indexes is determined based on the Doppler constraint coordinates, a quantity of complete cyclic shifts in delay domain, and a quantity of residual cyclic shifts in Doppler domain. The quantity of complete cyclic shifts in delay domain is a quantity of delay domain complete sequences, and the delay domain complete sequence is a delay domain fixed sequence that satisfies a second preset condition. The quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition. The delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

In a possible implementation, the quantity of complete cyclic shifts in delay domain is determined based on a delay spacing. The quantity of residual cyclic shifts in Doppler domain is determined based on the quantity of complete cyclic shifts in delay domain, the Doppler constraint coordinates, and inverse Doppler constraint coordinates. The inverse Doppler constraint coordinates and the Doppler constraint coordinates are used to determine the delay spacing.

In a possible implementation, the second quantity of cyclic shifts, the quantity of complete cyclic shifts in delay domain, and the quantity of residual cyclic shifts in Doppler domain are used to determine the second sequence capacity.

In a possible implementation, the cyclic shift sequence is used to generate a random access signal or a sensing signal.

In a possible implementation, an expression of the first group of indexes is:

$$\begin{cases} \tau_{k,l} = k\Delta_\mathrm{T} - l \cdot (\bar\tau_\mathrm{T} \bmod \Delta_\mathrm{T}) \\ \nu_{k,l} = \mathrm{sgn}(\bar\nu_\mathrm{T} - N/2) \cdot l\Delta_\mathrm{F} \end{cases}$$

where $\tau_{k,l}$ represents a delay domain index in the first group of indexes, $\nu_{k,l}$ represents a Doppler domain index in the first group of indexes, $\langle \bar\tau_\mathrm{T}, \bar\nu_\mathrm{T} \rangle$ represents the delay constraint coordinates, $k$ represents a first parameter, $l$ represents a second parameter, a value range of $k$ and $l$ is $\left\{ 0 \le k < \lfloor \bar\tau_\mathrm{T}/\Delta_\mathrm{T} \rfloor, 0 \le l < \bar l_\mathrm{T} \right\} \cup \left\{ 0 \le k < \bar k_\mathrm{T}, l = \bar l_\mathrm{T} \right\}$, $\bar l_\mathrm{T}$ represents the quantity of complete cyclic shifts in Doppler domain, $\bar k_\mathrm{T}$ represents the quantity of residual cyclic shifts in delay domain, and $\Delta_\mathrm{T}$ represents the preset maximum delay.

In a possible implementation of the fourth aspect, an expression of the delay constraint coordinates $\langle \bar\tau_\mathrm{T}, \bar\nu_\mathrm{T} \rangle$ is:

$$\begin{cases} \bar\tau_\mathrm{T} = \min_{\nu \in \{\pm 1, \pm 2, \dots, \pm(\Delta_\mathrm{F}-1)\}} -u^{-1}\nu \bmod N \\ \bar\nu_\mathrm{T} = -u\bar\tau_\mathrm{T} \bmod N \end{cases}$$

where $N$ represents a sequence length, the sequence length is a prime number, $u$ represents a root index, $v$ represents a Doppler shift, and $\Delta_\mathrm{F}$ represents the preset maximum Doppler shift;

an expression of the quantity of complete cyclic shifts in Doppler domain is:

$$\bar l_\mathrm{T} = \left\lfloor \frac{\bar d_\mathrm{T} + (\Delta_\mathrm{F}-1)/2}{\Delta_\mathrm{F}} \right\rfloor$$

where $\bar l_\mathrm{T}$ represents the quantity of complete cyclic shifts in Doppler domain, and $\bar d_\mathrm{T}$ represents the delay spacing;

an expression of the quantity of residual cyclic shifts in delay domain is as follows:

$$\bar k_\mathrm{T} = \max \left\{ \left\lfloor \left( \bar{\bar\tau}_\mathrm{T} - \bar\tau_\mathrm{T} \cdot \left\lfloor \frac{(\bar l_\mathrm{T} + 1)\Delta_\mathrm{F} - \min\{\bar{\bar\nu}_\mathrm{T}, N - \bar{\bar\nu}_\mathrm{T}\} - 1}{\min\{\bar\nu_\mathrm{T}, N - \bar\nu_\mathrm{T}\}} \right\rfloor + \bar l_\mathrm{T} \cdot (\bar\tau_\mathrm{T} \bmod \Delta_\mathrm{T}) \right) \middle/ \Delta_\mathrm{T} \right\rfloor, 0 \right\}$$

where $\bar k_\mathrm{T}$ represents the quantity of residual cyclic shifts in delay domain, $\langle \bar{\bar\tau}_\mathrm{T}, \bar{\bar\nu}_\mathrm{T} \rangle$ represents the inverse delay constraint coordinates, and $\Delta_\mathrm{T}$ represents the preset maximum delay;

an expression of the delay spacing $\bar d_\mathrm{T}$ is:

$$\bar d_\mathrm{T} = \min\left\{ d_\mathrm{T} \middle| \bar\tau_\mathrm{T} \cdot \left\lfloor \frac{d_\mathrm{T} - \min\{\bar\nu_\mathrm{T}, N - \bar\nu_\mathrm{T}\} + (\Delta_\mathrm{F}-1)/2}{\min\{\bar\nu_\mathrm{T}, N - \bar\nu_\mathrm{T}\}} \right\rfloor - \bar\tau_\mathrm{T} \bmod \Delta_\mathrm{T} \cdot \left( \left\lfloor \frac{d_\mathrm{T} + (\Delta_\mathrm{F}-1)/2}{\Delta_\mathrm{F}} \right\rfloor + 1 \right) \ge \bar{\bar\tau}_\mathrm{T} - \bar\tau_\mathrm{T} \right\};$$

and

an expression of the inverse delay constraint coordinates $\left\langle \bar{\bar{\tau}}_T, \bar{\bar{v}}_T \right\rangle$ is as follows:

$$\begin{cases} \bar{\bar{\tau}}_T = \min_{v \in \{1,2,\ldots,\Delta_F-1\}} - \mathrm{sgn}(\bar{v}_T - N/2)\, u^{-1} v \bmod N \\ \bar{\bar{v}}_T = - u \bar{\bar{\tau}}_T \bmod N \end{cases} .$$

In a possible implementation, an expression of the second group of indexes is:

$$\begin{cases} \tau_{k,l} = \mathrm{sgn}(\bar{\tau}_F - N/2) \cdot k\Delta_T \\ v_{k,l} = l\Delta_F - k \cdot (\bar{v}_F \bmod \Delta_F) \end{cases}$$

where $\tau_{k,l}$ represents a delay domain cyclic shift in the second group of indexes, $v_{k,l}$ represents a Doppler cyclic shift in the second group of indexes, $\langle \bar{\tau}_F, \bar{v}_F \rangle$ represents the Doppler constraint coordinates, $k$ represents a first parameter, $l$ represents a second parameter, a value range of $k$ and $l$ is $\left\{ 0 \le k < \bar{k}_F, 0 \le l < \lfloor \bar{v}_F/\Delta_F \rfloor \right\} \cup \left\{ k = \bar{k}_F, 0 \le l < \bar{l}_F \right\}$, $\bar{l}_F$ represents the quantity of complete cyclic shifts in delay domain, $\bar{k}_F$ represents the quantity of residual cyclic shifts in Doppler domain, and $\Delta_F$ represents the preset maximum Doppler shift.

In a possible implementation, an expression of the Doppler constraint coordinates $\langle \bar{\tau}_F, \bar{v}_F \rangle$ is as follows:

$$\begin{cases} \bar{v}_F = \min_{\tau \in \{\pm 1, \pm 2,\ldots,\pm(\Delta_T-1)\}} - u\tau \bmod N \\ \bar{\tau}_F = - u^{-1} \bar{v}_F \bmod N \end{cases}$$

where $N$ represents a sequence length, the sequence length is a prime number, $u$ represents a root index, $\tau$ represents a delay, and $\Delta_T$ represents the preset maximum delay;

an expression of the quantity of complete cyclic shifts in delay domain is as follows:

$$\bar{k}_F = \left\lfloor \frac{\bar{d}_F}{\Delta_T} \right\rfloor$$

where $\bar{k}_F$ represents the quantity of complete cyclic shifts in delay domain, and $\bar{d}_F$ represents the Doppler spacing;
an expression of the quantity $\bar{l}_F$ of residual cyclic shifts in Doppler domain is as follows:

$$\bar{l}_F = \max\left\{ \left\lfloor \left( \left( \bar{\bar{v}}_F - \bar{v}_F \cdot \left\lfloor \frac{(\bar{k}_F + 1)\Delta_T - \min\{\bar{\bar{\tau}}_F, N - \bar{\bar{\tau}}_F\} - 1}{\min\{\bar{\tau}_F, N - \bar{\tau}_F\}} \right\rfloor + \bar{k}_F \cdot (\bar{v}_F \bmod \Delta_F) \right) \middle/ \Delta_F \right\rfloor, 0 \right\}$$

where $\left\langle \bar{\bar{\tau}}_F, \bar{\bar{v}}_F \right\rangle$ represents the inverse Doppler constraint coordinates, and $\Delta_F$ represents the preset maximum Doppler shift;
an expression of the delay spacing $\bar{d}_F$ is as follows:

$$\bar{d}_F = \min\left\{ d_F \middle| \bar{v}_F \cdot \left\lfloor \frac{d_F - \min\{\bar{\bar{\tau}}_F, N - \bar{\bar{\tau}}_F\}}{\min\{\bar{\tau}_F, N - \bar{\tau}_F\}} \right\rfloor - \bar{v}_F \bmod \Delta_F \cdot \left( \left\lfloor \frac{d_F}{\Delta_T} \right\rfloor + 1 \right) \ge \bar{\bar{v}}_F - \bar{v}_F \right\};$$

and

an expression of the inverse Doppler constraint coordinates $\left\langle \bar{\bar{\tau}}_F, \bar{\bar{v}}_F \right\rangle$ is as follows:

$$\begin{cases} \bar{\bar{v}}_F = \min_{\tau \in \{1,2,\ldots,\Delta_T-1\}} - \mathrm{sgn}(\bar{\tau}_F - N/2)\, u\tau \bmod N \\ \bar{\bar{\tau}}_F = - u^{-1} \bar{\bar{v}}_F \bmod N \end{cases} .$$

In a possible implementation, when $\bar{l}_{\mathrm{T}} \cdot \lfloor \bar{\tau}_{\mathrm{T}}/\Delta_{\mathrm{T}} \rfloor + \bar{k}_{\mathrm{T}} \geq \bar{k}_{\mathrm{F}} \cdot \lfloor \bar{v}_{\mathrm{F}}/\Delta_{\mathrm{F}} \rfloor + \bar{l}_{\mathrm{F}}$, the cyclic shift index is the first group of indexes; or

when $\bar{l}_{\mathrm{T}} \cdot \lfloor \bar{\tau}_{\mathrm{T}}/\Delta_{\mathrm{T}} \rfloor + \bar{k}_{\mathrm{T}} < \bar{k}_{\mathrm{F}} \cdot \lfloor \bar{v}_{\mathrm{F}}/\Delta_{\mathrm{F}} \rfloor + \bar{l}_{\mathrm{F}}$, the cyclic shift index is the second group of indexes.

In a possible implementation, an expression of a discrete-time signal of the cyclic shift sequence is:

$$s_{u,k,l}(n) = e^{-j\pi u(n+C_{k,l})(n+C_{k,l}+1)/N}, n = 0, 1, \dots, N-1$$

where $s_{u,k,l}(n)$ represents the cyclic shift sequence, $N$ represents the sequence length, the sequence length is a prime number, $u$ represents the root index, $C_{k,l}$ represents the cyclic shift index, $C_{k,l} = (\tau_{k,l} + u^{-1}v_{k,l})$ mod $N$, $\tau_{k,l}$ represents the delay domain index, $v_{k,l}$ represents the Doppler domain index, $k$ represents the first parameter, and $l$ represents the second parameter.

According to a sixth aspect, an embodiment of this application provides a communication apparatus. The communication apparatus includes a processor. The processor is configured to cause the communication apparatus to implement the method according to any implementation of the first aspect or the method according to any implementation of the second aspect by executing instructions stored in a memory or running a logic circuit.

In a possible implementation, the communication apparatus further includes a communication interface. The communication interface is configured to receive and/or send data, and/or the communication interface is configured to provide input and/or output for the processor.

In a possible implementation, the communication apparatus further includes the memory. The memory is configured to store at least one of the instructions, a configuration file of the logic circuit, and data. Optionally, the processor and the memory may be further integrated into one device, that is, the processor and the memory may be further integrated together.

In the foregoing embodiment, the processor (or referred to as a general-purpose processor) that performs the method by invoking computer instructions is used as an example for description. During specific implementation, the processor may alternatively be a dedicated processor. In this case, computer instructions are already pre-loaded on the processor. Optionally, the processor may alternatively include both a dedicated processor and a general-purpose processor.

According to a seventh aspect, an embodiment of this application provides a computer-readable storage medium. The computer-readable storage medium stores instructions. When the instructions are run on at least one processor, the method according to any implementation of the first aspect or the method according to any implementation of the second aspect is implemented.

According to an eighth aspect, this application provides a computer program product. The computer program product includes computer instructions. When the instructions are run on at least one processor, the method according to any implementation of the first aspect or the method according to any implementation of the second aspect is implemented.

Optionally, the computer program product may be a software installation package or an image package. When the foregoing method needs to be used, the computer program product may be downloaded, and the computer program product is executed on a computing device.

According to a ninth aspect, this application provides a chip system. The chip system includes at least one processor, a memory, and an interface circuit. The memory, the interface circuit, and the at least one processor are interconnected through a line. The at least one memory stores a computer program. When the computer program is executed by the processor, the method according to any implementation of the first aspect or the method according to any implementation of the second aspect is implemented.

According to a tenth aspect, this application provides a communication system. The communication system includes the communication apparatus according to the fourth aspect and the communication apparatus according to the fifth aspect.

For beneficial effect of the technical solutions provided in the fourth aspect to the tenth aspect of this application, refer to beneficial effect of the technical solution in the first aspect. Details are not described herein again.

BRIEF DESCRIPTION OF DRAWINGS

FIG. 1 is a diagram of a structure of a communication system 100 according to an embodiment of this application;
FIG. 2 is a diagram of time-frequency resources of a Zadoff-Chu sequence according to an embodiment of this application;

FIG. 3A is a diagram of two cases of a restricted set for resisting a frequency offset of one subcarrier according to an embodiment of this application;

FIG. 3B is a diagram of six cases of a restricted set for resisting a frequency offset of two subcarriers according to an embodiment of this application;

FIG. 4A is a diagram of an ambiguity function of a Zadoff-Chu sequence when there is no need to resist a Doppler shift according to an embodiment of this application;

FIG. 4B is a diagram of an ambiguity function of a Zadoff-Chu sequence in a case of resisting a frequency offset of one subcarrier according to an embodiment of this application;

FIG. 4C is a diagram of an ambiguity function of a Zadoff-Chu sequence in a case of resisting a frequency offset of two subcarriers according to an embodiment of this application;

FIG. 5A is a schematic flowchart of a communication method according to an embodiment of this application;

FIG. 5B is a diagram of a condition in which a root sequence has at least one cyclic shift sequence satisfying a zero ambiguity zone according to an embodiment of this application;

FIG. 6A is a diagram of determining a first quantity of cyclic shifts based on delay constraint coordinates according to an embodiment of this application;

FIG. 6B is a diagram of determining a quantity of complete cyclic shifts in Doppler domain and a quantity of residual cyclic shifts in delay domain according to an embodiment of this application;

FIG. 6C is a diagram of determining a first sequence capacity in ascending order of delays according to an embodiment of this application;

FIG. 7A is a diagram of determining a second quantity of cyclic shifts based on Doppler constraint coordinates according to an embodiment of this application;

FIG. 7B is a diagram of determining a quantity of complete cyclic shifts in delay domain and a quantity of residual cyclic shifts in Doppler domain according to an embodiment of this application;

FIG. 7C is a diagram of determining a second sequence capacity in ascending order of Doppler according to an embodiment of this application;

FIG. 8A is a diagram of determining cyclic shift sequences in ascending order of delays according to an embodiment of this application;

FIG. 8B is a diagram of determining cyclic shift sequences in ascending order of Doppler according to an embodiment of this application;

FIG. 8C is a diagram of simulation of Implementation 1 according to an embodiment of this application;

FIG. 9A is another diagram of determining cyclic shift sequences in ascending order of delays according to an embodiment of this application;

FIG. 9B is another diagram of determining cyclic shift sequences in ascending order of Doppler according to an embodiment of this application;

FIG. 9C is a diagram of simulation of Implementation 2 according to an embodiment of this application;

FIG. 10A is still another diagram of determining cyclic shift sequences in ascending order of delays according to an embodiment of this application;

FIG. 10B is still another diagram of determining cyclic shift sequences in ascending order of Doppler according to an embodiment of this application;

FIG. 10C is a diagram of simulation of Implementation 3 according to an embodiment of this application;

FIG. 11A is still another diagram of determining cyclic shift sequences in ascending order of delays according to an embodiment of this application;

FIG. 11B is still another diagram of determining cyclic shift sequences in ascending order of Doppler according to an embodiment of this application;

FIG. 11C(a) and FIG. 11C(b) are a diagram of simulation of Implementation 4 according to an embodiment of this application;

FIG. 12A is still another diagram of determining cyclic shift sequences in ascending order of delays according to an embodiment of this application;

FIG. 12B is still another diagram of determining cyclic shift sequences in ascending order of Doppler according to an embodiment of this application;

FIG. 12C is a diagram of simulation of Implementation 5 according to an embodiment of this application;

FIG. 13 is a diagram of a structure of a communication apparatus 130 according to an embodiment of this application; and

FIG. 14 is a diagram of a structure of a communication apparatus 140 according to an embodiment of this application.

DESCRIPTION OF EMBODIMENTS

The following describes embodiments of this application with reference to the accompanying drawings in embodiments of this application.

The technical solutions provided in this application may be applied to various communication systems, for example, a 5th generation (5th Generation, 5G) mobile communication system like a long term evolution (long term evolution, LTE) system, an LTE frequency division duplex (frequency division duplex, FDD) system, an LTE time division duplex (time division duplex, TDD) system, and a new radio (new radio, NR) system, and a system evolved after 5G, for example, a 6th generation (6th Generation, 6G) mobile communication system or an integrated sensing and communication system.

The technical solutions provided in this application may be further applied to machine type communication (machine type communication, MTC), a long term evolution technology for machine-to-machine communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, X can stand for anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. A V2X communication system is a sidelink (sidelink, SL) transmission technology based on D2D communication.

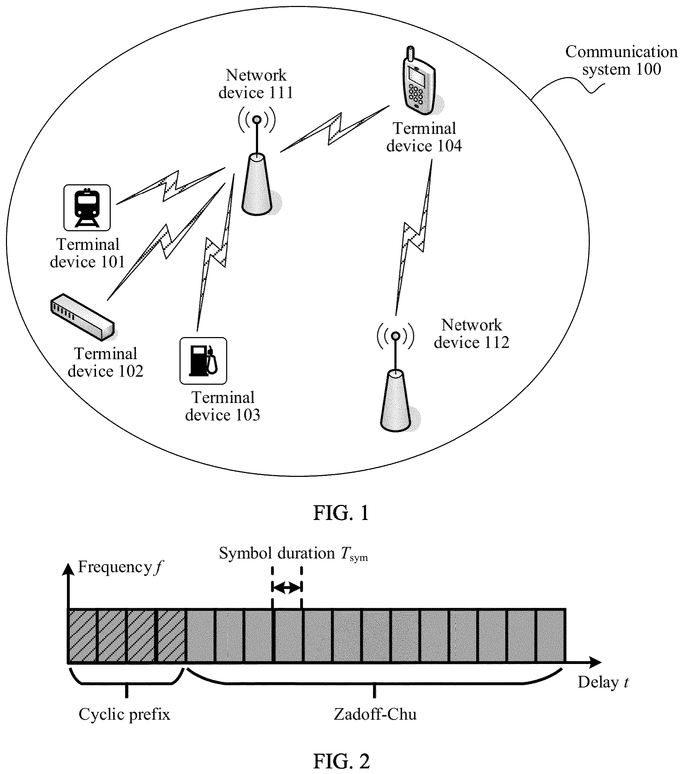

To better understand a communication method, an apparatus, and a system provided in embodiments of this application, the following first describes the communication system used in embodiments of this application. FIG. 1 is a diagram of a structure of a communication system 100 according to an embodiment of this application. The communication system 100 includes a network device 111, a network device 112, a terminal device 101, a terminal device 102, a terminal device 103, and a terminal device 104. It should be understood that the communication system 100 may include more or fewer network devices and more or fewer terminal devices. The network device and the terminal device may be hardware, or software obtained through function division, or a combination thereof. The network device 111 and the network device 112 may communicate with the terminal device 101 to the terminal device 104 via another device or network element. In the system, the network device 111 and the network device 112 may perform data transmission with the plurality of terminal devices: the terminal device 101 to the terminal device 104. For example, the network device 111 sends downlink data to the terminal device 101 to the terminal device 104, and the terminal device 101 to the terminal device 104 may also send uplink data to the network device 111. In addition, the terminal device 101, the terminal device 102, the terminal device 103, and the terminal device 104 may also form a communication system. In the system, the network device 111 may send downlink data to the terminal device 101 and the terminal device 104, and the terminal device 104 sends the downlink data to the terminal device 102 or the terminal device 103. The terminal device 101 and the terminal device 104 may also send uplink data to the network device 111. The method in embodiments of this application may be applied to the communication system 100 shown in FIG. 1.

(1) The terminal device includes a device that provides voice and/or data connectivity for a user. For example, the terminal device may include a processing device connected to a wireless modem. The terminal device may communicate with a core network via a radio access network (radio access network, RAN), and exchange a voice or data with the RAN, or exchange a voice and data with the RAN. The terminal device may include a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a palmtop computer, a wireless modem (modem), a handheld device (handheld), a laptop computer (laptop computer), a cordless telephone (cordless phone) or a wireless local loop (wireless local loop, WLL) station, a machine type communication (machine type communication, MTC) terminal, a wearable device (for example, a smart watch, a smart band, and a pedometer), a vehicle-mounted device (for example, a car, a bicycle, an electric vehicle, an airplane, a ship, a train, and a high-speed railway), a vehicle to everything (vehicle to everything, V2X) terminal device, a machine-to-machine/machine type communication (machine-to-machine/machine type communication, M2M/MTC) terminal device, an internet of things (internet of things, IoT) terminal device, a light terminal device (light UE), reduced capability user equipment (reduced capability UE, REDCAP UE), a point of sale (point of sale, POS) machine, a customer-premises equipment (customer-premises equipment, CPE), a mobile internet device (mobile internet device, MID), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, a smart robot, a hot air balloon, an uncrewed aerial vehicle, or an airplane), or another device that can access a network.

In embodiments of this application, the terminal device may further include a relay (relay). Alternatively, it is understood as that any device that can perform data communication with a network device (for example, a base station) may be considered as a terminal device.

In embodiments of this application, an apparatus configured to implement a function of the terminal device may be a terminal device, or may be an apparatus that can support the terminal device in implementing the function, for example, a chip system. The apparatus may be mounted in the terminal device. In embodiments of this application, the chip system may include a chip, or may include the chip and another discrete component. In the technical solutions provided in embodiments of this application, an example in which the apparatus configured to implement the function of the terminal is a terminal device is used for describing the technical solutions provided in embodiments of this application.

(2) The network device is a node in a radio access network (radio access network, RAN), and may also be referred to as an access network device, or may also be referred to as a RAN node (or device). The network device 101 is configured to help the terminal implement wireless access. A plurality of network devices in the communication system 100 may be nodes of a same type, or may be nodes of different types.

In a possible scenario, the network device may be a base station (base station), an evolved NodeB (evolved NodeB, eNodeB), an access point (access point, AP), a transmission reception point (transmission reception point, TRP), a next generation NodeB (next generation NodeB, gNB), a base station in a 6G mobile communication system, a base station or a satellite in a future mobile communication system, an access node, an integrated access and backhaul (integrated access and backhaul, IAB) node, a transmission point (transmission point, TP), or a mobile switching center in a Wi-Fi system, and a device that functions as a base station in D2D, V2X, M2M, or uncrewed aerial vehicle communication, or the like. The network device may be a macro base station, a micro base station, an indoor base station, a relay node, a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal in implementing radio access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of the software module and the hardware module.

The core network device may further include a core network device, which is a device in a core network (core network, CN) that provides service support for the terminal device. The core network device may be an access and mobility management function (access and mobility management function, AMF) network element, a session management function (session management function, SMF) network element, a user plane function (user plane function, UPF) network element, or the like, which are not listed one by one herein. The AMF network element may be responsible for access management and mobility management of the terminal device. The SMF network element may be responsible for session management, for example, session establishment of a user. The UPF network element may be a user plane functional entity, and is mainly responsible for connecting to an external network. It should be noted that the network element in this application may also be referred to as an entity or a functional entity. For example, the AMF network element may also be referred to as an AMF entity or an AMF functional entity. For another example, the SMF network element may also be referred to as an SMF entity, an SMF functional entity, or the like.

In embodiments of this application, an apparatus configured to implement a function of the network device may be a network device, or may be an apparatus that can support the network device in implementing the function, for example, a chip system. The apparatus may be mounted in or coupled to the network device.

For ease of understanding, some concepts related to embodiments of this application are described below by using examples. Details are as follows.

1. A Zadoff-Chu sequence, referred to as a ZC sequence for short, is a sequence generated through a phase change. The ZC sequence varies depending on whether a sequence length $N_{ZC}$ is an odd number or an even number. An expression of the ZC sequence may be in the following form:

$$s_u(n) = \begin{cases} e^{-j\pi u \cdot n(n+1)/N_{ZC}}, & N_{ZC} \text{ is an odd number} \\ e^{-j\pi u \cdot n^2/N_{ZC}}, & N_{ZC} \text{ is an even number} \end{cases} \quad n = 0, 1, ..., N_{ZC} - 1$$

where $N_{ZC}$ is the length of the Zadoff-Chu sequence and is an integer greater than 1, a root index (root index) $u$ = 1, 2, ..., $N_{ZC}$- 1, and the root index $u$ and the sequence length $N_{ZC}$ are mutually prime.

The Zadoff-Chu sequence has the following properties:

(1) The sequence is a periodic sequence, and a periodicity of the sequence is equal to the sequence length $N_{ZC}$, that is, $s_u(n \pm N_{ZC}) = s_u(n)$.
(2) The sequence has a constant amplitude value, and the amplitude value is 1, that is, $|s_u(n)| = 1$.
(3) A sequence obtained through discrete Fourier transform (discrete Fourier transform, DFT) is still a constant-amplitude sequence, and the sequence may be obtained by performing a weighted shift on an original Zadoff-Chu sequence, to omit a DFT operation.
(4) The ZC sequence has an ideal correlation property. A correlation value between two Zadoff-Chu sequences obtained by performing different cyclic shifts on a Zadoff-Chu sequence with a same root index is 0, or the two Zadoff-Chu sequences are orthogonal to each other. For any Zadoff-Chu sequences with different root indexes (for example, $u_1$ and $u_2$), when $|u_1 - u_2|$ and the sequence length $N_{ZC}$ are mutually prime, an amplitude of a correlation value between the sequences is a fixed value.

The Zadoff-Chu sequence is widely used in a communication system because of the foregoing specific properties. Examples are as follows:

(1) A signal of the Zadoff-Chu sequence has a low peak-to-average ratio due to the constant amplitude property of the Zadoff-Chu sequence, so that efficiency of a device power amplifier can be improved.
(2) The ideal correlation property of the Zadoff-Chu sequence is used for uplink user access, synchronization, timing (or delay) estimation, ranging, velocity measurement, and signal sensing.
(3) The correlation property of the Zadoff-Chu sequence is used as a signature (signature) sequence or a preamble (preamble) for user identification, cell identification, or beam identification.

2. Quadratic exponential sequence

The quadratic exponential sequence is a sequence in which an order of a highest-order item in exponential factors is 2, and may not be subject to the constraint that the root index in the Zadoff-Chu sequence and the sequence length are mutually prime. In the quadratic exponential sequence, a quadratic term coefficient (corresponding to the root index in the Zadoff-Chu sequence) and the sequence length may be or not be mutually prime. Therefore, some quadratic exponential sequences also have the properties of the Zadoff-Chu sequence.

3. Doppler shift

When a vibration source like sound, light, or a radio wave moves relative to an observer at a relative velocity, a frequency of vibration received by the observer is different from a frequency provided by the vibration source. This phenomenon is referred to as a Doppler effect. A frequency change caused by the Doppler effect is referred to as a Doppler shift, which is proportional to the relative velocity and proportional to the vibration frequency.

4. Zero ambiguity zone/Low ambiguity zone

For a transmission signal whose duration is $T$ and bandwidth is $B$, an ambiguity function of the transmission signal is usually defined in delay (delay)-Doppler (Doppler) domain with a delay range of 0 to $T$ and a Doppler shift range of $-B/2$ to $B/2$. Therefore, the ambiguity function essentially refers to an output response of a matched transmit signal filter through which a signal (on which a delay and a Doppler shift are performed) received by a receive end passes. If a signal having an extremely low ambiguity function value exists in a zone of the delay (delay)-Doppler (Doppler) domain, the zone is referred to as a low ambiguity zone (low ambiguity zone, LAZ). If a signal having a zero ambiguity function value exists in another zone of the delay (delay)-Doppler (Doppler) domain, the zone is referred to as a zero ambiguity zone (zero ambiguity zone, ZAZ).

5. Maximum delay $\Delta_T$ and maximum Doppler shift $\Delta_F$

Within a zone (for example, a first zone), ranges between different sending devices and a receiving device may be different, and delays of signals arriving at the receiving device are also different. Therefore, a maximum value of round-trip transmission delays that may be corresponding to the sending devices within the first zone needs to be considered for a delay domain cyclic shift. Therefore, the maximum delay $\Delta_T$ may be determined based on a radius of the first zone.

It may be further understood that movement of the sending device relative to the receiving device causes a Doppler shift, and different moving velocities of the sending devices also cause different Doppler shifts. When the moving velocity of the sending device increases, the Doppler shift also increases accordingly. Therefore, a maximum Doppler shift that may be corresponding to the sending devices within the first zone needs to be considered for a Doppler domain cyclic shift. Therefore, the maximum Doppler shift $\Delta_F$ is determined based on a possible maximum moving velocity of the sending devices within the first zone.

The first zone may be a cell, a sensing area, or the like.

For example, in a communication system, a zone covered by an access network device or a part of the zone covered by the access network device is referred to as a cell, or is referred to as a cellular cell. Because ranges between different terminals and the access network device are different, delays of signals arriving at the access network device are also different. Therefore, a maximum value of round-trip transmission delays that may be corresponding to the terminals within the cell needs to be considered for a delay domain cyclic shift. Therefore, the maximum delay $\Delta_T$ may be determined based on a radius of the cell.

It may be further understood that movement of the terminal causes a Doppler shift, and different moving velocities of the terminals also cause different Doppler shifts. When a moving velocity of a user increases, the Doppler shift also increases accordingly. Therefore, a maximum Doppler shift that may be corresponding to the terminals within the cell needs to be considered for a Doppler domain cyclic shift. Therefore, the maximum Doppler shift $\Delta_F$ is determined based on a possible maximum moving velocity of the terminals within the cell.

It can be learned from the foregoing analysis that Zadoff-Chu sequences with a same root index but different cyclic shifts are orthogonal to each other to form a zero correlation zone. Zadoff-Chu sequences that are orthogonal to each other may be obtained by performing different cyclic shifts on a Zadoff-Chu sequence with a same root index, and may be used to implement uplink access, delay estimation, and signal sensing, to obtain, through measurement, a range between a transmit end and a receive end. An expression of a discrete-time signal of the Zadoff-Chu sequence $s_{u,k}(n)$ using the correlation property may be expressed in the following form:

$$s_{u,k}(n) = e^{-j\pi u(n+k\Delta_T)(n+k\Delta_T+1)/N_{ZC}}, n = 0, 1, ..., N_{ZC}-1 \quad (1.1)$$

(1.1)

In the formula (1.1), the sequence length $N_{ZC}$ is a prime number, the root index $u$ = 1, 2, ..., $N_{ZC}$- 1, the zero correlation zone represents $\Delta_T$, $\Delta_T$ represents a maximum delay, and a cyclic shift index $k = 0, 1, ..., \lfloor N_{ZC}/\Delta_T \rfloor - 1$. A symbol "$\lfloor \rfloor$" represents rounding down.

FIG. 2 is a diagram of time-frequency resources of a Zadoff-Chu sequence according to an embodiment of this application. It can be learned from FIG. 2 that the Zadoff-Chu sequence includes a cyclic prefix (cyclic prefix, CP) and the sequence in terms of time. The cyclic prefix is a prefix of one symbol, and a plurality of symbols have a plurality of cyclic prefixes. Due to existence of multipath, if a guard period is not added in a form of a cyclic prefix, a tail of a previous symbol falls into a sampling interval of the current symbol, causing inter-symbol interference (Inter-Symbol Interference, ISI). To avoid inter-channel interference, a cyclic prefix is added at a transmit end, so that a receive end can obtain an ideal impulse function by using periodic correlation.

A Zadoff-Chu sequence set may be obtained by performing different cyclic shifts with a same root index on the Zadoff-Chu sequence shown in the formula (1.1). The Zadoff-Chu sequence set includes $\lfloor N_{ZC}/\Delta_T \rfloor$ Zadoff-Chu sequences: $s_{u,0}(n), s_{u,1}(n), ..., s_{u,\lfloor N_{ZC}/\Delta_T \rfloor - 1}(n)$. A zero correlation zone may be formed between sequences in the Zadoff-Chu sequence set, so that a given physical random access channel (physical random access channel, PRACH) resource is multiplexed.

To improve a capability of the Zadoff-Chu sequence in resisting a Doppler shift, a cyclic shift of a Zadoff-Chu root sequence is restricted in an LTE/NR protocol, and a cyclic shift is selected from a restricted set of the Zadoff-Chu root sequence to resist a frequency offset.

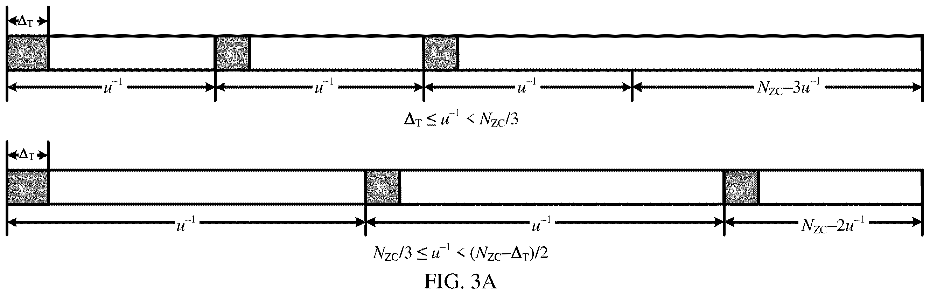

A restricted set (Restricted Sets Type A) for resisting a frequency offset of one subcarrier is proposed in one solution. FIG. 3A is a diagram of two cases of a restricted set for resisting a frequency offset of one subcarrier. It can be learned from FIG. 3A that, in a case of resisting the frequency offset of one subcarrier, a Zadoff-Chu root sequence $s_0$ may have a frequency offset of one subcarrier, to obtain $s_{-1}$ and $s_{+1}$. Zero correlation zones of the sequences $s_0$, $s_{-1}$, and $s_{+1}$ are $\Delta_T$. A "bottleneck" for restricting a cyclic shift is determined based on a relationship among $Nzc$, $u$, and $\Delta_T$, to obtain two types of cyclic shift sequences.

For a first type of cyclic shift sequence, the relationship among $Nzc$, $u$, and $\Delta_T$ is $\Delta_T \leq u^{-1} < N_{ZC}/3$. It can be learned from FIG. 3A that both a spacing $u^{-1}$ between $s_{-1}$ and $s_0$ and a spacing $u^{-1}$ between $s_0$ and $s_{+1}$ are less than a spacing $N_{ZC}-2u^{-1}$ between $s_{+1}$ and $s_{-1}$. When a cyclic shift is performed on the root sequence $s_0$, the cyclic shift is also correspondingly performed on $s_{-1}$ and $s_{+1}$. A length of each of cyclic shift sequences obtained by using $s_0$ and $s_{-1}$ cannot exceed $u^{-1}$. When the length exceeds $u^{-1}$, the cyclic shift sequence obtained by using $s_0$ overlaps $s_{+1}$, and the cyclic shift sequence obtained by using $s_{-1}$ overlaps $s_0$. Consequently, correlation of the Zadoff-Chu sequence is damaged. However, after the cyclic shift is performed on $s_{+1}$, space whose length is $N_{ZC}-3u^{-1}$ is still left between $s_{-1}$ and the cyclic shift sequence obtained by using $s_{+1}$. Therefore, the "bottleneck" for restricting the cyclic shift is the spacing $u^{-1}$ between $s_{-1}$ and $s_0$ and the spacing $u^{-1}$ between $s_0$ and $s_{+1}$.

For a second type of cyclic shift sequence, the relationship among $Nzc$, $u$, and $\Delta_T$ is $N_{ZC}/3 \leq u^{-1} < (N_{ZC}-\Delta_T)/2$. It can be learned from FIG. 3A that both a spacing $N_{ZC}-2u^{-1}$ between $s_{+1}$ and $s_{-1}$ is less than a spacing $u^{-1}$ between $s_{-1}$ and $s_0$ and a spacing $u^{-1}$ between $s_0$ and $s_{+1}$. When a cyclic shift is performed on the root sequence $s_0$, the cyclic shift is also correspondingly performed on $s_{-1}$ and $s_{+1}$. A length of a cyclic shift sequence obtained by using $s_{+1}$ cannot exceed $N_{ZC}-2u^{-1}$. When the length exceeds $N_{ZC}-2u^{-1}$, the cyclic shift sequence obtained by using $s_{+1}$ overlaps $s_{-1}$. Consequently, correlation of the Zadoff-Chu sequence is damaged. However, after the cyclic shift is performed on $s_{-1}$ and $s_0$, space whose length is $3u^{-1}-N_{ZC}$ is still left between $s_0$ and the cyclic shift sequence obtained by using $s_{-1}$, and space whose length is $3u^{-1}-N_{ZC}$ is also left between $s_{+1}$ and the cyclic shift sequence obtained by using $s_0$. Therefore, the "bottleneck" for restricting the cyclic shift is the spacing $N_{ZC}-2u^{-1}$ between $s_{+1}$ and $s_{-1}$.

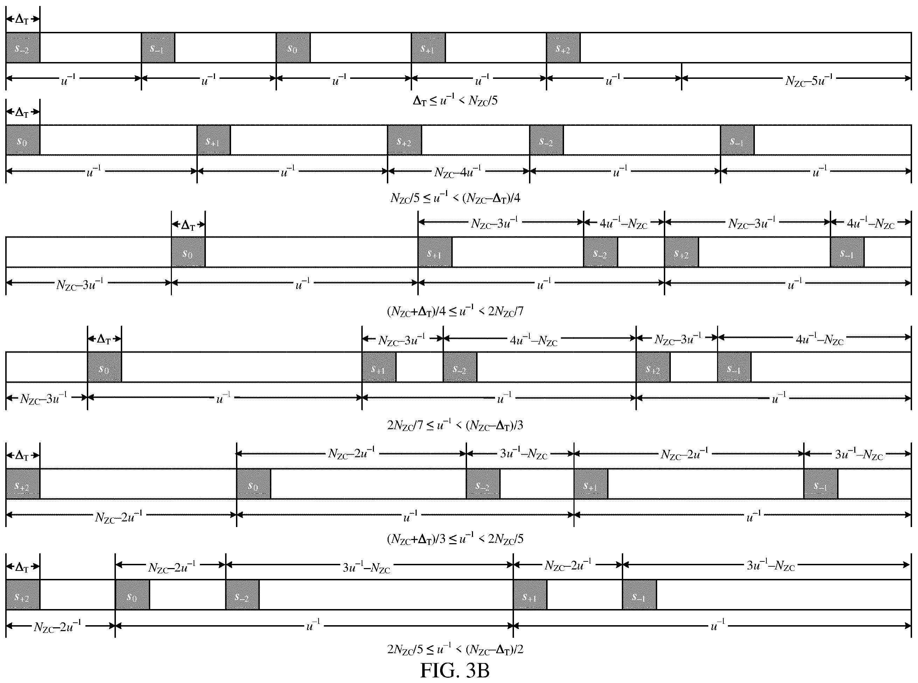

A restricted set (Restricted Sets Type B) for resisting a frequency offset of two subcarriers is proposed in another solution. FIG. 3B is a diagram of six cases of a restricted set for resisting a frequency offset of two subcarriers according to an embodiment of this application. It can be learned from FIG. 3B that, in a case of resisting the frequency offset of two subcarriers, a Zadoff-Chu root sequence $s_0$ may have a frequency offset of two subcarriers, to obtain $s_{-1}$, $s_{+1}$, $s_{-2}$, and $s_{+2}$. Sequence widths of $s_0$, $s_{-1}$, $s_{+1}$, $s_{-2}$, and $s_{+2}$ are $\Delta_T$. A "bottleneck" for restricting a cyclic shift is determined based on a relationship among $Nzc$, $u$, and $\Delta_T$, to obtain six types of cyclic shift sequences.

For a first type of cyclic shift sequence, the relationship among $Nzc$, $u$, and $\Delta_T$ is $\Delta_T \leq u^{-1} < N_{ZC}/5$. It can be learned from FIG. 3B that a spacing $u^{-1}$ between $s_{-2}$ and $s_{-1}$, a spacing $u^{-1}$ between $s_{-1}$ and $s_0$, a spacing $u^{-1}$ between $s_0$ and $s_{+1}$, and a spacing $u^{-1}$ between $s_{+1}$ and $s_{+2}$ are all less than a spacing $N_{ZC}-4u^{-1}$ between $s_{+2}$ and $s_{-2}$. When a cyclic shift is performed on the root sequence $s_0$, the cyclic shift is also correspondingly performed on $s_{-1}$, $s_{+1}$, $s_{-2}$, and $s_{+2}$. A Length of each of cyclic shift sequences obtained by using $s_0$, $s_{-1}$, $s_{+1}$, and $s_{-2}$ cannot exceed $u^{-1}$. When the length exceeds $u^{-1}$, the cyclic shift sequence obtained by using $s_0$ overlaps $s_{+1}$, the cyclic shift sequence obtained by using $s_{-1}$ overlaps $s_0$, the cyclic shift sequence obtained by using $s_{-2}$ overlaps $s_{-1}$, and the cyclic shift sequence obtained by using $s_{+1}$ overlaps $s_{+2}$. Consequently, correlation of the Zadoff-Chu sequence is damaged. However, after the cyclic shift is performed on $s_{+2}$, space whose length is $N_{ZC}-5u^{-1}$ is still left between $s_{-2}$ and the cyclic shift sequence obtained by using $s_{+2}$. Therefore, the "bottleneck" for restricting the cyclic shift is the spacing $u^{-1}$ between $s_{-1}$ and $s_0$, the spacing $u^{-1}$ between $s_0$ and $s_{+1}$, the spacing $u^{-1}$ between $s_{-2}$ and $s_{-1}$, and the spacing $u^{-1}$ between $s_{+1}$ and $s_{+2}$.

For a second type of cyclic shift sequence, the relationship among $Nzc$, $u$, and $\Delta_T$ is $N_{ZC}/5 \leq u^{-1} < (N_{ZC}-\Delta_T)/4$. It can be learned from FIG. 3B that a spacing $u^{-1}$ between $s_{-2}$ and $s_{-1}$, a spacing $u^{-1}$ between $s_{-1}$ and $s_0$, a spacing $u^{-1}$ between $s_0$ and $s_{+1}$, and a spacing $u^{-1}$ between $s_{+1}$ and $s_{+2}$ are all greater than a spacing $N_{ZC}-4u^{-1}$ between $s_{+2}$ and $s_{-2}$. Therefore, based on the foregoing analysis, similarly, it can be learned that the "bottleneck" for restricting the cyclic shift is a spacing $N_{ZC}-4u^{-1}$ between $s_{+2}$ and $s_{-2}$.

For a third type of cyclic shift sequence, the relationship among $Nzc$, $u$, and $\Delta_T$ is $(N_{ZC}+\Delta_T)/4 \leq u^{-1} < 2N_{ZC}/7$. It can be learned from FIG. 3B that a spacing between $s_{-1}$ and $s_0$ is $u^{-1}$, a spacing between $s_0$ and $s_{+1}$ is $u^{-1}$, a spacing between $s_{+1}$ and $s_{-2}$ is $N_{ZC}-3u^{-1}$, a spacing between $s_{-2}$ and $s_{+2}$ is $4u^{-1}-N_{ZC}$, and a spacing between $s_{+2}$ and $s_{-1}$ is $N_{ZC}-3u^{-1}$. Therefore, based on the foregoing analysis, similarly, it can be learned that the "bottleneck" for restricting the cyclic shift is a spacing $4u^{-1}-N_{ZC}$ between $s_{-2}$ and $s_{+2}$.

For a fourth type of cyclic shift sequence, the relationship among $N_{ZC}$, $u$, and $\Delta_T$ is $2N_{ZC}/7 \leq u^{-1} < (N_{ZC}-\Delta_T)/3$. It can be learned from FIG. 3B that a spacing between $s_{-1}$ and $s_0$ is $u^{-1}$, a spacing between $s_0$ and $s_{+1}$ is $n^{-1}$, a spacing between $s_{+1}$ and $s_{-2}$ is $N_{ZC}-3u^{-1}$, a spacing between $s_{-2}$ and $s_{+2}$ is $4u^{-1}-N_{ZC}$, and a spacing between $s_{+2}$ and $s_{-1}$ is $N_{ZC}-3u^{-1}$. Therefore, based on the foregoing analysis, similarly, it can be learned that the "bottleneck" for restricting the cyclic shift is a

spacing $N_{ZC}$- $3u^{-1}$ between $s_{+1}$ and $s_{-2}$ and a spacing $N_{ZC}$- $3u^{-1}$ between $s_{+2}$ and $s_{-1}$.

For a fifth type of cyclic shift sequence, the relationship among $Nzc, u,$ and $\Delta_T$ is $(N_{ZC} + \Delta_T)/3 \leq u^{-1} < 2N_{ZC}/5$. It can be learned from FIG. 3B that a spacing between $s_{-1}$ and $s_{+2}$ is $3u^{-1}$- $N_{ZC}$, a spacing between $s_{+2}$ and $s_0$ is $N_{ZC}$- $2u^{-1}$, a spacing between $s_0$ and $s_{-2}$ is $N_{ZC}$- $2u^{-1}$, a spacing between $s_{-2}$ and $s_{+1}$ is $3u^{-1}$- $N_{ZC}$, and a spacing between $s_{+1}$ and $s_{-1}$ is $N_{ZC}$- $2u^{-1}$. Therefore, based on the foregoing analysis, similarly, it can be learned that the "bottleneck" for restricting the cyclic shift is a spacing $3u^{-1}$- $N_{ZC}$ between $s_{-1}$ and $s_{+2}$ and a spacing $3u^{-1}$- $N_{ZC}$ between $s_{-2}$ and $s_{+1}$.

For a sixth type of cyclic shift sequence, the relationship among $Nzc, u,$ and $\Delta_T$ is $2N_{ZC}/5 \leq u^{-1} < (N_{ZC}$- $\Delta_T)/2$. It can be learned from FIG. 3B that a spacing between $s_{-1}$ and $s_{+2}$ is $3u^{-1}$- $N_{ZC}$, a spacing between $s_{+2}$ and $s_0$ is $N_{ZC}$- $2u^{-1}$, a spacing between $s_0$ and $s_{-2}$ is $N_{ZC}$- $2u^{-1}$, a spacing between $s_{-2}$ and $s_{+1}$ is $3u^{-1}$- $N_{ZC}$, and a spacing between $s_{+1}$ and $s_{-1}$ is $N_{ZC}$- $2u^{-1}$. Therefore, based on the foregoing analysis, similarly, it can be learned that the "bottleneck" for restricting the cyclic shift is a spacing $N_{ZC}$- $2u^{-1}$ between $s_{+2}$ and $s_0$, a spacing $N_{ZC}$- $2u^{-1}$ between $s_0$ and $s_{-2}$, and a spacing $N_{ZC}$- $2u^{-1}$ between $s_{+1}$ and $s_{-1}$.

It can be learned from FIG. 3A and FIG. 3B that, in the existing NR/LTE protocol, a restriction for restricting a cyclic shift is determined based on a sequence length, a root index, and a preset maximum delay. This may be considered that a cyclic shift sequence that satisfies a requirement of a zero ambiguity zone is searched for in delay domain, but a Doppler domain dimension is not considered. Therefore, for a frequency offset of one or two subcarriers, there is still room for increasing a sequence capacity of cyclic shift sequences determined according to the methods shown in FIG. 3A and FIG. 3B. Therefore, a method for increasing an available sequence capacity is urgently needed. In addition, expressions in the methods shown in FIG. 3A and FIG. 3B respectively correspond to the cases of resisting the frequency offset of one subcarrier and resisting the frequency offset of two subcarriers. Therefore, it is difficult to apply the methods to a frequency offset of any subcarrier.

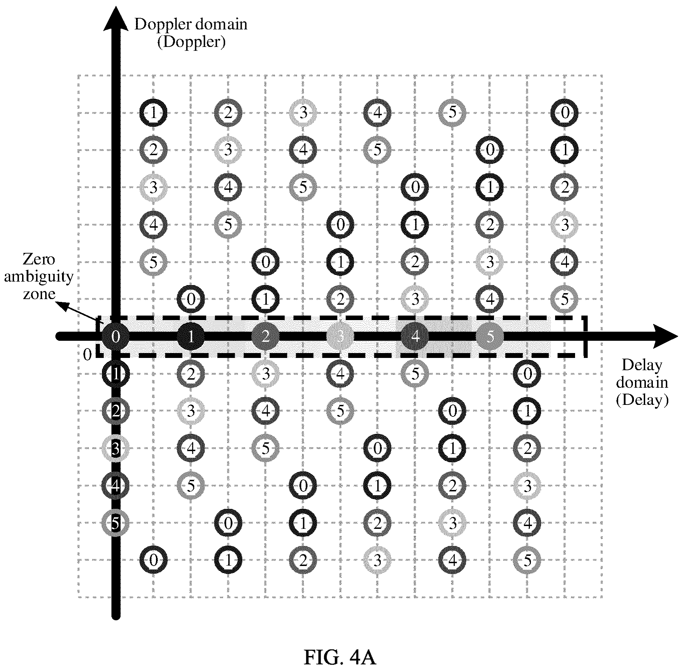

FIG. 4A to FIG. 4C are diagrams of ambiguity functions of a Zadoff-Chu sequence with different Doppler shifts according to an embodiment of this application. For the Zadoff-Chu sequence in FIG. 4A to FIG. 4C, a sequence length $N_{ZC}$ = 13, and a root index u = 6. In delay domain-Doppler domain coordinate systems shown in FIG. 4A to FIG. 4C, circles represent peaks of the ambiguity functions of the Zadoff-Chu sequence. The ambiguity function of the Zadoff-Chu sequence has only a single peak within a specific delay and Doppler interval, to form a zero ambiguity zone.

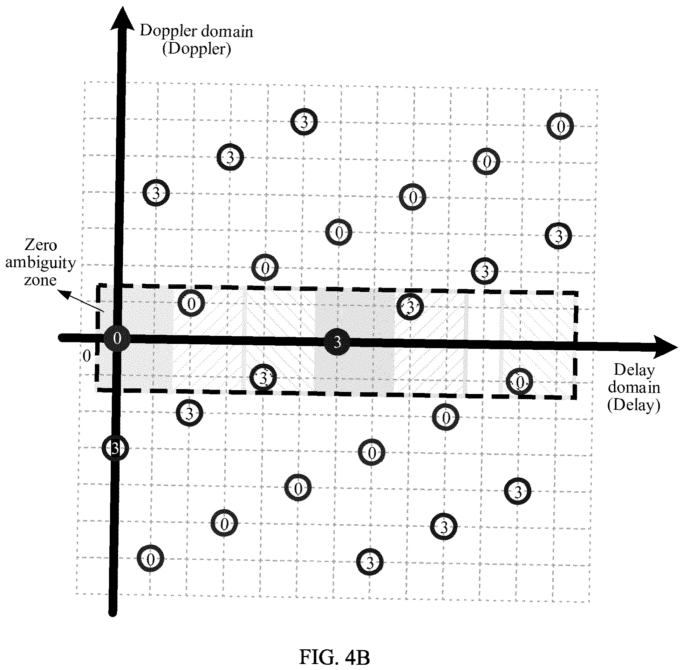

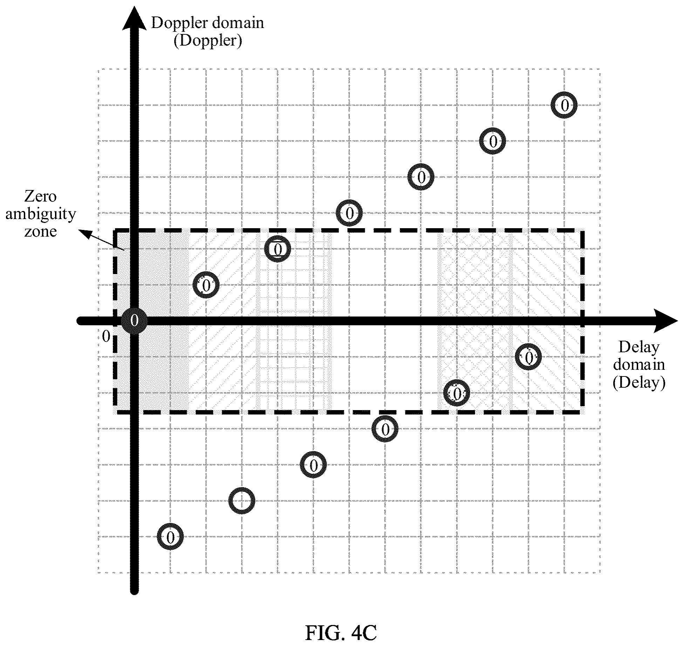

FIG. 4A is a diagram of an ambiguity function of a Zadoff-Chu sequence when there is no need to resist a Doppler shift according to an embodiment of this application. FIG. 4B is a diagram of an ambiguity function of a Zadoff-Chu sequence in a case of resisting a frequency offset of one subcarrier according to an embodiment of this application. FIG. 4C is a diagram of an ambiguity function of a Zadoff-Chu sequence in a case of resisting a frequency offset of two subcarriers according to an embodiment of this application.

As shown in FIG. 4A, assuming that there is no need to resist a zero ambiguity zone $\Delta_T \times \Delta_F$ = 2 × 1 corresponding to a frequency offset, $\Delta_T$ represents a preset maximum delay, and $\Delta_F$ represents a preset maximum Doppler shift. After cyclic shifts are performed on the Zadoff-Chu root sequence in delay domain according to the formula (1.1), cyclic shift sequences $s_{6,k}(n) = e^{-j\pi 6(n+2k)(n+2k+1)/13}$, $k = 0, 1, 2, 3, 4, 5$ in the zero ambiguity zone may be obtained. In FIG. 4A, a circle with a sequence number 0 represents a peak of an ambiguity function of a Zadoff-Chu root sequence $s_{6,0}(n)$, a circle with a sequence number 1 represents a peak of an ambiguity function of a cyclic shift sequence $s_{6,1}(n)$, a circle with a sequence number 2 represents a peak of an ambiguity function of a cyclic shift sequence $s_{6,2}(n)$, a circle with a sequence number 3 represents a peak of an ambiguity function of a cyclic shift sequence $s_{6,3}(n)$, a circle with a sequence number 4 represents a peak of an ambiguity function of a cyclic shift sequence $s_{6,4}(n)$, and a circle with a sequence number 5 represents a peak of an ambiguity function of a cyclic shift sequence $s_{6,5}(n)$. It can be learned from FIG. 4A that zero ambiguity zones of all the cyclic shift sequences do not overlap each other, and only a single peak appears within each zero ambiguity zone. Therefore, when the sequence length $N_{ZC}$ = 13 and the root index $u$ = 6, if there is no need to resist a Doppler shift, six available sequences may be obtained: the cyclic shift sequences corresponding to the circles with the sequence numbers 0 to 5.

As shown in FIG. 4B, assuming that a zero ambiguity zone $\Delta_T \times \Delta_F$ = 2 × 3 corresponding to the frequency offset of one subcarrier is resisted, after cyclic shifts are performed on the Zadoff-Chu root sequence in delay domain according to the formula (1.1), cyclic shift sequences $s_{6,k}(n) = e^{-j\pi 6(n+2)(n+2k+1)/13}$, $k = 0, 1, 2, 3, 4, 5$ and $s_{6,3}(n) = e^{-j\pi 6(n+6)(n+7)/13}$ in the zero ambiguity zone may be obtained. In other words, when the frequency offset of one subcarrier is resisted, two available sequences may be obtained: a cyclic shift sequence corresponding to circles with sequence number 0 and a cyclic shift sequence corresponding to circles with sequence number 1.

As shown in FIG. 4C, assuming that a zero ambiguity zone $\Delta_T \times \Delta_F$ = 2 × 5 corresponding to the frequency offset of two subcarriers is resisted, after cyclic shifts are performed on the Zadoff-Chu root sequence in delay domain according to the formula (1.1), a cyclic shift sequence $s_{6,0}(n) = e^{-j\pi 6n(n+1)/13}$ in the zero ambiguity zone may be obtained. In other words, when the frequency offset of two subcarriers is resisted, one available sequence may be obtained: a cyclic shift sequence corresponding to circles with sequence number 0.

Through comparison of FIG. 4A, FIG. 4B, and FIG. 4C, it can be learned that, to resist a subcarrier frequency offset, the zero ambiguity zone is correspondingly increased. When the zero ambiguity zone is increased, to ensure that only one peak appears within each zero ambiguity zone and the zero ambiguity zones do not overlap each other, a capacity of available sequences is reduced.

It can be learned that in FIG. 3A and FIG. 3B, a cyclic shift sequence that satisfies the requirement of the zero ambiguity zone is determined in a delay domain dimension; and in FIG. 4A and FIG. 4B, a cyclic shift sequence that satisfies the requirement of the zero ambiguity zone is determined in two dimensions: a delay domain and a Doppler domain.

The applicant finds that, for the restricted set of the ZC sequence that is determined according to the existing NR/LTE protocol, only a delay domain dimension is considered, and a Doppler domain dimension is not considered. On the basis of considering two dimensions: the delay domain and the Doppler domain, the restricted set of the ZC sequence may be expanded, thereby increasing the sequence capacity.

The following describes in detail the method in embodiments of this application.

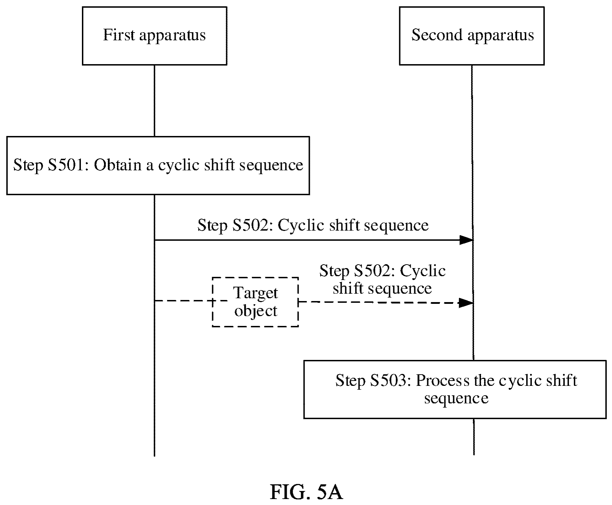

FIG. 5A is a schematic flowchart of a communication method according to an embodiment of this application. Optionally, the method may be applied to the foregoing communication system, for example, the communication system described in the implementation of FIG. 1.

The communication method shown in FIG. 5A may include one or more of step S501 to step S503. It should be understood that, for ease of description, an execution time point, a quantity of execution times, and the like of the foregoing one or more step are not limited in this embodiment of this application.

In the communication method shown in FIG. 5A, a first apparatus and/or a second apparatus may be a terminal device, a communication unit, a component, or a chip in the terminal device, or an apparatus that is used in cooperation with the terminal device. The first apparatus and/or the second apparatus may alternatively be a network device, a communication unit, a component, or a chip in the network device, or an apparatus that is used in cooperation with the network device.

Step S501 to step S503 are specifically as follows.

Step S501: The first apparatus obtains a cyclic shift sequence.

The cyclic shift sequence includes a sequence obtained by performing a cyclic shift on a root sequence based on a cyclic shift index. The cyclic shift index includes a delay domain index and a Doppler domain index.

In a possible implementation, an expression of a discrete-time signal of the root sequence is as follows:

$$s_u(n) = e^{-j\pi un(n+1)/N}, n = 0, 1, ..., N-1 \quad (2.1)$$

In a possible implementation, an expression of a discrete-time signal of the cyclic shift sequence is as follows:

$$s_{u,k,l}(n) = e^{-j\pi u(n+C_{k,l})(n+C_{k,l}+1)/N}, n = 0, 1, ..., N-1 \quad (2.2)$$

In the formula (2.1) and the formula (2.2), $s_u(n)$ represents the root sequence, $s_{u,k,l}(n)$ represents the cyclic shift sequence, $N$ represents a sequence length, the sequence length is a prime number, $u$ represents a root index, and $C_{k,l}$ represents the cyclic shift index. For example, $C_{k,l} = (\tau_{k,l} + u^{-1}v_{k,l}) \bmod N$, where $\tau_{k,l}$ represents the delay domain index, $v_{k,l}$ represents the Doppler domain index, $k$ represents a first parameter, $l$ represents a second parameter, and an operator $(\cdot)^{-1}$ represents a multiplicative inverse.

It should be noted that $N$ and $N_{ZC}$ in embodiments of this application each represent a sequence length. Further, $N$ may represent a sequence length of a Zadoff-Chu sequence, and may also represent a sequence length of a quadratic exponential sequence.

The cyclic shift index is determined based on a first sequence capacity and a second sequence capacity. The first sequence capacity is a sequence capacity obtained after a cyclic shift is performed on the root index based on a first group of indexes, and the second sequence capacity is a sequence capacity obtained after a cyclic shift is performed on the root sequence based on a second group of indexes. The first group of indexes is determined in ascending order or descending order of delays, and the second group of indexes is determined in ascending order or descending order of Doppler.

It should be noted that this application is described by using the "ascending order" (the ascending order of delays and the ascending order of Doppler) as an example. For implementation of the "descending order" (the descending order of delays and the descending order of Doppler), refer to the descriptions of the "ascending order." Details are not described again in embodiments of this application. For example, the first group of indexes, including the delay domain index $\tau_{k,l}$ and the Doppler domain index $v_{k,l}$, may be determined in ascending order of delays; and the second group of indexes, including a delay domain index $\tau'_{k,l}$ and a Doppler domain index $v'_{k,l}$, may be determined in ascending order of Doppler. It may be understood that values represented by the delay domain index $\tau_{k,l}$ and the Doppler domain index $v_{k,l}$ that are determined in ascending order of delays may be different from values represented by the delay domain index $\tau'_{k,l}$

and the Doppler domain index $v'_{k,l}$ that are determined in ascending order of Doppler.

In a possible implementation, the first apparatus may determine a plurality of cyclic shift indexes based on the first sequence capacity and the second sequence capacity. A cyclic shift index set may include the plurality of cyclic shift indexes. Therefore, a plurality of cyclic shift sequences may be obtained by separately performing cyclic shifts on the root sequence based on the plurality of cyclic shift indexes included in the cyclic shift index set. A sequence set may include the plurality of cyclic shift sequences. Zero ambiguity zones of the cyclic shift sequences included in the sequence set do not overlap each other. Therefore, the first apparatus may select a cyclic shift index from the cyclic shift index set, and perform a cyclic shift on the root sequence based on the cyclic shift index to obtain a cyclic shift sequence. That is, the cyclic shift sequence obtained by the first apparatus is a sequence in the sequence set.

In a possible implementation, the first apparatus obtains sequence configuration information. The sequence configuration information includes one or more of the following parameters: a sequence length $N$, root indexes of available cyclic shift sequences, a maximum delay $\Delta_T$ in a first zone, and a maximum Doppler shift $\Delta_F$ in the first zone. The first zone may be a cell, a sensing zone, or the like, and $\Delta_T \times \Delta_F$ represents a zero ambiguity zone.

In a possible implementation, the first apparatus obtains the sequence configuration information, determines a cyclic shift index in a prestored cyclic shift index set based on one or more parameters included in the sequence configuration information, and performs a cyclic shift on the root sequence based on the cyclic shift index to obtain a cyclic shift sequence. A cyclic shift index included in the prestored cyclic shift index set is determined based on the first sequence capacity and the second sequence capacity.

In a possible implementation, the first apparatus obtains the sequence configuration information, and determines a cyclic shift sequence in a prestored sequence set based on one or more parameters included in the sequence configuration information. Zero ambiguity zones of cyclic shift sequences included in the sequence set do not overlap each other, the sequence set is obtained by performing cyclic shifts on the root sequence based on the cyclic shift index set, and the cyclic shift index is one index in the cyclic shift index set.

In a possible implementation, the first apparatus receives the sequence configuration information. Optionally, the sequence configuration information may be sent by the second apparatus, or the sequence configuration information is sent by another apparatus.

In a possible implementation, the sequence configuration information is predefined, for example, predefined in a standard protocol.

In a possible implementation, the sequence configuration information is determined by the first apparatus. Optionally, the first apparatus further sends the sequence configuration information to the second apparatus.

In a possible implementation, when the cyclic shift sequence is used to generate a random access signal, the first apparatus may obtain, based on random access information broadcast by a network device, information for sending the random access signal, including the sequence length $N$, the root indexes of the available cyclic shift sequences, the maximum delay $\Delta_T$ in the cell, and the maximum Doppler shift $\Delta_F$ in the cell.

In a possible implementation, the first apparatus may randomly select a root index $u$ from the root indexes of the available cyclic shift sequences, and determine, based on the sequence length $N$, the root index $u$, the maximum delay $\Delta_T$ in the cell, and the maximum Doppler shift $\Delta_F$ in the cell, the first group of indexes in ascending order of delays and the second group of indexes in ascending order of Doppler. The first apparatus may determine the first sequence capacity based on the first group of indexes, and may determine the second sequence capacity based on the second group of indexes. The first apparatus may determine the cyclic shift index $C_{k,l}$ based on the first sequence capacity and the second sequence capacity, and may obtain a cyclic shift sequence by performing a cyclic shift based on the cyclic shift index $C_{k,l}$.

In a possible implementation, the first apparatus may randomly select a root index $u$ from the root indexes of the available cyclic shift sequences, then determine the cyclic shift index $C_{k,l}$ in the prestored cyclic shift index set based on the sequence length $N$, the root index $u$, the maximum delay $\Delta_T$ in the cell, and the maximum Doppler shift $\Delta_F$ in the cell, and may obtain the cyclic shift sequence by performing the cyclic shift based on the cyclic shift index $C_{k,l}$.

In a possible implementation, the first apparatus may randomly select a root index $u$ from the root indexes of the available cyclic shift sequences, and determine the cyclic shift sequence in the prestored sequence set based on the sequence length $N$, the root index $u$, the maximum delay $\Delta_T$ in the cell, and the maximum Doppler shift $\Delta_F$ in the cell.

In another possible implementation, when the cyclic shift sequence is used to generate a sensing signal, the first apparatus may receive sequence configuration information sent by a server or a control node. The sequence configuration information includes related information used to determine the cyclic shift sequence. The related information may specifically include the sequence length $N$, the root index $u$ of the cyclic shift sequence, the maximum delay $\Delta_T$ in the sensing zone, and the maximum Doppler shift $\Delta_F$ in the cell.

In a possible implementation, the first apparatus may determine, based on the sequence length $N$, the root index $u$, the maximum delay $\Delta_T$ in the cell, and the maximum Doppler shift $\Delta_F$ in the cell, the first group of indexes in ascending order of delays and the second group of indexes in ascending order of Doppler. The first apparatus may determine the first sequence capacity based on the first group of indexes, and may determine the second sequence capacity based on the second group of indexes. The first apparatus may determine the cyclic shift index $C_{k,l}$ based on the first sequence capacity and the second sequence capacity, and may obtain a cyclic shift sequence by performing a cyclic shift based on the cyclic shift index $C_{k,l}$.

In a possible implementation, the first apparatus may determine the cyclic shift index $C_{k,l}$ in the prestored cyclic shift index set based on the sequence length $N$, the root index $u$, the maximum delay $\Delta_T$ in the cell, and the maximum Doppler shift $\Delta_F$ in the cell, and may obtain the cyclic shift sequence by performing the cyclic shift based on the cyclic shift index $C_{k,l}$.

In a possible implementation, the first apparatus may determine the cyclic shift sequence in the prestored sequence set based on the sequence length $N$, the root index $u$, the maximum delay $\Delta_F$ in the cell, and the maximum Doppler shift $\Delta_F$ in the cell.

In a possible implementation, when the cyclic shift sequence is used to generate the sensing signal, the first apparatus may determine the sequence configuration information, and obtain the cyclic shift sequence. Optionally, the first apparatus may further send the sequence configuration information to the second apparatus.

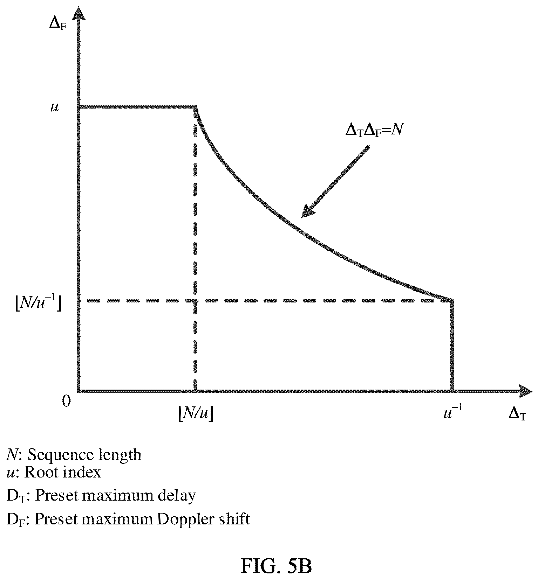

FIG. 5B is a diagram of a condition in which a root sequence has at least one cyclic shift satisfying a zero ambiguity zone according to an embodiment of this application. It can be learned from FIG. 5B that, for a given sequence length $N$ and a given root index $u$, when $\Delta_T\Delta_F = N$, $\Delta_T = u^{-1}$, and $\Delta_F = u$, there is at least one cyclic shift within a zone enclosed by solid lines shown in FIG. 5B, and there is no cyclic shift outside the zone.

In a possible implementation, when there is a Doppler shift, an ambiguity function of the root sequence may have a plurality of peaks in a delay domain-Doppler domain coordinate system, and the plurality of peaks each occupy one coordinate point in the delay domain-Doppler domain coordinate system. To construct more available sequences, cyclic shifts may be performed on the root sequence in delay domain, to obtain a plurality of cyclic shift sequences. However, to resist a frequency offset, only a single peak appear within each of zero ambiguity zones of ambiguity functions of the plurality of cyclic shift sequences, and the zero ambiguity zones do not overlap each other. Therefore, to avoid overlapping of the zero ambiguity zones of the cyclic shift sequences, there may be a delay constraint coordinate point in the delay domain-Doppler domain coordinate system. To be specific, delay constraint coordinates of the point may be used as an "end point" for performing a cyclic shift on the root sequence in delay domain. The delay constraint coordinates are coordinates of a peak with a smallest delay in peaks of the ambiguity function that is of the root sequence and that overlaps a zero ambiguity zone of a delay cyclic shift sequence. The delay cyclic shift sequence is a sequence obtained by performing, in delay domain, a cyclic shift on the root sequence located at an origin of the delay domain-Doppler domain coordinate system.

In an implementation, delay cyclic shift sequences are sequences that are obtained by performing, in delay domain, cyclic shifts on the root sequence located at the origin of the delay domain-Doppler domain coordinate system and whose zero ambiguity zones are adjacent. "Zero ambiguity zones are adjacent" indicates that the zero ambiguity zones of all the plurality of delay cyclic shift sequences are adjacent.

In another implementation, delay cyclic shift sequences are sequences that are obtained by performing, in delay domain, cyclic shifts on the root sequence located at the origin of the delay domain-Doppler domain coordinate system and whose zero ambiguity zones are adjacent and do not overlap each other. "Zero ambiguity zones are adjacent and do not overlap each other" indicates that one of the zero ambiguity zones of all the plurality of delay cyclic shift sequences is close to another, and there is no overlapping zone. Further, the first group of indexes is determined based on the delay constraint coordinates, a preset maximum delay, and a preset maximum Doppler shift. The delay constraint coordinates and the preset maximum delay are used to determine a first quantity of cyclic shifts. The first quantity of cyclic shifts is a quantity of sequences that are obtained by performing cyclic shifts on the root sequence in delay domain and whose zero ambiguity zones are adjacent and do not overlap each other.

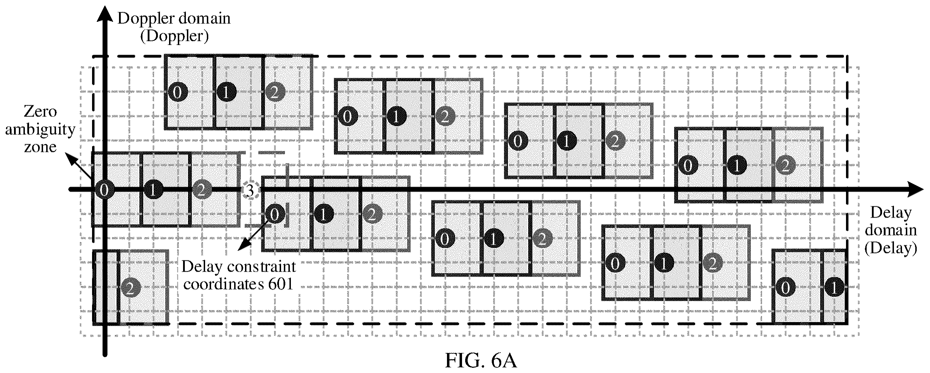

For example, FIG. 6A is a diagram of determining a first quantity of cyclic shifts based on delay constraint coordinates according to an embodiment of this application. In a delay domain-Doppler domain coordinate system shown in FIG. 6A, a sequence length $N = 31$, a root index $u = 9$, and a zero ambiguity zone $\Delta_T \times \Delta_F = 2 \times 3$. A circle represents a peak of an ambiguity function of a sequence, and a box represents a zero ambiguity zone. It can be learned that only one peak appears within each zero ambiguity zone. It should be noted that, unless otherwise specified, embodiments of this application are described by using a root sequence located at an origin as an example.

It can be learned from FIG. 6A that a circle with a sequence number 0 represents a peak of an ambiguity function of the root sequence, and a plurality of cyclic shift sequences may be obtained by performing cyclic shifts on the root sequence in delay domain. Circles with sequence numbers 1, 2, and 3 represent peaks of ambiguity functions of the cyclic shift sequences. However, due to existence of delay constraint coordinates 601, a zero ambiguity zone in which the peak of the ambiguity function of the cyclic shift sequence corresponding to the circle with the sequence number 3 is located overlaps a zero ambiguity zone in which the peak of the ambiguity function of the root sequence is located. Therefore, the cyclic shift sequence corresponding to the circle with the sequence number 3 is unavailable. Finally, two available cyclic shift sequences may be obtained. Therefore, the first quantity of cyclic shifts may be determined as 3 based on the delay constraint coordinates 601.

It should be noted that, because the cyclic shift sequence obtained in this application is obtained by performing the cyclic shift on the root sequence, the root sequence may also be used as a cyclic shift sequence with a cyclic shift index 0. When a sequence capacity is considered, the root sequence is included in the sequence capacity.

In a possible implementation, an expression of the first group of indexes is as follows:

$$\begin{cases} \tau_{k,l} = k\Delta_T - l \cdot (\bar{\tau}_T \bmod \Delta_T) \\ v_{k,l} = \mathrm{sgn}(\bar{v}_T - N/2) \cdot l\Delta_F \end{cases} \quad (2.3)$$

In the formula (2.3), $\tau_{k,l}$ represents a delay domain index in the first group of indexes, $v_{k,l}$ represents a Doppler domain index in the first group of indexes, $\langle \bar{\tau}_T, \bar{v}_T \rangle$ represents the delay constraint coordinates, $k$ represents a first parameter, $l$ represents a second parameter, and $sgn(\cdot)$ represents a sign function.

In a possible implementation, an expression of the delay constraint coordinates $\langle \bar{\tau}_T, \bar{v}_T \rangle$ is:

$$\begin{cases} \bar{\tau}_T = \min_{v \in \{\pm 1, \pm 2, \dots, \pm(\Delta_F - 1)\}} -u^{-1}v \bmod N \\ \bar{v}_T = -u\bar{\tau}_T \bmod N \end{cases} \quad (2.4)$$

In the formula (2.4), $N$ represents the sequence length, the sequence length is a prime number, $u$ represents the root index, $v$ represents a Doppler shift, and $\Delta_F$ represents the preset maximum Doppler shift.

In a possible implementation, the first parameter $k$ and the second parameter $l$ may be separately determined based on the delay constraint coordinates, a quantity of complete cyclic shifts in Doppler domain, and a quantity of residual cyclic shifts in delay domain. Further, a value range of $k$ and $l$ may be

$$\left\{ 0 \le k < \lfloor \bar{\tau}_T / \Delta_T \rfloor, 0 \le l < \bar{l}_T \right\} \cup \left\{ 0 \le k < \bar{k}_T, l = \bar{l}_T \right\},$$ $\bar{l}_T$ represents the quantity of complete cyclic shifts in Doppler domain, $\bar{k}_T$ represents the quantity of residual cyclic shifts in delay domain, and $\Delta_T$ represents the preset maximum delay. Still further, the first group of indexes is determined based on the delay constraint coordinates, the quantity of complete cyclic shifts in Doppler domain, and the quantity of residual cyclic shifts in delay domain.

The quantity of complete cyclic shifts in Doppler domain is a quantity of Doppler domain complete sequences, and the Doppler domain complete sequence is a Doppler domain fixed sequence that satisfies a first preset condition. The quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition. The Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

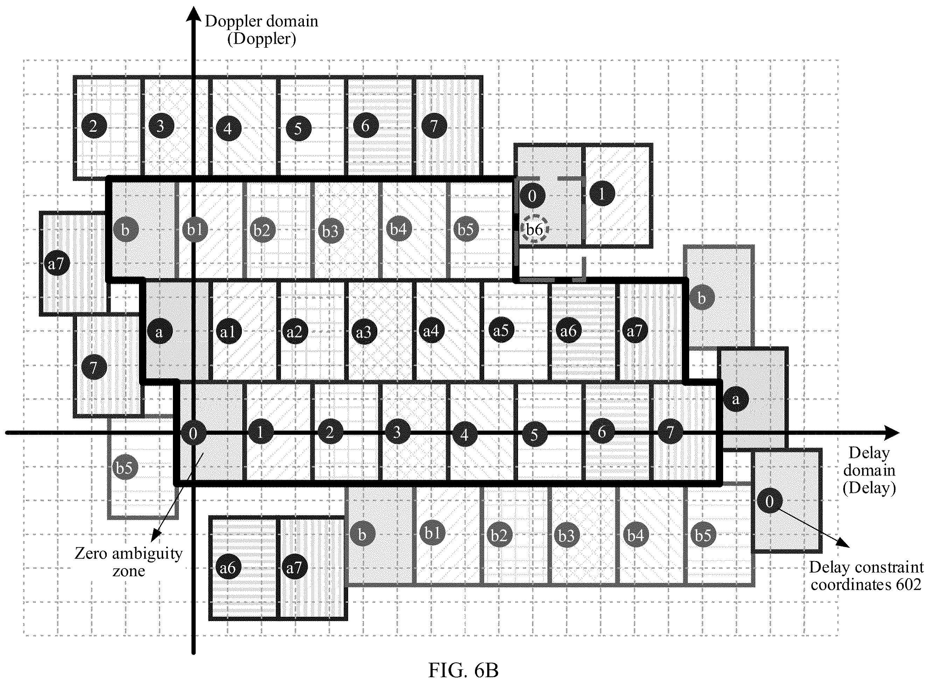

FIG. 6B is a diagram of determining a quantity of complete cyclic shifts in Doppler domain and a quantity of residual cyclic shifts in delay domain according to an embodiment of this application. In a delay domain-Doppler domain coordinate system shown in FIG. 6B, a sequence length $N = 139$, a root index $u = 41$, and a zero ambiguity zone $\Delta_T \times \Delta_F = 2 \times 3$. A circle represents a peak of an ambiguity function, and a box represents a zero ambiguity zone. It can be learned that only one peak appears within each zero ambiguity zone.

It can be learned from FIG. 6B that a circle with a sequence number 0 represents a peak of an ambiguity function of a root sequence. Due to existence of delay constraint coordinates 602, eight cyclic shift sequences may be obtained by performing cyclic shifts on the root sequence in delay domain: cyclic shift sequences corresponding to circles with sequence numbers 0, 1, and 2 to 7. Zero ambiguity zones in which peaks of ambiguity functions of the eight cyclic shift sequences are located are adjacent and do not overlap each other. Therefore, the first quantity of cyclic shifts is 8. According to a preset rule, if the delay constraint coordinates are located in a negative half-axis direction of the Doppler domain and a positive half-axis direction of the delay domain, the cyclic shifts are performed on the root sequence in a positive half-axis direction of the Doppler domain and a negative half-axis direction of the delay domain; or if the delay constraint coordinates are located in a positive half-axis direction of the Doppler domain and a positive half-axis direction of the delay domain, the cyclic shifts are performed on the root sequence in a negative half-axis direction of the Doppler domain and a negative half-axis direction of the delay domain. Because the delay constraint coordinates shown in FIG. 6B are located in the negative half-axis direction of the Doppler domain and the positive half-axis direction of the delay domain, the cyclic shifts may be performed on the root sequence in the positive half-axis direction of the Doppler domain and the negative half-axis direction of the delay domain, to obtain a plurality of Doppler domain fixed sequences. Circles with sequence numbers a and b are peaks of ambiguity functions of the Doppler domain fixed sequences. Sequences whose zero ambiguity zones are adjacent and do not overlap each other may be obtained by separately performing cyclic shifts on

EP 4 676 155 A1

the Doppler domain fixed sequence in delay domain. If the Doppler domain fixed sequence satisfies a first preset condition, the Doppler domain fixed sequence may be considered as a Doppler domain complete sequence; or if the Doppler domain fixed sequence does not satisfy a first preset condition, the Doppler domain fixed sequence may be considered as a Doppler domain residual sequence.

It can be learned from FIG. 6B that, a quantity of adjacent and non-overlapping sequences obtained by performing cyclic shifts, in delay domain, on the Doppler domain fixed sequence corresponding to the circle with the sequence number a is 8 (including Doppler domain fixed sequences corresponding to circles with sequence numbers a, a1, and a2 to a7), which is equal to the first quantity of cyclic shifts.

Therefore, the Doppler domain fixed sequence corresponding to the circle with the sequence number a satisfies the first preset condition, and is a Doppler domain complete sequence. However, a zero ambiguity zone in which a peak of an ambiguity function of a sequence is located overlaps a zero ambiguity zone in which a peak of an ambiguity function of the root sequence is located, where the sequence corresponds to a circle with a sequence number b6 and that is obtained by performing, in delay domain, a cyclic shift on the Doppler domain fixed sequence corresponding to the circle with the sequence number b. Consequently, the cyclic shift sequence corresponding to the circle with the sequence number b6 is unavailable. Therefore, a quantity of adjacent and non-overlapping sequences obtained by performing cyclic shifts, in delay domain, on the Doppler domain fixed sequence corresponding to the circle with the sequence number b is 6 (including sequences corresponding to circles with sequence numbers b, b1, and b1 to b5), which is not equal to the first quantity of cyclic shifts. Therefore, the Doppler domain fixed sequence corresponding to the circle with the sequence number b does not satisfy the first preset condition, and is a Doppler domain residual sequence. In conclusion, a quantity of Doppler domain complete sequences including the root sequence is 2, and a quantity of sequences that are obtained by performing cyclic shifts on the Doppler domain residual sequence in delay domain and whose zero ambiguity zones are adjacent and do not overlap each other is 6. Therefore, the quantity of complete cyclic shifts in Doppler domain is 2, and the quantity of residual cyclic shifts in delay domain is 6.

In a possible implementation, the quantity of complete cyclic shifts in Doppler domain is determined based on a Doppler spacing. The Doppler spacing is a range, in a Doppler domain direction, between the peak of the ambiguity function of the root sequence located at the origin and a delay ascending boundary. The delay ascending boundary is a coordinate point that is in a first restricted zone and that is closest to a delay domain coordinate axis, and the first restricted zone is a zone that is of an unavailable delay domain cyclic shift sequence and that overlaps the zero ambiguity zone of the root sequence. The unavailable delay domain cyclic shift sequence may be a sequence obtained by performing, in Doppler domain, a cyclic shift on a sequence obtained by performing a cyclic shift on a Doppler domain complete sequence in delay domain; or the unavailable delay domain cyclic shift sequence may be a sequence obtained by performing a cyclic shift on a Doppler domain residual sequence in delay domain.

In a possible implementation, an expression of the quantity of complete cyclic shifts in Doppler domain is:

$$\bar{l}_{\mathrm{T}} = \left\lfloor \frac{\bar{d}_{\mathrm{T}} + (\Delta_{\mathrm{F}}-1)/2}{\Delta_{\mathrm{F}}} \right\rfloor \ (2.5)$$

In the formula (2.5), $\bar{l}_{\mathrm{T}}$ represents the quantity of complete cyclic shifts in Doppler domain, and $\bar{d}_{\mathrm{T}}$ represents the Doppler spacing.

In another possible implementation, the quantity of residual cyclic shifts in delay domain is determined based on the quantity of complete cyclic shifts in Doppler domain, the delay constraint coordinates, and inverse delay constraint coordinates. The inverse delay constraint coordinates are coordinates of a peak with a smallest delay in peaks that are of the ambiguity function of the root sequence and that are within a maximum Doppler shift range {1, 2, ..., $\Delta_{\mathrm{F}}$-1} in a reverse direction of the delay constraint coordinates, and is used to determine coordinates of a peak, of the ambiguity function of the root sequence, that is related to the first restricted zone.

In a possible implementation, an expression of the quantity of residual cyclic shifts in delay domain is as follows:

$$\bar{k}_{\mathrm{T}} = \max \left\{ \left\lfloor \left( \bar{\bar{\tau}}_{\mathrm{T}} - \bar{\tau}_{\mathrm{T}} \cdot \left\lfloor \frac{(\bar{l}_{\mathrm{T}}+1)\Delta_{\mathrm{F}} - \min\{\bar{\bar{v}}_{\mathrm{T}}, N-\bar{v}_{\mathrm{T}}\} - 1}{\min\{\bar{v}_{\mathrm{T}}, N-\bar{v}_{\mathrm{T}}\}} \right\rfloor + \bar{l}_{\mathrm{T}} \cdot (\bar{\tau}_{\mathrm{T}} \bmod \Delta_{\mathrm{T}}) \right) \middle/ \Delta_{\mathrm{T}} \right\rfloor, 0 \right\} \ (2.6)$$

In the formula (2.6), $\bar{k}_{\mathrm{T}}$ represents the quantity of residual cyclic shifts in delay domain, $\langle \bar{\bar{\tau}}_{\mathrm{T}}, \bar{\bar{v}}_{\mathrm{T}} \rangle$ represents the inverse delay constraint coordinates, and $\Delta_{\mathrm{T}}$ represents the preset maximum delay.

In another possible implementation, the inverse delay constraint coordinates and the delay constraint coordinates are used to determine the Doppler spacing.

In a possible implementation, an expression of the Doppler spacing $\bar{d}_{\mathrm{T}}$ is:

23

$$\bar{d}_T = \min\left\{ d_T \middle| \bar{\tau}_T \cdot \left\lfloor \frac{d_T - \min\{\bar{\bar{v}}_T, N-\bar{\bar{v}}_T\} + (\Delta_F-1)/2}{\min\{\bar{v}_T, N-\bar{v}_T\}} \right\rfloor - \bar{\tau}_T \bmod \Delta_T \cdot \left( \left\lfloor \frac{d_T + (\Delta_F-1)/2}{\Delta_F} \right\rfloor + 1 \right) \geq \bar{\bar{\tau}}_T - \bar{\tau}_T \right\} \quad (2.7)$$

An expression of the inverse delay constraint coordinates $\langle \bar{\bar{\tau}}_T, \bar{\bar{v}}_T \rangle$ is as follows:

$$\begin{cases} \bar{\bar{\tau}}_T = \min_{v \in \{1,2,\dots,\Delta_F-1\}} - \operatorname{sgn}(\bar{v}_T - N/2)\, u^{-1} v \bmod N \\ \bar{\bar{v}}_T = - u \bar{\bar{\tau}}_T \bmod N \end{cases} \quad (2.8)$$

In a possible implementation, the first quantity of cyclic shifts, the quantity of complete cyclic shifts in Doppler domain, and the quantity of residual cyclic shifts in delay domain are used to determine the first sequence capacity.

In a possible implementation, the first quantity of cyclic shifts is $\lfloor \bar{\tau}_T / \Delta_T \rfloor$, and the first sequence capacity is $\bar{l}_T \cdot \lfloor \bar{\tau}_T / \Delta_T \rfloor + \bar{k}_T$.

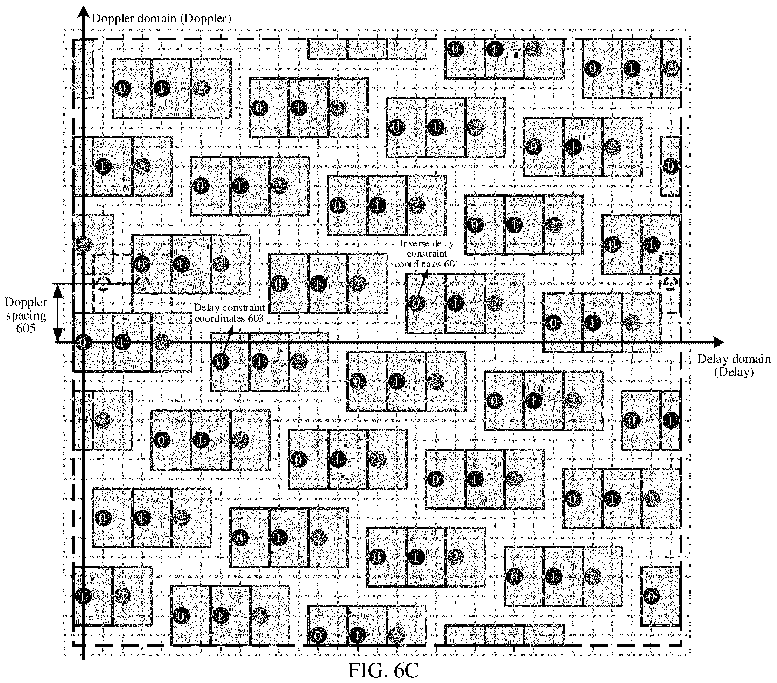

For example, FIG. 6C is a diagram of determining a first sequence capacity in ascending order of delays according to an embodiment of this application. When a sequence length $N = 31$, a root index $u = 9$, and a zero ambiguity zone $\Delta_T \times \Delta_F = 2 \times 3$, delay constraint coordinates 603 $\langle \bar{\tau}_T, \bar{v}_T \rangle = \langle 7, 30 \rangle$ and inverse delay constraint coordinates 604 $\langle \bar{\bar{\tau}}_T, \bar{\bar{v}}_T \rangle = \langle 17, 2 \rangle$ may be determined according to the formula (2.4) and the formula (2.8). Therefore, the first quantity of cyclic shifts may be 3 based on the delay constraint coordinates 603 $\langle \bar{\tau}_T, \bar{v}_T \rangle = \langle 7, 30 \rangle$ and the preset maximum delay $\Delta_T = 2$. It can be learned from FIG. 6C that three cyclic shift sequences may be obtained by performing cyclic shifts on the root sequence in delay domain: cyclic shift sequences represented by circles with sequence numbers 0, 1, and 2. The Doppler spacing 605 $\bar{d}_T = 3$ may be obtained by substituting the delay constraint coordinates 603 $\langle \bar{\tau}_T, \bar{v}_T \rangle = (7, 30)$ and the inverse delay constraint coordinates 604 $\langle \bar{\bar{\tau}}_T, \bar{\bar{v}}_T \rangle = \langle 17, 2 \rangle$ into the formula (2.7). The quantity of complete cyclic shifts in Doppler domain: $\bar{l}_T = 1$, may be obtained by substituting the Doppler spacing 605 $\bar{d}_T = 3$ into the formula (2.5). The quantity of residual cyclic shifts in delay domain: $\bar{k}_T = 0$, may be obtained by substituting the delay constraint coordinates 603 $\langle \bar{\tau}_T, \bar{v}_T \rangle = (7, 30)$, the inverse delay constraint coordinates 604 $\langle \bar{\bar{\tau}}_T, \bar{\bar{v}}_T \rangle = = (17, 2)$, and the Doppler spacing 605 $d_T = 3$ into the formula (2.6). Therefore, it can be learned from FIG. 6C that, because the delay constraint coordinates 603 are located in a negative half-axis direction of the Doppler domain and a positive half-axis direction of the delay domain, a cyclic shift is performed on the root sequence in a positive half-axis direction of the Doppler domain and a negative half-axis direction of the delay domain, to obtain a sequence corresponding to a circle with a sequence number a. It can be learned that a zero ambiguity zone in which the circle with the sequence number a is located overlaps the zero ambiguity zone in which the peak of the ambiguity function of the root sequence is located. Consequently, zero ambiguity zones in which circles with sequence number a1 and a2 are located and that are obtained by performing cyclic shifts, in delay domain, on the sequence corresponding to the circle with the sequence number a also overlap a zero ambiguity zone of an ambiguity function of another sequence. Therefore, sequences corresponding to circles with the sequence numbers a, a1, and a2 are unavailable.

In conclusion, the first sequence capacity may be determined as 3 based on the first quantity 3 of cyclic shifts, the quantity 1 of complete cyclic shifts in Doppler domain, and the quantity 0 of residual cyclic shifts in delay domain. In other words, three cyclic shift sequences may be obtained by performing cyclic shifts on the root sequence based on the first group of indexes.

In a possible implementation, when there is a Doppler shift, the ambiguity function of the root sequence may have a plurality of peaks, and the plurality of peaks each occupy one coordinate point in the delay domain-Doppler domain coordinate system. To construct more available sequences, cyclic shifts may be performed on the root sequence in Doppler domain, to obtain a plurality of cyclic shift sequences. However, to resist a frequency offset, only a single peak appear within each of zero ambiguity zones of ambiguity functions of the plurality of cyclic shift sequences, and the zero ambiguity zones do not overlap each other. Therefore, to avoid overlapping of the zero ambiguity zones of the cyclic shift sequences, there is a Doppler constraint coordinate point in the delay domain-Doppler domain coordinate system. To be specific, Doppler constraint coordinates of the point may be used as an "end point" for performing a cyclic shift on the root sequence in Doppler domain. The Doppler constraint coordinates are coordinates of a peak with a smallest Doppler shift in peaks of the ambiguity function that is of the root sequence and that overlaps a zero ambiguity zone of a Doppler cyclic shift sequence. The Doppler cyclic shift sequence is a sequence obtained by performing, in Doppler domain, a cyclic shift on the root sequence located at the origin of the delay domain-Doppler domain coordinate system.

In an implementation, Doppler cyclic shift sequences are sequences that are obtained by performing, in Doppler domain, cyclic shifts on the root sequence located at the origin of the Doppler domain-Doppler domain coordinate system and whose zero ambiguity zones are adjacent. "Zero ambiguity zones are adjacent" indicates that the zero ambiguity zones of all the plurality of Doppler cyclic shift sequences are adjacent.

In another implementation, Doppler domain cyclic shift sequences are sequences that are obtained by performing, in Doppler domain, cyclic shifts on the root sequence located at the origin of the Doppler domain-Doppler domain coordinate system and whose zero ambiguity zones are adjacent and do not overlap each other. "Zero ambiguity zones are adjacent and do not overlap each other" indicates that one of the zero ambiguity zones of all the plurality of Doppler cyclic shift sequences is close to another, and there is no overlapping zone.

Further, the second group of indexes is determined based on the Doppler constraint coordinates, a preset maximum delay, and a preset maximum Doppler shift. The Doppler constraint coordinates and the preset maximum Doppler shift are used to determine a second quantity of cyclic shifts. The second quantity of cyclic shifts is a quantity of sequences that are obtained by performing cyclic shifts on the root sequence in Doppler domain and whose zero ambiguity zones are adjacent and do not overlap each other.

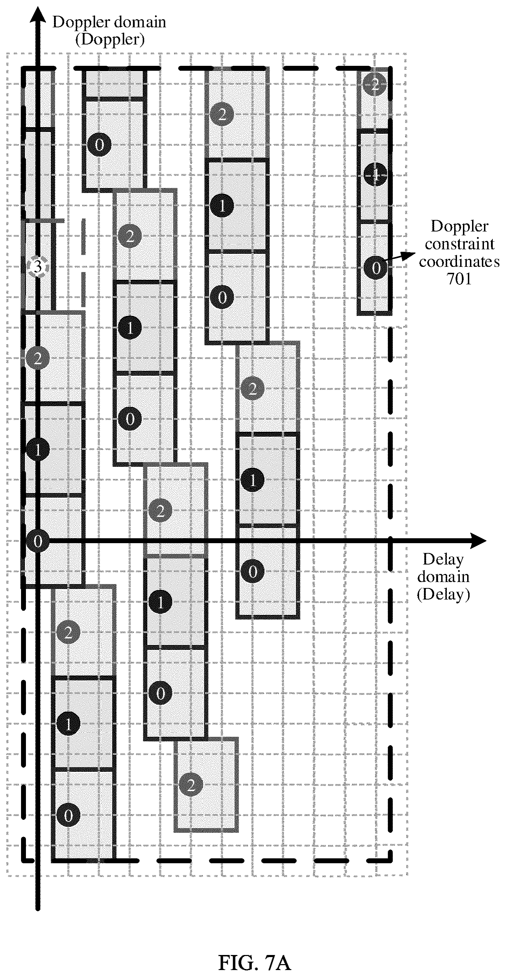

For example, FIG. 7A is a diagram of determining a second quantity of cyclic shifts based on Doppler constraint coordinates according to an embodiment of this application. In a delay domain-Doppler domain coordinate system shown in FIG. 7A, a sequence length $N = 31$, a root index $u = 9$, and a zero ambiguity zone $\Delta_T \times \Delta_F = 2 \times 3$. A circle represents a peak of an ambiguity function of a sequence, and a box represents a zero ambiguity zone. It can be learned that only one peak appears within each zero ambiguity zone.

It can be learned from FIG. 7A that a circle with a sequence number 0 represents a peak of an ambiguity function of a root sequence, and cyclic shift sequences corresponding to a circle with a sequence number 1, a circle with a sequence number 2, and a circle with a sequence number 3 may be obtained by performing cyclic shifts on the root sequence in Doppler domain. However, due to existence of the Doppler constraint coordinates 701, a zero ambiguity zone in which a peak of an ambiguity function of the cyclic shift sequence corresponding to the circle with the sequence number 3 overlaps a zero ambiguity zone in which a peak of an ambiguity function of the root sequence corresponding to the circle with the sequence number 0, two available cyclic shift sequences may be finally obtained. Therefore, the first quantity of cyclic shifts may be determined as 3 based on the Doppler constraint coordinates 701.

In a possible implementation, an expression of the first group of indexes is as follows:

$$\begin{cases} \tau_{k,l} = \mathrm{sgn}(\bar{\tau}_F - N/2) \cdot k\Delta_T \\ v_{k,l} = l\Delta_F - k \cdot (\bar{v}_F \bmod \Delta_F) \end{cases} (2.9)$$

In the formula (2.9), $\tau_{k,l}$ represents a delay domain index in the second group of indexes, $v_{k,l}$ represents a Doppler domain index in the second group of indexes, $\langle \bar{\tau}_F, \bar{v}_F \rangle$ represents the delay constraint coordinates, $k$ represents a first parameter, $l$ represents a second parameter, and $sgn(\cdot)$ represents a sign function.

In a possible implementation, an expression of the Doppler constraint coordinates $\langle \bar{\tau}_F, \bar{v}_F \rangle$ is:

$$\begin{cases} \bar{v}_F = \min_{\tau \in \{\pm 1, \pm 2, \ldots, \pm(\Delta_T - 1)\}} - u\tau \bmod N \\ \bar{\tau}_F = -u^{-1}\bar{v}_F \bmod N \end{cases} (2.10)$$

In the formula (2.10), $N$ represents a sequence length, the sequence length is a prime number, $u$ represents a root index, v represents a delay, and $\Delta_T$ represents the preset maximum delay.

In a possible implementation, the first parameter $k$ and the second parameter $l$ may be separately determined based on the Doppler constraint coordinates, a quantity of complete cyclic shifts in delay domain, and a quantity of residual cyclic shifts in Doppler domain. Further, a value range of $k$ and $l$ may be

$$\{0 \le k < \bar{k}_F, 0 \le l < \lfloor \bar{v}_F / \Delta_F \rfloor \} \cup \{k = \bar{k}_F, 0 \le l < \bar{l}_F\},$$ $\bar{l}_F$ represents the quantity of complete cyclic shifts in delay domain, $\bar{k}_F$ represents the quantity of residual cyclic shifts in Doppler domain, and $\Delta_F$ represents the preset maximum Doppler shift. Still further, the second group of indexes is determined based on the Doppler constraint coordinates, the quantity of complete cyclic shifts in delay domain, and the quantity of residual cyclic shifts in Doppler domain.

The quantity of complete cyclic shifts in delay domain is a quantity of delay domain complete sequences, and the delay domain complete sequence is a delay domain fixed sequence that satisfies a second preset condition. The quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition. The delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

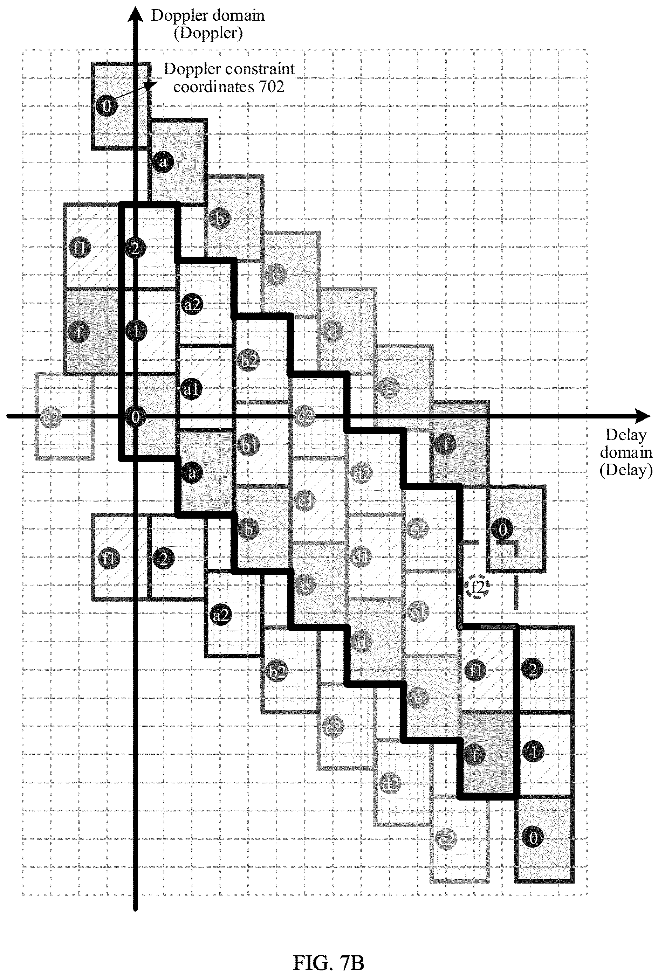

FIG. 7B is a diagram of determining a quantity of complete cyclic shifts in delay domain and a quantity of residual cyclic shifts in Doppler domain according to an embodiment of this application. In a delay domain-Doppler domain coordinate system shown in FIG. 7B, a sequence length $N = 139$, a root index $u = 11$, and a zero ambiguity zone $\Delta_T \times \Delta_F = 2 \times 3$. A circle represents a peak of an ambiguity function, and a box represents a zero ambiguity zone. It can be learned that only one peak appears within each zero ambiguity zone.

It can be learned from FIG. 7B that a circle with a sequence number 0 represents a peak of an ambiguity function of a root sequence. Due to existence of Doppler constraint coordinates 702, three cyclic shift sequences may be obtained by performing cyclic shifts on the root sequence in Doppler domain. Zero ambiguity zones in which peaks of ambiguity functions of the cyclic shift sequences with the sequence numbers 0, 1, and 2 are located are adjacent and do not overlap each other. Therefore, the second quantity of cyclic shifts is 3. According to a preset rule, if the Doppler constraint coordinates are located in a negative half-axis direction of the delay domain and a positive half-axis direction of the Doppler domain, the cyclic shifts are performed on the root sequence in a positive half-axis direction of the delay domain and a negative half-axis direction of the Doppler domain; or if the Doppler constraint coordinates are located in a positive half-axis direction of the delay domain and a positive half-axis direction of the Doppler domain, the cyclic shifts are performed on the root sequence in a negative half-axis direction of the delay domain and a negative half-axis direction of the Doppler domain. Because the Doppler constraint coordinates 702 shown in FIG. 7B are located in the negative half-axis direction of the delay domain and the positive half-axis direction of the Doppler domain, the cyclic shifts may be performed on the root sequence in the positive half-axis direction of the delay domain and the negative half-axis direction of the Doppler domain, to obtain a plurality of delay domain fixed sequences. Circles with sequence numbers a, b, c, d, e, and f are peaks of ambiguity functions of the delay domain fixed sequences. Sequences whose zero ambiguity zones are adjacent and do not overlap each other may be obtained by separately performing cyclic shifts on the delay domain fixed sequence in Doppler domain. If the delay domain fixed sequence satisfies the second preset condition, the delay domain fixed sequence may be considered as a delay domain complete sequence; or if the delay domain fixed sequence does not satisfy the second preset condition, the delay domain fixed sequence may be considered as a delay domain residual sequence.

It can be learned from FIG. 7B that, a quantity of adjacent and non-overlapping sequences obtained by performing cyclic shifts, in Doppler domain, on the delay domain fixed sequence corresponding to the circle with the sequence number a is 3 (including delay domain fixed sequences corresponding to circles with sequence numbers a, a1, and a2), which is equal to the second quantity of cyclic shifts. Similarly, a quantity of sequences that may be obtained from the delay domain fixed sequence corresponding to the circle with the sequence number b is also 3 (including delay domain fixed sequences corresponding to circles with sequence numbers b, b1, and b2), and is equal to the second quantity of cyclic shifts. A quantity of sequences that may be obtained from the delay domain fixed sequence corresponding to the circle with the sequence number c is also 3 (including delay domain fixed sequences corresponding to circles with sequence numbers c, c1, and c2), and is equal to the second quantity of cyclic shifts. A quantity of sequences that may be obtained from the delay domain fixed sequence corresponding to the circle with the sequence number d is also 3 (including delay domain fixed sequences corresponding to circles with sequence numbers d, d1, and d2), and is equal to the second quantity of cyclic shifts. A quantity of sequences that may be obtained from the delay domain fixed sequence corresponding to the circle with the sequence number e is also 3 (including delay domain fixed sequences corresponding to circles with sequence numbers e, e1, and e2), and is equal to the second quantity of cyclic shifts Therefore, the delay domain fixed sequences corresponding to the circles with the sequence numbers a, b, c, d, and e satisfy the second preset condition, and are delay domain complete sequences. However, a zero ambiguity zone in which a peak of an ambiguity function of a sequence is located overlaps a zero ambiguity zone in which a peak of an ambiguity function of the root sequence is located, where the sequence corresponds to a circle with a sequence number f2 and that is obtained by performing, in Doppler domain, a cyclic shift on the delay domain fixed sequence corresponding to the circle with the sequence number f. Consequently, the cyclic shift sequence corresponding to the circle with the sequence number f2 is unavailable. Therefore, a quantity of adjacent and non-overlapping sequences obtained by performing cyclic shifts, in Doppler domain, on the delay domain fixed sequence corresponding to the circle with the sequence number f is 2 (including sequences corresponding to circles with sequence numbers f and f1), which is not equal to the second quantity of cyclic shifts. Therefore, the delay domain fixed sequence corresponding to the circle with the sequence number f does not satisfy the second preset condition, and is a delay domain residual sequence. In conclusion, a quantity of delay domain complete sequences including the root sequence is 6, and a quantity of sequences that are obtained by performing cyclic shifts on the delay domain residual sequence in Doppler domain and that are adjacent and do not overlap each other is 2. Therefore, the quantity of complete cyclic shifts in delay domain is 6, and the quantity of residual cyclic shifts in Doppler domain is 2.

In a possible implementation, the quantity of complete cyclic shifts in delay domain is determined based on a delay spacing. The delay spacing is a range, in a delay domain direction, between coordinates of the peak of the ambiguity function of the root sequence located at the origin and a Doppler ascending boundary. The Doppler ascending boundary is a coordinate point that is in a second restricted zone and that is closest to a Doppler domain coordinate axis, and the second restricted zone is a zone that is of an unavailable Doppler domain cyclic shift sequence and that overlaps the zero ambiguity zone of the root sequence. The unavailable Doppler domain cyclic shift sequence may be a sequence obtained by performing, in delay domain, a cyclic shift on a sequence obtained by performing a cyclic shift on a delay domain complete sequence in Doppler domain; or the unavailable Doppler domain cyclic shift sequence may be a sequence obtained by performing a cyclic shift on a delay domain residual sequence in Doppler domain.

In a possible implementation, an expression of the quantity of complete cyclic shifts in delay domain is:

$$\overline{k}_F = \left\lfloor \frac{\overline{d}_F}{\Delta_T} \right\rfloor \quad (2.11)$$

In the formula (2.11), $\overline{k}_F$ represents the quantity of complete cyclic shifts in delay domain, and $\overline{d}_F$ represents the delay spacing.

In another possible implementation, the quantity of residual cyclic shifts in Doppler domain is determined based on the quantity of complete cyclic shifts in delay domain, the Doppler constraint coordinates, and inverse Doppler constraint coordinates. The inverse Doppler constraint coordinates are coordinates of a peak with a smallest Doppler shift in peaks that are of the ambiguity function of the root sequence and that are within a maximum delay range $\{1, 2, \ldots, \Delta_T-1\}$ in a reverse direction of the Doppler constraint coordinates, and is used to determine coordinates of a peak, of the ambiguity function of the root sequence, that is related to the second restricted zone.

In a possible implementation, an expression of the quantity of residual cyclic shifts in Doppler domain is:

$$\overline{l}_F = \max\left\{ \left\lfloor \left( \left( \overline{\overline{v}}_F - \overline{v}_F \cdot \left\lfloor \frac{(\overline{k}_F+1)\Delta_T - \min\{\overline{\overline{\tau}}_F, N-\overline{\overline{\tau}}_F\}-1}{\min\{\overline{\tau}_F, N-\overline{\tau}_F\}} \right\rfloor + \overline{k}_F \cdot (\overline{v}_F \bmod \Delta_F) - 1 \right) \middle/ \Delta_F \right\rfloor, 0 \right\} \quad (2.12)$$

In the formula (2.12), $\overline{l}_F$ represents the quantity of residual cyclic shifts in Doppler domain, $\langle \overline{\overline{\tau}}_F, \overline{\overline{v}}_F \rangle$ represents the inverse Doppler constraint coordinates, and $\Delta_F$ represents the preset maximum Doppler shift.

In another possible implementation, the Doppler constraint coordinates and the inverse Doppler constraint coordinates are used to determine the delay spacing.

In a possible implementation, an expression of the delay spacing $\overline{d}_F$ is as follows:

$$\overline{d}_F = \min\left\{ d_F \middle| \overline{v}_F \cdot \left\lfloor \frac{d_F - \min\{\overline{\overline{\tau}}_F, N-\overline{\overline{\tau}}_F\}}{\min\{\overline{\tau}_F, N-\overline{\tau}_F\}} \right\rfloor - \overline{v}_F \bmod \Delta_F \cdot \left( \left\lfloor \frac{d_F}{\Delta_T} \right\rfloor + 1 \right) \geq \overline{\overline{v}}_F - \overline{v}_F \right\} \quad (2.13)$$

An expression of the inverse Doppler constraint coordinates $\langle \overline{\overline{\tau}}_F, \overline{\overline{v}}_F \rangle$ is as follows:

$$\begin{cases} \overline{\overline{v}}_F = \min_{\tau \in \{1,2,\ldots,\Delta_T-1\}} - \operatorname{sgn}(\overline{\tau}_F - N/2) \, u\tau \bmod N \\ \overline{\overline{\tau}}_F = - u^{-1} \overline{\overline{v}}_F \bmod N \end{cases} \quad (2.14)$$

In a possible implementation, the second quantity of cyclic shifts, the quantity of complete cyclic shifts in delay domain, and the quantity of residual cyclic shifts in Doppler domain are used to determine the second sequence capacity.

In a possible implementation, the second quantity of cyclic shifts is $\lfloor \overline{v}_F / \Delta_F \rfloor$, and the second sequence capacity is $\overline{k}_F \cdot \lfloor \overline{v}_F / \Delta_F \rfloor + \overline{l}_F$.

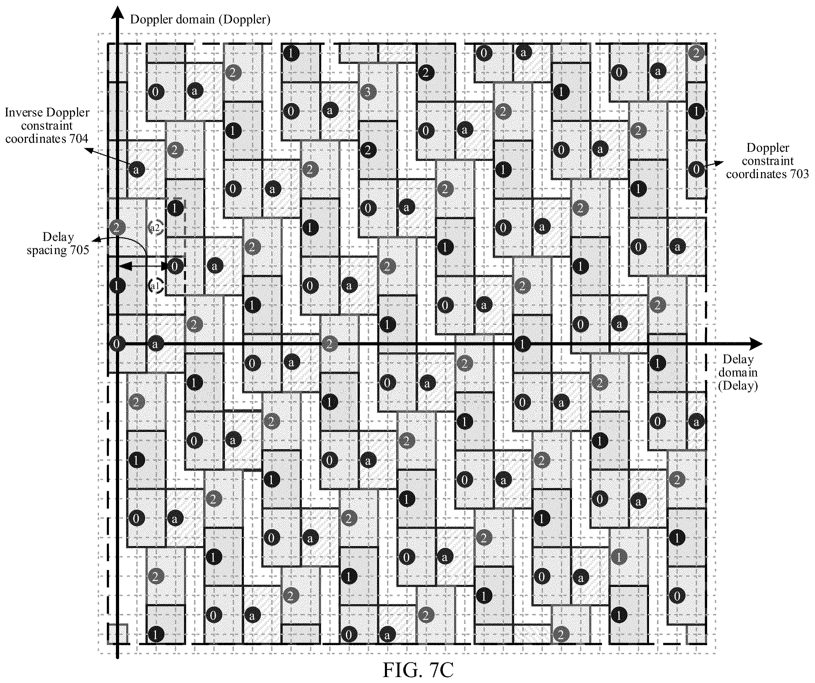

For example, FIG. 7C is a diagram of determining a second sequence capacity in ascending order of Doppler according to an embodiment of this application. When a sequence length $N = 31$, a root index $u = 9$, and a zero ambiguity zone $\Delta_T \times \Delta_F = 2 \times 3$, Doppler constraint coordinates 703 $\langle \overline{\tau}_F, \overline{v}_f \rangle = (30,9)$ and inverse Doppler constraint coordinates 704 $\langle \overline{\overline{\tau}}_F, \overline{\overline{v}}_F \rangle = \langle 1, 22 \rangle$ may be determined according to the formula (2.10) and the formula (2.14). It may be learned, based on the Doppler constraint coordinates 703 $\langle \overline{\tau}_F, \overline{v}_F \rangle = \langle 30, 9 \rangle$ and the preset maximum Doppler shift $\Delta_F = 3$, that the first quantity of cyclic shifts is 3. It can be learned from FIG. 7C that three cyclic shift sequences may be obtained by performing cyclic shifts on the root sequence in Doppler domain: sequences corresponding to circles with sequence numbers 0, 1, and 2. The delay spacing 705 $\overline{d}_F = 3$ may be obtained by substituting the Doppler constraint coordinates 703 $\langle \overline{\tau}_F, \overline{v}_F \rangle = (30, 9)$

and the inverse Doppler constraint coordinates 704 $\langle \bar{\bar{\tau}}_F, \bar{\nu}_F \rangle = \langle 1, 22 \rangle$ into the formula (2.7). The quantity of complete cyclic shifts in delay domain: $\bar{k}_F = 1$, may be obtained by substituting the delay spacing 705 $\bar{d}_F = 3$ into the formula (2.11). The quantity of residual cyclic shifts in Doppler domain: $\bar{l}_F = 1$, may be obtained by substituting the Doppler constraint coordinates 703 $\langle \bar{\tau}_F, \bar{\nu}_F \rangle = (30, 9)$, the inverse Doppler constraint coordinates 704 $\langle \bar{\bar{\tau}}_F, \bar{\nu}_F \rangle = \langle 1, 22 \rangle$, and the delay spacing 705 $\bar{d}_F = 3$ into the formula (2.12). Therefore, it can be learned from FIG. 7C that, because the Doppler constraint coordinates 703 are located in a negative half-axis direction of the delay domain and a positive half-axis direction of the Doppler domain, a cyclic shift is performed on the root sequence in the positive half-axis direction of the delay domain and the negative half-axis direction of the Doppler domain, to obtain a cyclic shift sequence corresponding to a circle with a sequence number a. Cyclic shifts are performed on a sequence corresponding to the circle with the sequence number a in Doppler domain, to obtain sequences corresponding to circles with sequence numbers a1 and a2. It can be learned that zero ambiguity zones of ambiguity functions of the sequences corresponding to sequence numbers a1 and a2 overlap a zero ambiguity zone of an ambiguity function of another sequence. Finally, the cyclic shift sequence corresponding to the circle with the sequence number a may be obtained.

In conclusion, the second sequence capacity may be determined as 4 based on the second quantity 3 of cyclic shifts, the quantity 1 of complete cyclic shifts in delay domain, and the quantity 0 of residual cyclic shifts in Doppler domain. In other words, four cyclic shift sequences may be obtained by performing cyclic shifts on the root sequence based on the second group of indexes.

In a possible implementation, the cyclic shift index is a group of indexes corresponding to a largest sequence capacity included in the first sequence capacity and the second sequence capacity. For example, if the first sequence capacity determined based on the first group of indexes is greater than or equal to the second sequence capacity determined based on the second group of indexes, the cyclic shift index is the first group of indexes; or if the second sequence capacity determined based on the second group of indexes is greater than the first sequence capacity determined based on the first group of indexes, the cyclic shift index is the second group of indexes. It should be noted that a case of "equal to" may be placed in another branch of determining. For example, if the second sequence capacity is greater than or equal to the first sequence capacity, the cyclic shift index is the second group of indexes.

In a possible implementation, $\bar{l}_T \cdot \lfloor \bar{\tau}_T / \Delta_T \rfloor + \bar{k}_T$ represents the first sequence capacity, and $\bar{k}_F \cdot \lfloor \bar{\nu}_F / \Delta_F \rfloor + \bar{l}_F$ represents the second sequence capacity.

When $\bar{l}_T \cdot \lfloor \bar{\tau}_T / \Delta_T \rfloor + \bar{k}_T \geq \bar{k}_F \cdot \lfloor \bar{\nu}_F / \Delta_F \rfloor + \bar{l}_F$, the cyclic shift is determined in ascending order of delays, that is, the first group of indexes: $\tau_{k,l}$ and $\nu_{k,l}$.

$$\begin{cases} \tau_{k,l} = k\Delta_T - l \cdot (\bar{\tau}_T \bmod \Delta_T) \\ \nu_{k,l} = \operatorname{sgn}(\bar{\nu}_T - N/2) \cdot l\Delta_F \end{cases}$$

A value range of k and l is $\{0 \leq k < \lfloor \bar{\tau}_T / \Delta_T \rfloor, 0 \leq l < \bar{l}_T\} \cup \{0 \leq k < \bar{k}_T, l = \bar{l}_T\}$,

When $\bar{l}_T \cdot \lfloor \bar{\tau}_T / \Delta_T \rfloor + \bar{k}_T < \bar{k}_F \cdot \lfloor \bar{\nu}_F / \Delta_F \rfloor + \bar{l}_F$, the cyclic shift is determined in ascending order of Doppler, that is, the second group of indexes: $\tau_{k,l}$ and $\nu_{k,l}$.

$$\begin{cases} \tau_{k,l} = \operatorname{sgn}(\bar{\tau}_F - N) \cdot k\Delta_T \\ \nu_{k,l} = l\Delta_F - k \cdot (\bar{\nu}_F \bmod \Delta_F) \end{cases}$$

A value range of k and l is $\{0 \leq k < \bar{k}_F, 0 \leq l < \lfloor \bar{\nu}_F / \Delta_F \rfloor\} \cup \{k = \bar{k}_F, 0 \leq l < \bar{l}_F\}$.

When the sequence length $N = 31$, the root index $u = 9$, and the zero ambiguity zone $\Delta_T \times \Delta_F = 2 \times 3$, the quantity (3) of cyclic shifts determined based on the first group of indexes is less than the quantity (4) of cyclic shifts determined based on the second group of indexes. Therefore, the cyclic shift sequence obtained by the first apparatus is determined based on the root sequence ($u = 9$) in ascending order of Doppler.

It should be noted that a sequence obtained by multiplying all elements in the cyclic shift sequence determined in this embodiment of this application by one phase factor still falls within the protection scope of this application.

Step S502: The first apparatus outputs the cyclic shift sequence.

Correspondingly, the second apparatus may receive the cyclic shift sequence from the first apparatus, or the second apparatus may receive a cyclic shift sequence reflected by a target apparatus.

In a possible implementation, the first apparatus performs N-point DFT transform on the cyclic shift sequence to obtain a cyclic shift sequence distributed in frequency domain, or may perform a weighted shift on the cyclic shift sequence to obtain a cyclic shift sequence distributed in frequency domain, to omit a DFT operation. Next, subcarrier mapping is performed, the cyclic shift sequence that is distributed in frequency domain and that is obtained through the DFT is mapped to a corresponding subcarrier position, a time domain signal may be obtained after IDFT is performed on the mapped cyclic shift sequence distributed in frequency domain, and a time domain signal including the cyclic shift sequence is sent to the second apparatus or the target apparatus after corresponding processing (for example, inserting a cyclic prefix) is performed on the time domain signal

Step S503: The second apparatus processes the cyclic shift sequence.

In a possible implementation, if the cyclic shift sequence is used to generate a random access signal, the first apparatus sends a signal including the cyclic shift sequence to the second apparatus, and the second apparatus processes the cyclic shift sequence. Specifically, the second apparatus extracts the cyclic shift sequence at a frequency domain start position, and performs sampling on the cyclic shift sequence, to finally obtain a range between the first apparatus and the second apparatus and/or a velocity of the first apparatus relative to the second apparatus. Further, the second apparatus may obtain, through calculation, a timing advance needed by the first apparatus, and send the timing advance to the first apparatus, so that the first apparatus can send a data signal at a correct time point based on the advance in subsequent data transmission. It may be understood that the first apparatus may be a terminal device or an apparatus in the terminal device, the second apparatus may be a target apparatus, and the target apparatus may be an apparatus that establishes a communication connection to the first apparatus, and may be specifically a network device or an apparatus in the network device.

In another possible implementation, if the cyclic shift sequence is used to generate a sensing signal, the first apparatus sends a signal including the cyclic shift sequence to a target apparatus, and the target apparatus may reflect the signal including the cyclic shift sequence, so that the signal can be received by the second apparatus. The second apparatus processes the cyclic shift sequence, extracts the cyclic shift sequence at a frequency domain start position, and performs sampling on the cyclic shift sequence. Finally, a range between the first apparatus and the target apparatus and/or a velocity of the first apparatus relative to the target apparatus may be obtained.

Scenarios to which embodiments of this application are applicable include but are not limited to the following scenarios.

[Scenario 1] The cyclic shift sequence is used to generate a random access signal.

In a possible implementation scenario, the terminal device 104 shown in FIG. 1 is used as an example for description. The terminal device 104 obtains a cyclic shift sequence. The cyclic shift sequence is obtained by performing a cyclic shift on a root sequence based on a cyclic shift index. The cyclic shift index includes a delay domain index and a Doppler domain index. The cyclic shift index is determined based on a first sequence capacity and a second sequence capacity. The first sequence capacity is a sequence capacity obtained after a cyclic shift is performed on the root sequence based on a first group of indexes, and the second sequence capacity is a sequence capacity obtained after a cyclic shift is performed on the root sequence based on a second group of indexes. The first group of indexes is determined in ascending order or descending order of delays, and the second group of indexes is determined in ascending order or descending order of Doppler. Specifically, the terminal device 104 may obtain the cyclic shift sequence based on the foregoing communication method, for example, the communication method shown in FIG. 5A.

The terminal device 104 sends a random access signal including the cyclic shift sequence to the network device 111 or a functional module in the network device.

The network device 111 or the functional module in the network device may receive the random access signal including the cyclic shift sequence, and implement downlink signal synchronization and uplink random access of the terminal device 104 based on a correlation of the cyclic shift sequence. Specifically, the network device 111 may obtain, through measurement, a range between the terminal device 104 and the network device 111 or a velocity of the terminal device 104 relative to the network device 111 based on the cyclic shift sequence. The network device 111 may calculate, based on the range or the velocity, a timing advance needed by the terminal device 104, and feeds back the timing advance to the terminal device 104. Therefore, in a random access process, the terminal device 104 is identified by the network device 111, and obtains the timing advance estimated by the network device 111 at the same time, to establish up-down synchronization and construct a bidirectional link between the terminal device 104 and the network device 111. Then, the terminal device 104 may perform data transmission based on a resource scheduled by the network device 111.

[Scenario 2] The cyclic shift sequence is used to generate a sensing signal.

In a possible implementation scenario, the network device 111 shown in FIG. 1 is used as an example for description. The network device 111 obtains a cyclic shift sequence. The cyclic shift sequence is obtained by performing a cyclic shift on a root sequence based on a cyclic shift index. The cyclic shift index includes a delay domain index and a Doppler domain index. The cyclic shift index is determined based on a first sequence capacity and a second sequence capacity. The first sequence capacity is a sequence capacity obtained after a cyclic shift is performed on the root sequence based on a first group of indexes, and the second sequence capacity is a sequence capacity obtained after a cyclic shift is performed on the root sequence based on a second group of indexes. The first group of indexes is determined in ascending order or descending order of delays, and the second group of indexes is determined in ascending order or descending order of Doppler. Specifically, the terminal device 104 may obtain the cyclic shift sequence based on the foregoing communication method, for example, the communication method shown in FIG. 5A.

In a possible implementation, the network device 111 may receive sequence configuration information sent by a server or a control node (not shown in FIG. 1), or may receive sequence configuration information sent by a terminal device, or may receive sequence configuration information sent by the network device 112. The network device 111 determines a delay cyclic shift index and a Doppler cyclic shift index based on the sequence configuration information.

The network device 111 or a functional module in the network device sends a sensing signal including the cyclic shift sequence to a target object (for example, a vehicle in an ambient environment).

The target object may reflect the sensing signal including the cyclic shift sequence, so that the sensing signal is received by the network device 111. The network device 111 determines some attributes of the target object based on the reflection of the sensing signal, including one or more of a range, a position, a shape, or a velocity.

In a possible implementation, the sensing signal that includes the cyclic shift sequence and that is reflected by the target object may be received by the network device 112 or a functional module in the network device 112. The network device 112 or the functional module in the network device 112 determines some attributes of the target object based on the reflection of the sensing signal, including one or more of a range, a position, a shape, or a velocity.

In another possible implementation, the sensing signal that includes the cyclic shift sequence and that is reflected by the target object may be received by a terminal device or a functional module in the terminal device. The terminal device or the functional module in the terminal device determines some attributes of the target object based on the reflection of the sensing signal, including one or more of a range, a position, a shape, or a velocity.

It should be noted that the terminal device or the functional module in the terminal device may also obtain the cyclic shift sequence, to send the sensing signal including the cyclic shift sequence to the target object.

The following describes some possible implementations of the cyclic shift sequence.

[Implementation 1]

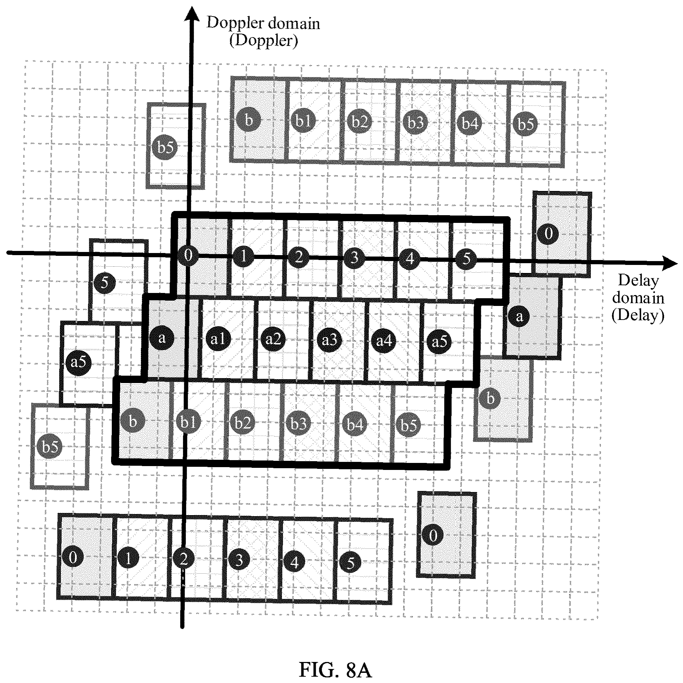

FIG. 8A is a diagram of determining cyclic shift sequences in ascending order of delays according to an embodiment of this application. When a sequence length $N = 139$, a root index $u = 32$, and a zero ambiguity zone $\Delta_T \times \Delta_F = 2 \times 3$, a first group of indexes determined in ascending order of delays may be obtained according to the formula (2.3). Expressions of a delay domain index $\tau_{k,l}$ and a Doppler domain index $v_{k,l}$ are as follows:

$$\begin{cases} \tau_{k,l} = k\Delta_T - l \cdot (\bar{\tau}_T \bmod \Delta_T) = 2k - l \\ v_{k,l} = \mathrm{sgn}(\bar{v}_T - N/2) \cdot l\Delta_F = -3l \end{cases}$$

A value range of a first parameter $k$ and a second parameter $l$ is $\left\{0 \le k < \lfloor \bar{\tau}_T / \Delta_T \rfloor, 0 \le l < \bar{l}_T\right\} \cup \left\{0 \le k < \bar{k}_T, l = \bar{l}_T\right\}$. Delay constraint coordinates $\langle \bar{\tau}_T, \bar{v}_T \rangle = (13, 1)$ may be obtained according to the formula (2.4). Therefore, a first quantity $\lfloor \bar{\tau}_T / \Delta_T \rfloor$ of cyclic shifts is 6.

It can be learned from FIG. 8A that six cyclic shift sequences may be obtained by performing cyclic shifts on a root sequence in delay domain. The six cyclic shift sequences are sequences respectively corresponding to circles with sequence numbers 0, 1, 2, 3, 4, and 5. Inverse delay constraint coordinates $\langle \bar{\bar{\tau}}_T, \bar{\bar{v}}_T \rangle = \langle 113, 137 \rangle$ may be obtained according to the formula (2.8). A Doppler spacing $\bar{d}_T = 10$ may be obtained according to the formula (2.7). A quantity of complete cyclic shifts in Doppler domain: $\bar{l}_T = 3$, may be obtained according to the formula (2.5). Therefore, there are three Doppler domain complete sequences. A quantity of residual cyclic shifts in delay domain: $\bar{k}_T = 0$, may be obtained according to the formula (2.6). Therefore, there is no delay domain residual cyclic shift sequence.

In conclusion, the value range of the first parameter $k$ and the second parameter $l$ is $\{0 \le k < 6, 0 \le l < 3\} \cup \{k \in \varnothing, l = 3\}$. It can be learned from FIG. 8A that the first group of indexes supports a total of $\bar{l}_T \cdot \lfloor \bar{\tau}_T / \Delta_T \rfloor + \bar{k}_T = 18$ cyclic shift sequences, and the 18 cyclic shift sequences are cyclic shift sequences corresponding to circles 0 to 5, cyclic shift sequences corresponding to circles a to a5, and cyclic shift sequences corresponding to circles b to b5.

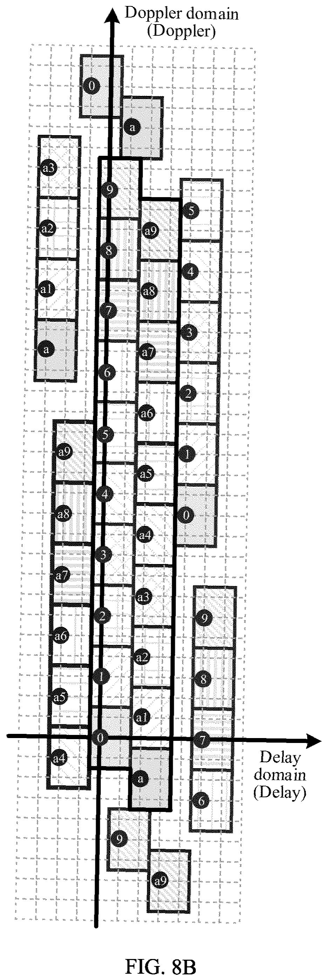

FIG. 8B is a diagram of determining cyclic shift sequences in ascending order of Doppler according to an embodiment of this application. When a sequence length $N = 139$, a root index $u = 32$, and a zero ambiguity zone $\Delta_T \times \Delta_F = 2 \times 3$, a second group of indexes determined in ascending order of Doppler may be obtained according to the formula (2.9). Expressions of a delay index $\tau_{k,l}$ and a Doppler domain index $v_{k,l}$ are as follows:

$$\begin{cases} \tau_{k,l} = \mathrm{sgn}(\bar{\tau}_F - N/2) \cdot k\Delta_T = 2k \\ v_{k,l} = l\Delta_F - k \cdot (\bar{v}_F \bmod \Delta_F) = 3l - 2k \end{cases}$$

A value range of a first parameter $k$ and a second parameter $l$ is $\{0 \le k < \bar{k}_F, 0 \le l < \lfloor \bar{v}_F/\Delta_F \rfloor\} \cup \{k = \bar{k}_F, 0 \le l < \bar{l}_F\}$ . Doppler constraint coordinates $\langle \bar{\tau}_F, \bar{v}_F \rangle$ = (138, 32) may be obtained according to the formula (2.10). Therefore, a second quantity $\lfloor \bar{v}_F/\Delta_F \rfloor$ of cyclic shifts is 10.

It can be learned from FIG. 8B that 10 cyclic shift sequences may be obtained by performing cyclic shifts on a root sequence in Doppler domain. The 10 cyclic shift sequences are sequences respectively corresponding to circles with sequence numbers 0, 1, 2, 3, 4, 5, 6, 7, 8, and 9. Inverse Doppler constraint coordinates $\langle \bar{\bar{\tau}}_F, \bar{\bar{v}}_F \rangle = \langle 1, 107 \rangle$ may be obtained according to the formula (2.14). A delay spacing $\bar{d}_F = 4$ may be obtained according to the formula (2.13). A quantity of complete cyclic shifts in delay domain: $\bar{k}_F = 2$, may be obtained according to the formula (2.11). Therefore, there are two delay domain complete sequences. A quantity of residual cyclic shifts in Doppler domain: $\bar{l}_F = 0$, may be obtained according to the formula (2.12). Therefore, there is no delay domain residual cyclic shift sequence.

In conclusion, the value range of the first parameter $k$ and the second parameter $l$ is $\{0 \le k < 2, 0 \le l < 10\} \cup \{k = 2, l \in$ Ø}. It can be learned from FIG. 8B that the second group of indexes supports a total of $\bar{l}_T \cdot \lfloor \bar{\tau}_T/\Delta_T \rfloor + \bar{k}_T = 20$ cyclic shift sequences, and the 20 cyclic shift sequences are cyclic shift sequences corresponding to circles 0 to 9 and cyclic shift sequences corresponding to circles a to a9.

Therefore, the quantity (18) of cyclic shifts determined based on the first group of indexes (in ascending order of delays) is less than the quantity (20) of cyclic shifts determined based on the second group of indexes (in ascending order of Doppler). Therefore, for the root sequence (u = 32), the cyclic shift sequence may be determined based on the second group of indexes (in ascending order of Doppler).

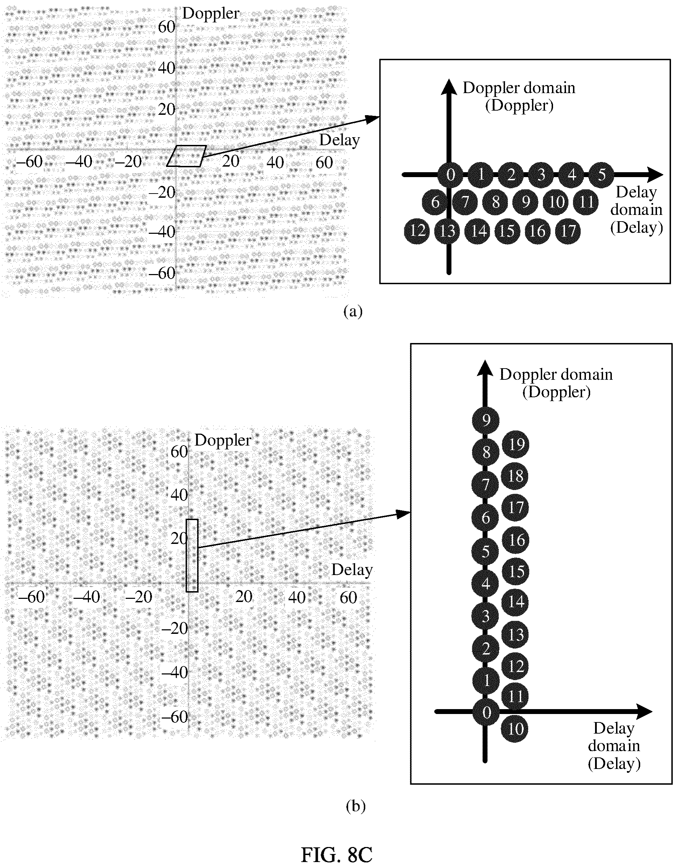

FIG. 8C is a diagram of simulation of Implementation 1 according to an embodiment of this application. (a) in FIG. 8C is a diagram of simulation of an ambiguity function of a cyclic shift sequence determined according to an LTE/NR protocol, and (b) in FIG. 8C is a diagram of simulation of ambiguity functions of cyclic shift sequences in zero ambiguity zones determined in Implementation 1 provided in this application.

When a sequence length N = 139, a root index u = 32, and a zero ambiguity zone $\Delta_T \times \Delta_F = 2 \times 3$ , if an expression of the cyclic shift sequence is represented as $s_u(n) = e^{-j\pi u(n+C_{k,l})(n+C_{k,l+1})/N}$, n = 0, 1, ..., N-1, it can be learned from (a) in FIG. 8C that 18 cyclic shift indexes $C_{k,l} \in \{0, 2, 4, 6, 8, 10, 38, 40, 42, 44, 46, 48, 76, 78, 80, 82, 84, 86\}$ may be determined according to the LTE/NR protocol, which are respectively corresponding to cyclic shift sequences respectively represented by circles with sequence numbers 0 to 17 in (a) in FIG. 8C.

It can be learned from (b) in FIG. 8C that 20 cyclic shift indexes $C_{k,l} \in \{0, 5, 11, 22, 28, 33, 44, 50, 61, 66, 72, 83, 89, 94, 100, 105, 111, 122, 128, 133\}$ may be determined in Implementation 1 provided in this application.

For delay domain indexes and Doppler domain indexes $\langle \tau_{k,l}, v_{k,l} \rangle \in$

$$\left\{ \begin{matrix} \langle 0,0 \rangle, \langle 0,3 \rangle, \langle 0,6 \rangle, \langle 0,9 \rangle, \langle 0,12 \rangle, \langle 0,15 \rangle, \langle 0,18 \rangle, \langle 0,21 \rangle, \langle 0,24 \rangle, \langle 0,27 \rangle, \langle 2,-2 \rangle, \langle 2,1 \rangle, \\ \langle 2,4 \rangle, \langle 2,7 \rangle, \langle 2,10 \rangle, \langle 2,13 \rangle, \langle 2,16 \rangle, \langle 2,19 \rangle, \langle 2,22 \rangle, \langle 2,25 \rangle \end{matrix} \right\}$$ included in the 20 cyclic shift indexes, cyclic shift sequences determined based on the 20 cyclic shift indexes are respectively corresponding to cyclic shift sequences respectively represented by circles with sequence numbers 0 to 19 in (b) in FIG. 8C.

It can be learned that, when the sequence length $N$ = 139, the root index $u$ = 32, and the zero ambiguity zone $\Delta_T \times \Delta_F = 2 \times 3$ , more available cyclic shift sequences can be determined in this embodiment of this application compared with those determined according to the LTE/NR protocol.

[Implementation 2]

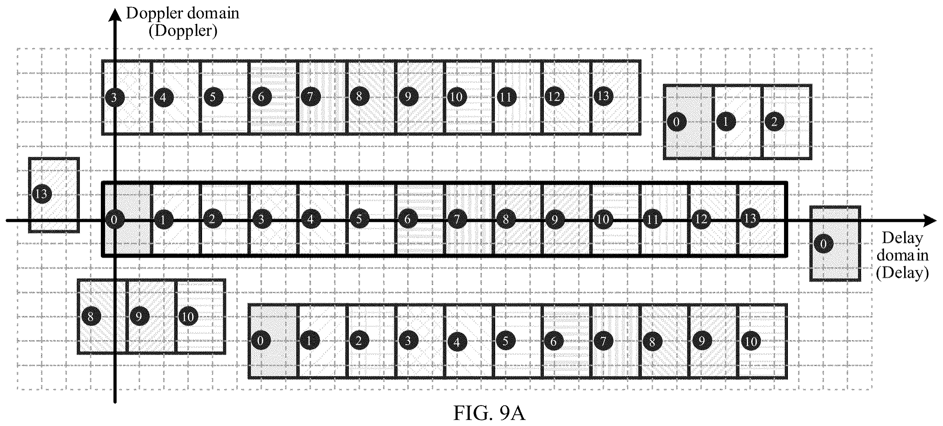

FIG. 9A is another diagram of determining cyclic shift sequences in ascending order of delays according to an embodiment of this application. When a sequence length N = 139, a root index u = 24, and a zero ambiguity zone $\Delta_T \times \Delta_F = 2 \times 3$, a first group of indexes determined in ascending order of delays may be obtained according to the formula (2.3). Expressions of a delay index $\tau_{k,l}$ and a Doppler domain index $v_{k,l}$ are as follows:

$$\begin{cases} \tau_{k,l} = k\Delta_T - l \cdot (\bar{\tau}_T \bmod \Delta_T) = 2k - l \\ v_{k,l} = \mathrm{sgn}(\bar{v}_T - N/2) \cdot l\Delta_F = 3l \end{cases}$$

A value range of a first parameter *k* and a second parameter *l* is

$$\left\{0 \le k < \lfloor \bar{\tau}_\mathrm{T}/\Delta_\mathrm{T} \rfloor, 0 \le l < \bar{l}_\mathrm{T} \right\} \cup \left\{0 \le k < \bar{k}_\mathrm{T}, l = \bar{l}_\mathrm{T} \right\}$$ . Delay constraint coordinates $\langle \bar{\tau}_\mathrm{T}, \bar{v}_\mathrm{T} \rangle = \langle 29,$

138$\rangle$ may be obtained according to the formula (2.4). Therefore, a first quantity $\lfloor \bar{\tau}_\mathrm{T}/\Delta_\mathrm{T} \rfloor$ of cyclic shifts is 14.

It can be learned from FIG. 9A that 14 cyclic shift sequences may be obtained by performing cyclic shifts on a root sequence in delay domain. The 14 cyclic shift sequences are sequences respectively corresponding to circles with sequence numbers 0, 1, 2, 3, and 4 to 13. Inverse delay constraint coordinates $\langle \bar{\bar{\tau}}_\mathrm{T}, \bar{v}_\mathrm{T} \rangle = \langle 81, 2 \rangle$ may be obtained according to the formula (2.8). A Doppler spacing $\bar{d}_\mathrm{T} = 3$ may be obtained according to the formula (2.7). A quantity of complete cyclic shifts in Doppler domain: $\bar{l}_\mathrm{T} = 1$, may be obtained according to the formula (2.5). Therefore, there is one Doppler domain complete sequence. A quantity of residual cyclic shifts in delay domain: $\bar{k}_\mathrm{T} = 0$, may be obtained according to the formula (2.6). Therefore, there is no delay domain residual cyclic shift sequence.

In conclusion, the value range of the first parameter *k* and the second parameter *l* is {0 ≤ *k* < 14, 0 ≤ *l* < 1}∪{k ∈ Ø, l = 1}. It can be learned from FIG. 9A that the first group of indexes supports a total of $\bar{l}_\mathrm{T} \cdot \lfloor \bar{\tau}_\mathrm{T}/\Delta_\mathrm{T} \rfloor + \bar{k}_\mathrm{T} = 14$ cyclic shift sequences, and the 14 cyclic shift sequences are cyclic shift sequences respectively corresponding to circles 0 to 13.

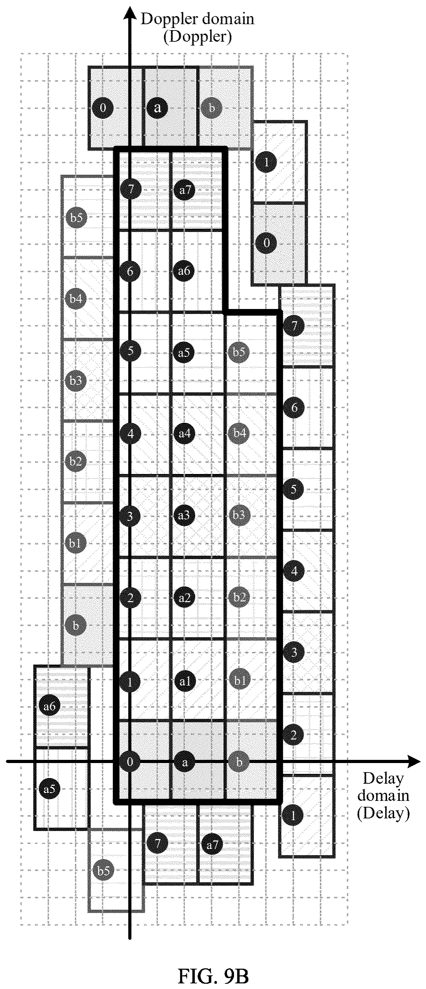

FIG. 9B is another diagram of determining cyclic shift sequences in ascending order of Doppler according to an embodiment of this application. When a sequence length N = 139, a root index u = 24, and a zero ambiguity zone $\Delta_\mathrm{T} \times \Delta_\mathrm{F} = 2 \times 3$, a second group of indexes determined in ascending order of Doppler may be obtained according to the formula (2.9). Expressions of a delay index $\tau_{k,l}$ and a Doppler domain index $v_{k,l}$ are as follows:

$$\begin{cases} \tau_{k,l} = \mathrm{sgn}(\bar{\tau}_\mathrm{F} - N/2) \cdot k\Delta_\mathrm{T} = 2k \\ v_{k,l} = l\Delta_\mathrm{F} - k \cdot (\bar{v}_\mathrm{F} \bmod \Delta_\mathrm{F}) = 3l \end{cases}$$

A value range of a first parameter *k* and a second parameter *l* is

$$\left\{0 \le k < \bar{k}_\mathrm{F}, 0 \le l < \lfloor \bar{v}_\mathrm{F}/\Delta_\mathrm{F} \rfloor \right\} \cup \left\{k = \bar{k}_\mathrm{F}, 0 \le l < \bar{l}_\mathrm{F} \right\}$$ . Doppler constraint coordinates $\langle \bar{\tau}_\mathrm{F}, \bar{v}_\mathrm{F} \rangle = \langle 138,$

24$\rangle$ may be obtained according to the formula (2.10). Therefore, a second quantity $\lfloor \bar{v}_\mathrm{F}/\Delta_\mathrm{F} \rfloor$ of cyclic shifts is 8.

It can be learned from FIG. 9B that eight cyclic shift sequences may be obtained by performing cyclic shifts on a root sequence in Doppler domain. The eight cyclic shift sequences are sequences respectively corresponding to circles with sequence numbers 0, 1, 2, 3, 4, 5, 6, and 7. Inverse Doppler constraint coordinates $\langle \bar{\bar{\tau}}_\mathrm{F}, \bar{v}_\mathrm{F} \rangle = \langle 1, 115 \rangle$ may be obtained according to the formula (2.14). A delay spacing $\bar{d}_\mathrm{F} = 5$ may be obtained according to the formula (2.13). A quantity of complete cyclic shifts in delay domain: $\bar{k}_\mathrm{F} = 2$, may be obtained according to the formula (2.11). Therefore, there are two delay domain complete sequences. A quantity of residual cyclic shifts in Doppler domain: $\bar{l}_\mathrm{F} = 6$, may be obtained according to the formula (2.12). Therefore, there are six delay domain residual cyclic shift sequences.

In conclusion, the value range of the first parameter *k* and the second parameter *l* is {0 ≤ *k* < 2, 0 ≤ *l* < 8}∪{k = 2, 0 ≤ *l* < 6}. It can be learned from FIG. 9B that the second group of indexes supports a total of $\bar{k}_\mathrm{F} \cdot \lfloor \bar{v}_\mathrm{F}/\Delta_\mathrm{F} \rfloor + \bar{l}_\mathrm{F} = 22$ cyclic shift sequences, and the 22 cyclic shift sequences are cyclic shift sequences corresponding to circles 0 to 7, cyclic shift sequences corresponding to circles a to a7, and cyclic shift sequences corresponding to circles b to b5.

Therefore, the quantity (14) of cyclic shifts determined based on the first group of indexes (in ascending order of delays) is less than the quantity (22) of cyclic shifts determined based on the second group of indexes (in ascending order of Doppler). Therefore, for the root sequence (u = 24), the cyclic shift sequence may be determined based on the second group of indexes (in ascending order of Doppler).

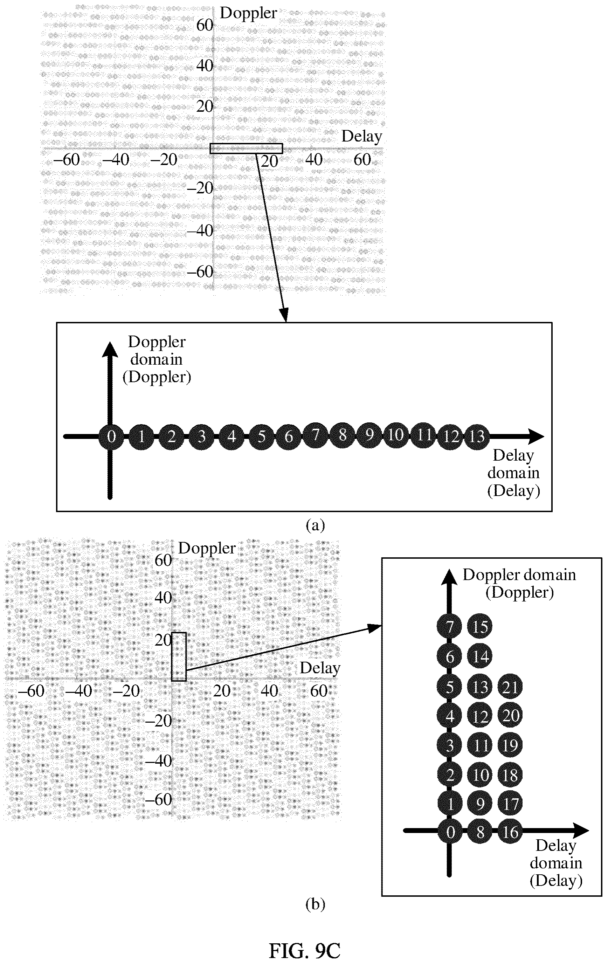

FIG. 9C is a diagram of simulation of Implementation 2 according to an embodiment of this application. (a) in FIG. 9C is a diagram of simulation of an ambiguity function of a cyclic shift sequence determined according to an LTE/NR protocol, and (b) in FIG. 9C is a diagram of simulation of ambiguity functions of cyclic shift sequences in zero ambiguity zones determined in Implementation 2 provided in this application.

When a sequence length N = 139, a root index u = 24, and a zero ambiguity zone $\Delta_\mathrm{T} \times \Delta_\mathrm{F} = 2 \times 3$, if an expression of the cyclic shift sequence is represented as $s_u(n) = e^{-j\pi u(n+C_{k,l})(n+C_{k,l+1})/N}$, n = 0, 1, ..., N-1, it can be learned from (a) in FIG. 9C that 14 cyclic shift indexes $C_{k,l} \in$ {0, 2, 4, 6, 8, 10, 12, 14, 16, 18, 20, 22, 24, 26} may be determined according to the LTE/NR protocol, which are respectively corresponding to cyclic shift sequences respectively represented by circles with sequence numbers 0 to 13 in (a) in FIG. 9C.

It can be learned from (b) in FIG. 9C that 22 cyclic shift indexes $C_{k,l} \in$ {0, 2, 4, 18, 20, 22, 35, 37, 39, 53, 55, 70, 72, 74, 87, 89, 91, 105, 107, 122, 124, 126} may be determined in this embodiment of this application.

For delay domain indexes and Doppler domain indexes $\langle \tau_{k,l}, v_{k,l} \rangle \in$

$$\left\{ \begin{array}{l} \langle 0,0 \rangle, \langle 0,3 \rangle, \langle 0,6 \rangle, \langle 0,9 \rangle, \langle 0,12 \rangle, \langle 0,15 \rangle, \langle 0,18 \rangle, \langle 0,21 \rangle, \langle 2,0 \rangle, \langle 2,3 \rangle, \langle 2,6 \rangle, \langle 2,9 \rangle, \langle 2,12 \rangle, \\ \langle 2,15 \rangle, \langle 2,18 \rangle, \langle 2,21 \rangle, \langle 4,0 \rangle, \langle 4,3 \rangle, \langle 4,6 \rangle, \langle 4,9 \rangle, \langle 4,12 \rangle, \langle 4,15 \rangle \end{array} \right\}$$ in-

cluded in the 22 cyclic shift indexes, cyclic shift sequences determined based on the 20 cyclic shift indexes are respectively corresponding to cyclic shift sequences respectively represented by circles with sequence numbers 0 to 21 in (b) in FIG. 9C.

It can be learned that, when the sequence length $N = 139$, the root index $u = 24$, and the zero ambiguity zone $\Delta_T \times \Delta_F = 2 \times 3$, more available cyclic shift sequences can be determined in this embodiment of this application compared with those determined according to the LTE/NR protocol.

[Implementation 3]

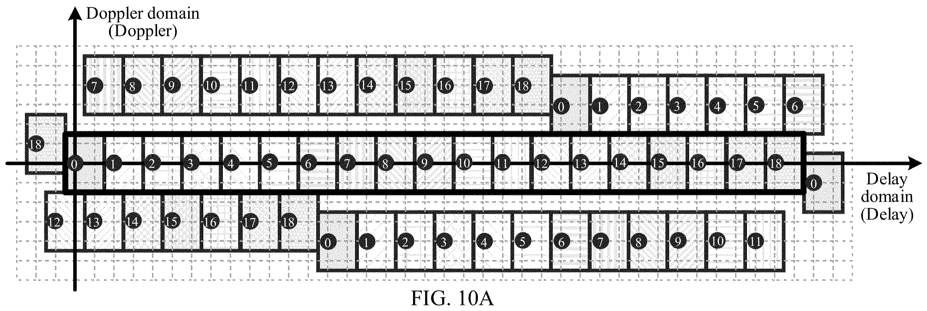

FIG. 10A is still another diagram of determining cyclic shift sequences in ascending order of delays according to an embodiment of this application. When a sequence length N = 139, a root index u = 11, and a zero ambiguity zone $\Delta_T \times \Delta_F = 2 \times 3$, a first group of indexes determined in ascending order of delays may be obtained according to the formula (2.3). Expressions of a delay index $\tau_{k,l}$ and a Doppler domain index $v_{k,l}$ are as follows:

$$\begin{cases} \tau_{k,l} = k\Delta_T - l \cdot (\bar{\tau}_T \bmod \Delta_T) = 2k \\ v_{k,l} = \mathrm{sgn}(\bar{v}_T - N/2) \cdot l\Delta_F = 3l \end{cases}$$

A value range of a first parameter $k$ and a second parameter $l$ is $\left\{ 0 \leq k < \lfloor \bar{\tau}_T / \Delta_T \rfloor, 0 \leq l < \bar{l}_T \right\} \cup \left\{ 0 \leq k < \bar{k}_T, l = \bar{l}_T \right\}$. Delay constraint coordinates $\langle \bar{\tau}_T, \bar{v}_T \rangle = \langle 38,$ 138 \rangle$ may be obtained according to the formula (2.4). Therefore, a first quantity $\lfloor \bar{\tau}_T / \Delta_T \rfloor$ of cyclic shifts is 19.

It can be learned from FIG. 10A that 19 cyclic shift sequences may be obtained by performing cyclic shifts on a root sequence in delay domain. The 19 cyclic shift sequences are sequences respectively corresponding to circles with sequence numbers 0, 1, 2, 3, and 4 to 18. Inverse delay constraint coordinates $\langle \bar{\bar{\tau}}_T, \bar{\bar{v}}_T \rangle = \langle 63, 2 \rangle$ may be obtained according to the formula (2.8). A Doppler spacing $\bar{d}_T = 2$ may be obtained according to the formula (2.7). A quantity of complete cyclic shifts in Doppler domain: $\bar{l}_T = 1$, may be obtained according to the formula (2.5). Therefore, there is one Doppler domain complete sequence. A quantity of residual cyclic shifts in delay domain: $\bar{k}_T = 0$, may be obtained according to the formula (2.6). Therefore, there is no delay domain residual cyclic shift sequence.

In conclusion, the value range of the first parameter $k$ and the second parameter $l$ is {$0 \leq k < 19, 0 \leq l < 1$} $\cup$ {$k \in \emptyset, l = 1$}. It can be learned from FIG. 10A that the first group of indexes supports a total of $\bar{l}_T \cdot \lfloor \bar{\tau}_T / \Delta_T \rfloor + \bar{k}_T = 19$ cyclic shift sequences, and the 19 cyclic shift sequences are cyclic shift sequences respectively corresponding to circles 0 to 19.

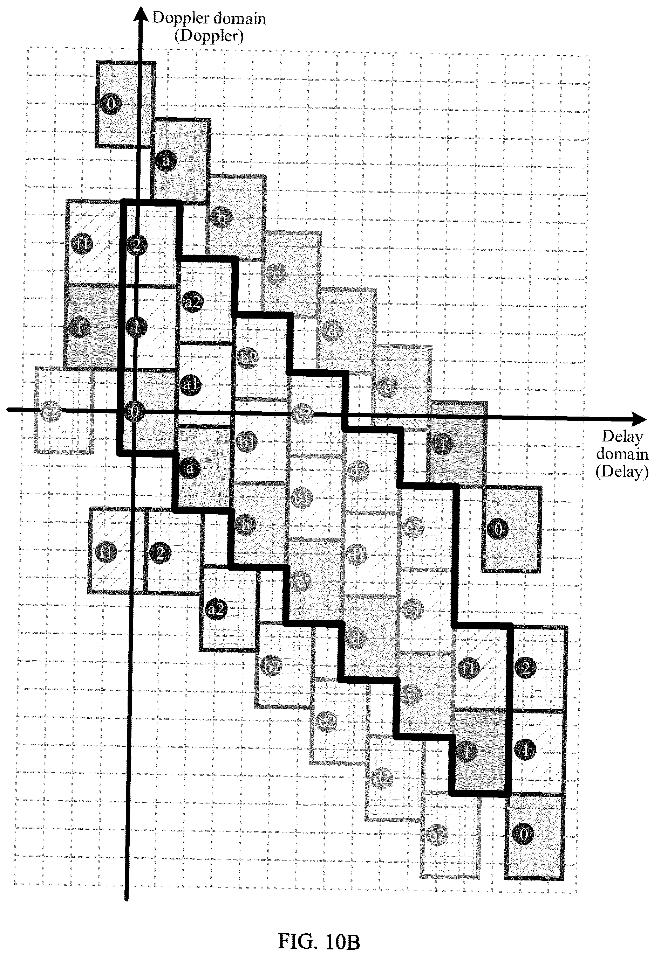

FIG. 10B is still another diagram of determining cyclic shift sequences in ascending order of Doppler according to an embodiment of this application. When a sequence length N = 139, a root index u = 11, and a zero ambiguity zone $\Delta_T \times \Delta_F = 2 \times 3$, a second group of indexes determined in ascending order of Doppler may be obtained according to the formula (2.9). Expressions of a delay index $\tau_{k,l}$ and a Doppler domain index $v_{k,l}$ are as follows:

$$\begin{cases} \tau_{k,l} = \mathrm{sgn}(\bar{\tau}_F - N/2) \cdot k\Delta_T = 2k \\ v_{k,l} = l\Delta_F - k \cdot (\bar{v}_F \bmod \Delta_F) = 3l - 2k \end{cases}$$

A value range of a first parameter $k$ and a second parameter $l$ is $\left\{ 0 \leq k < \bar{k}_F, 0 \leq l < \lfloor \bar{v}_F / \Delta_F \rfloor \right\} \cup \left\{ k = \bar{k}_F, 0 \leq l < \bar{l}_F \right\}$. Doppler constraint coordinates $\langle \bar{\tau}_F, \bar{v}_F \rangle = \langle 138,$ 11 \rangle$ may be obtained according to the formula (2.10). Therefore, a second quantity $\lfloor \bar{v}_F / \Delta_F \rfloor$ of cyclic shifts is 3.

It can be learned from FIG. 10B that three cyclic shift sequences may be obtained by performing cyclic shifts on a root sequence in Doppler domain. The three cyclic shift sequences are sequences respectively corresponding to circles with sequence numbers 0, 1, and 2. Inverse Doppler constraint coordinates $\langle \bar{\bar{\tau}}_F, \bar{\bar{v}}_F \rangle = \langle 1, 128 \rangle$ may be obtained according to the formula (2.14). A delay spacing $\bar{d}_F = 13$ may be obtained according to the formula (2.13). A quantity of complete cyclic shifts in delay domain: $\bar{k}_F = 6$, may be obtained according to the formula (2.11). Therefore, there are six delay domain complete sequences. A quantity of residual cyclic shifts in Doppler domain: $\bar{l}_F = 2$, may be obtained according to the formula (2.12). Therefore, there are two delay domain residual cyclic shift sequences.

In conclusion, a value range of the first parameter $k$ and the second parameter $l$ is $\{0 \leq k < 6, 0 \leq l < 3\} \cup \{k = 6, 0 \leq l < 2\}$. It can be learned from FIG. 10B that the second group of indexes supports a total of $\bar{k}_F \cdot \lfloor \bar{v}_F / \Delta_F \rfloor + \bar{l}_F = 20$ cyclic shift sequences. The 20 cyclic shift sequences are cyclic shift sequences corresponding to circles 0 to 2, cyclic shift sequences corresponding to circles a to a2, cyclic shift sequences corresponding to circles b to b2, cyclic shift sequences corresponding to circles c to c2, cyclic shift sequences corresponding to circles d to d2, cyclic shift sequences corresponding to circles e to e2, and cyclic shift sequences corresponding to circles f and f1.

In conclusion, the quantity (19) of cyclic shifts determined based on the first group of indexes (in ascending order of delays) is less than the quantity (20) of cyclic shifts determined based on the second group of indexes (in ascending order of Doppler). Therefore, for the root sequence ($u = 11$), the cyclic shift sequence may be determined based on the second group of indexes (in ascending order of Doppler).

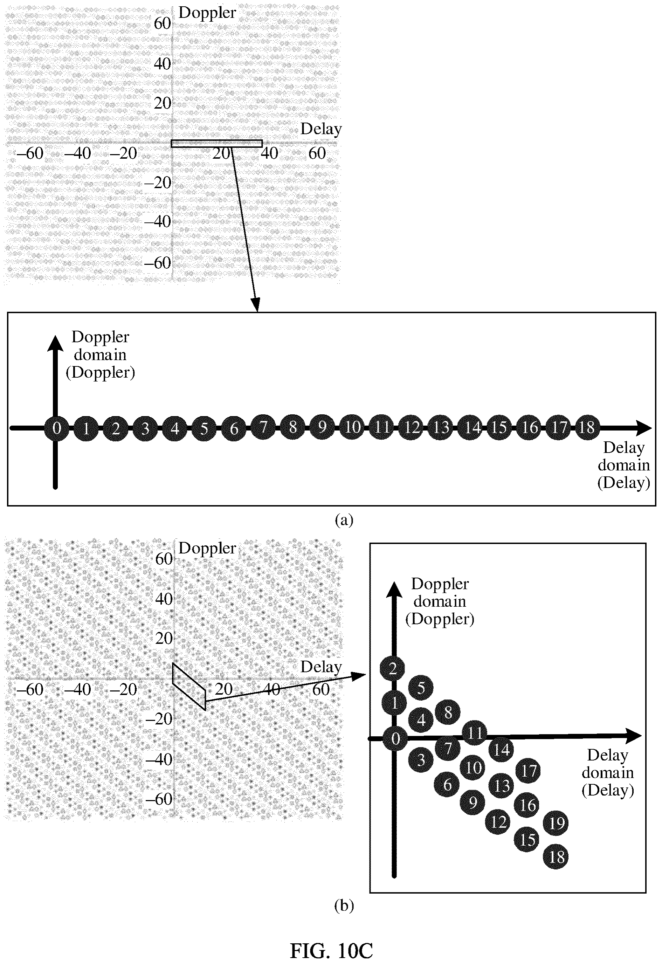

FIG. 10C is a diagram of simulation of Implementation 3 according to an embodiment of this application. (a) in FIG. 10C is a diagram of simulation of an ambiguity function of a cyclic shift sequence determined according to an LTE/NR protocol, and (b) in FIG. 10C is a diagram of simulation of ambiguity functions of cyclic shift sequences in zero ambiguity zones determined in Implementation 3 provided in this application.

When a sequence length $N = 139$, a root index $u = 11$, and a zero ambiguity zone $\Delta_T \times \Delta_F = 2 \times 3$, if an expression of the cyclic shift sequence is represented as $s_u(n) = e^{-j\pi u(n+C_{k,l})(n+C_{k,l+1})/N}$, $n = 0, 1, ..., N-1$, it can be learned from (a) in FIG. 10C that 19 cyclic shift indexes $C_{k,l} \in \{0, 2, 4, 6, 8, 10, 12, 14, 16, 18, 20, 22, 24, 26, 28, 30, 32, 34, 36\}$ may be determined according to the LTE/NR protocol, which are respectively corresponding to cyclic shift sequences respectively represented by circles with sequence numbers 0 to 18 in (a) in FIG. 10C.

It can be learned from (b) in FIG. 10C that 20 cyclic shift indexes $C_{k,l} \in \{0, 6, 15, 22, 31, 40, 47, 56, 65, 71, 80, 87, 89, 96, 105, 112, 114, 121, 130, 136\}$ may be determined in this embodiment of this application. For delay domain indexes and Doppler domain indexes $\langle \tau_{k,l}, v_{k,l} \rangle \in$

$$\left\{ \begin{array}{c} \langle 0,0 \rangle, \langle 0,3 \rangle, \langle 0,6 \rangle, \langle 2,-2 \rangle, \langle 2,1 \rangle, \langle 2,4 \rangle, \langle 4,-4 \rangle, \langle 4,-1 \rangle, \langle 4,2 \rangle, \langle 6,-6 \rangle, \langle 6,-3 \rangle, \langle 6,0 \rangle, \langle 8,-8 \rangle, \\ \langle 8,-5 \rangle, \langle 8,-2 \rangle, \langle 10,-10 \rangle, \langle 10,-7 \rangle, \langle 10,-4 \rangle, \langle 12,-12 \rangle, \langle 12,-9 \rangle \end{array} \right\}$$

included in the 20 cyclic shift indexes, cyclic shift sequences determined based on the 20 cyclic shift indexes are respectively corresponding to cyclic shift sequences respectively represented by circles with sequence numbers 0 to 19 in (b) in FIG. 10C.

When the sequence length $N = 139$, the root index $u = 11$, and the zero ambiguity zone $\Delta_T \times \Delta_F = 2 \times 3$, more available cyclic shift sequences can be determined in this embodiment of this application compared with those determined according to the LTE/NR protocol.

[Implementation 4]

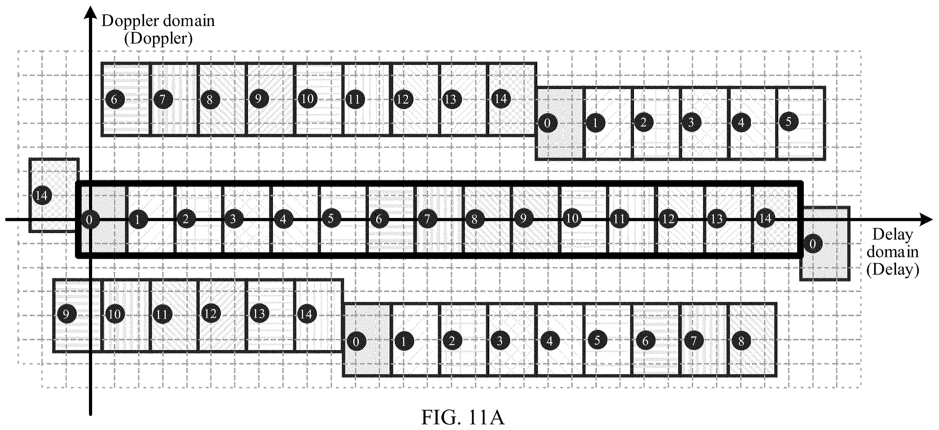

FIG. 11A is still another diagram of determining cyclic shift sequences in ascending order of delays according to an embodiment of this application. When a sequence length N = 139, a root index u = 51, and a zero ambiguity zone $\Delta_T \times \Delta_F = 2 \times 3$, a first group of indexes determined in ascending order of delays may be obtained according to the formula (2.3). Expressions of a delay index $\tau_{k,l}$ and a Doppler domain index $v_{k,l}$ are as follows:

$$\begin{cases} \tau_{k,l} = k\Delta_T - l \cdot (\bar{\tau}_T \bmod \Delta_T) = 2k \\ v_{k,l} = \text{sgn}(\bar{v}_T - N/2) \cdot l\Delta_F = 3l \end{cases}$$

A value range of a first parameter $k$ and a second parameter $l$ is $\left\{ 0 \leq k < \lfloor \bar{\tau}_T / \Delta_T \rfloor, 0 \leq l < \bar{l}_T \right\} \cup \left\{ 0 \leq k < \bar{k}_T, l = \bar{l}_T \right\}$. Delay constraint coordinates $\langle \bar{\tau}_T, \bar{v}_T \rangle = \langle 30, 138 \rangle$ may be obtained according to the formula (2.4). Therefore, a first quantity $\lfloor \bar{\tau}_T / \Delta_T \rfloor$ of cyclic shifts is 15.

It can be learned from FIG. 11A that 15 cyclic shift sequences may be obtained by performing cyclic shifts on a root sequence in delay domain. The 15 cyclic shift sequences are sequences respectively corresponding to circles with sequence numbers 0, 1, 2, 3, and 4 to 14. Inverse delay constraint coordinates $\langle \bar{\bar{\tau}}_T, \bar{\bar{v}}_T \rangle = \langle 79, 2 \rangle$ may be obtained according to the formula (2.8). A Doppler spacing $\bar{d}_T = 3$ may be obtained according to the formula (2.7). A quantity of complete cyclic shifts in Doppler domain: $\bar{l}_T = 1$, may be obtained according to the formula (2.5). Therefore, there is one Doppler domain complete sequence. A quantity of residual cyclic shifts in delay domain: $\bar{k}_T = 0$, may be obtained according to the formula (2.6). Therefore, there is no delay domain residual cyclic shift sequence.

In conclusion, the value range of the first parameter $k$ and the second parameter $l$ is $\{0 \leq k < 15, 0 \leq l < 1\} \cup \{k \in \emptyset, l =$

1}. It can be learned from FIG. 11A that the first group of indexes supports a total of $\bar{l}_T \cdot \lfloor \bar{\tau}_T/\Delta_T \rfloor + \bar{k}_T = 15$ cyclic shift sequences, and the 15 cyclic shift sequences are cyclic shift sequences respectively corresponding to circles 0 to 15.

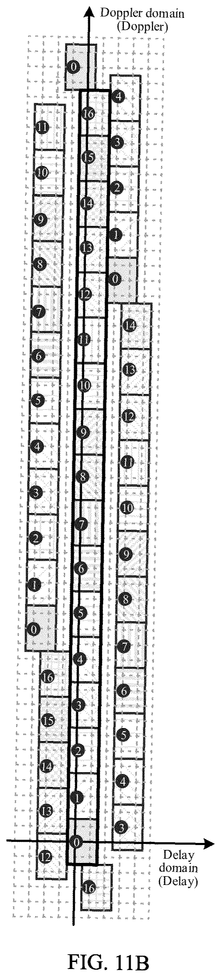

FIG. 11B is still another diagram of determining cyclic shift sequences in ascending order of Doppler according to an embodiment of this application. When a sequence length N = 139, a root index u = 51, and a zero ambiguity zone $\Delta_T \times \Delta_F = 2 \times 3$, a second group of indexes determined in ascending order of Doppler may be obtained according to the formula (2.9). Expressions of a delay index $\tau_{k,l}$ and a Doppler domain index $v_{k,l}$ are as follows:

$$
\begin{cases}
\tau_{k,l} = \mathrm{sgn}(\bar{\tau}_F - N/2) \cdot k\Delta_T = 2k \\
v_{k,l} = l\Delta_F - k \cdot (\bar{v}_F \bmod \Delta_F) = 3l
\end{cases}
$$

A value range of a first parameter $k$ and a second parameter $l$ is $\left\{ 0 \leq k < \bar{k}_F, 0 \leq l < \lfloor \bar{v}_F/\Delta_F \rfloor \right\} \cup \left\{ k = \bar{k}_F, 0 \leq l < \bar{l}_F \right\}$. Doppler constraint coordinates $\langle \bar{\tau}_F, \bar{v}_F \rangle = (138, 51)$ may be obtained according to the formula (2.10). Therefore, a second quantity $\lfloor \bar{v}_F/\Delta_F \rfloor$ of cyclic shifts is 17.

It can be learned from FIG. 11B that 17 cyclic shift sequences may be obtained by performing cyclic shifts on a root sequence in Doppler domain. The 17 cyclic shift sequences are sequences respectively corresponding to circles with sequence numbers 0, 1, and 2 to 16. Inverse Doppler constraint coordinates $\langle \bar{\bar{\tau}}_F, \bar{\bar{v}}_F \rangle = \langle 1, 88 \rangle$ may be obtained according to the formula (2.14). A delay spacing $\bar{d}_F = 2$ may be obtained according to the formula (2.13). A quantity of complete cyclic shifts in delay domain: $\bar{k}_F = 1$, may be obtained according to the formula (2.11). Therefore, there is one delay domain complete sequence. A quantity of residual cyclic shifts in Doppler domain: $\bar{l}_F = 0$, may be obtained according to the formula (2.12). Therefore, there is no delay domain residual cyclic shift sequence.

In conclusion, the value range of the first parameter $k$ and the second parameter $l$ is {0 ≤ $k$ < 1, 0 ≤ $l$ < 17}∪{$k$ = 1, $l$ ∈ Ø}. It can be learned from FIG. 11B that the second group of indexes supports a total of $\bar{k}_F \cdot \lfloor \bar{v}_F/\Delta_F \rfloor + \bar{l}_F = 17$ cyclic shift sequences, and the 17 cyclic shift sequences are cyclic shift sequences respectively corresponding to circles 0 to 16.

In conclusion, the quantity (15) of cyclic shifts determined based on the first group of indexes (in ascending order of delays) is less than the quantity (17) of cyclic shifts determined based on the second group of indexes (in ascending order of Doppler). Therefore, for the root sequence (u = 51), the cyclic shift sequence may be determined based on the second group of indexes (in ascending order of Doppler).

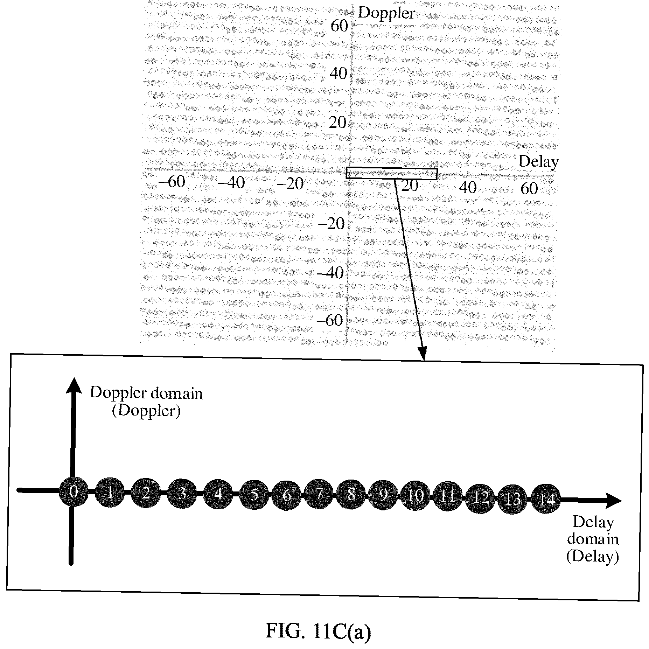

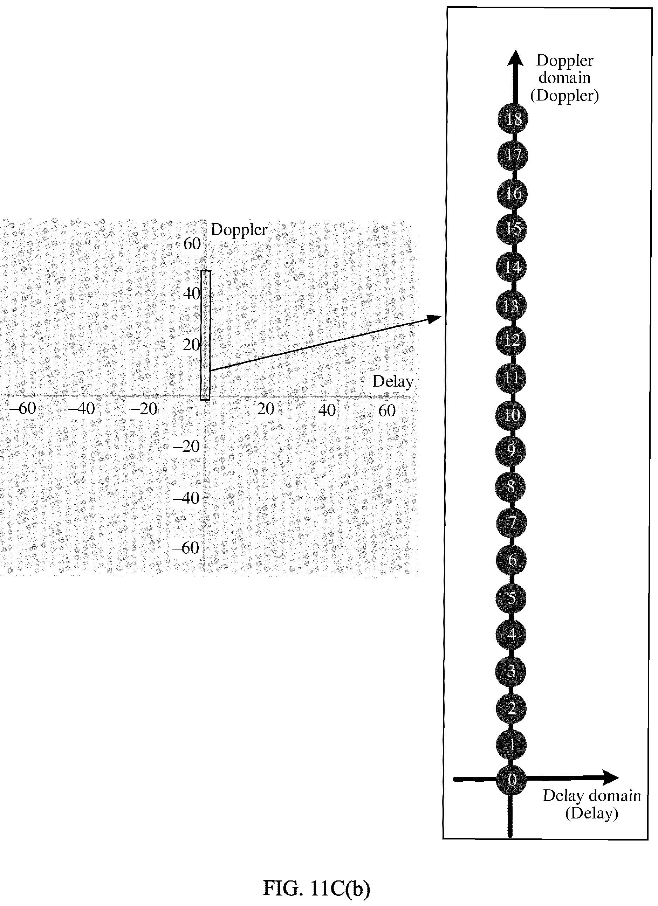

FIG. 11C(a) and FIG. 11C(b) are a diagram of simulation of Implementation 4 according to an embodiment of this application. FIG. 11C(a) is a diagram of simulation of an ambiguity function of a cyclic shift sequence determined according to an LTE/NR protocol, and FIG. 11C(b) is a diagram of simulation of ambiguity functions of cyclic shift sequences in zero ambiguity zones determined in Implementation 4 provided in this application.

When a sequence length $N$ = 139, a root index $u$ = 51, and a zero ambiguity zone $\Delta_T \times \Delta_F = 2 \times 3$, if an expression of the cyclic shift sequence is represented as $s_u(n) = e^{-j\pi u(n+C_{k,l})(n+C_{k,l+1})/N}$, n = 0, 1, ..., N-1, it can be learned from FIG. 11C(a) that 15 cyclic shift indexes $C_{k,l} \in$ {0, 2, 4, 6, 8, 10, 12, 14, 16, 18, 20, 22, 24, 26, 28} may be determined according to the LTE/NR protocol, which are respectively corresponding to cyclic shift sequences respectively represented by circles with sequence numbers 0 to 14 in FIG. 11C(a).

It can be learned from FIG. 11C(b) that 17 cyclic shift indexes $C_{k,l} \in$ {0, 9, 17, 25, 33, 41, 50, 58, 66, 74, 82, 90, 99, 107, 115, 123, 131} may be determined in this embodiment of this application. For delay domain indexes and Doppler domain indexes $\langle \tau_{k,l}, v_{k,l} \rangle \in$

$$
\left\{ \begin{array}{c}
\langle 0,0 \rangle, \langle 0,3 \rangle, \langle 0,6 \rangle, \langle 0,9 \rangle, \langle 0,12 \rangle, \langle 0,15 \rangle, \langle 0,18 \rangle, \langle 0,21 \rangle, \langle 0,24 \rangle, \langle 0,27 \rangle, \langle 0,30 \rangle, \langle 0,33 \rangle, \langle 0,36 \rangle, \\
\langle 0,39 \rangle, \langle 0,42 \rangle, \langle 0,45 \rangle, \langle 0,48 \rangle
\end{array} \right\}
$$

included in the 17 cyclic shift indexes, cyclic shift sequences determined based on the 17 cyclic shift indexes are respectively corresponding to cyclic shift sequences respectively represented by circles with sequence numbers 0 to 16 in FIG. 11C(b).

When the sequence length $N$ = 139, the root index $u$ = 51, and the zero ambiguity zone $\Delta_T \times \Delta_F = 2 \times 3$, more available cyclic shift sequences can be determined in this embodiment of this application compared with those determined according to the LTE/NR protocol.

[Implementation 5]

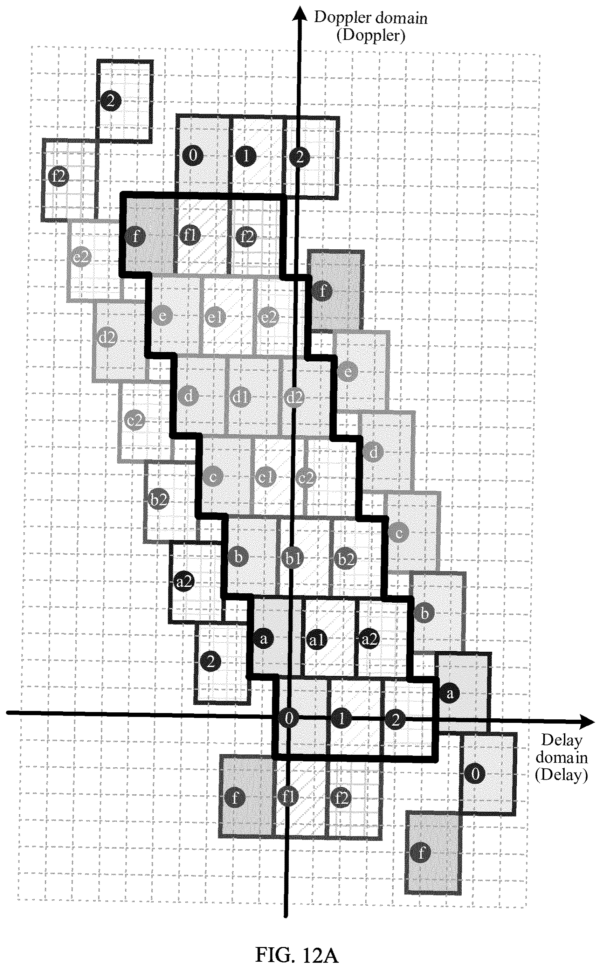

FIG. 12A is still another diagram of determining cyclic shift sequences in ascending order of delays according to an embodiment of this application. When a sequence length N = 139, a root index u = 40, and a zero ambiguity zone $\Delta_T \times$

$\Delta_F = 2 \times 3$, a first group of indexes determined in ascending order of delays may be obtained according to the formula (2.3). Expressions of a delay index $\tau_{k,l}$ and a Doppler domain index $v_{k,l}$ are as follows:

$$\begin{cases} \tau_{k,l} = k\Delta_T - l \cdot (\bar{\tau}_T \bmod \Delta_T) = 2k - l \\ v_{k,l} = \mathrm{sgn}(\bar{v}_T - N/2) \cdot l\Delta_F = 3l \end{cases}$$

A value range of a first parameter $k$ and a second parameter $l$ is $\left\{0 \le k < \lfloor \bar{\tau}_T / \Delta_T \rfloor, 0 \le l < \bar{l}_T \right\} \cup \left\{0 \le k < \bar{k}_T, l = \bar{l}_T \right\}$. Delay constraint coordinates $\langle \bar{\tau}_T, \bar{v}_T \rangle = (7, 137)$ may be obtained according to the formula (2.4). Therefore, a first quantity $\lfloor \bar{\tau}_T / \Delta_T \rfloor$ of cyclic shifts is 3. It can be learned from FIG. 12A that three cyclic shift sequences may be obtained by performing cyclic shifts on a root sequence in delay domain. The three cyclic shift sequences are sequences respectively corresponding to circles with sequence numbers 0, 1, and 2. Inverse delay constraint coordinates $\langle \bar{\bar{\tau}}_T, \bar{\bar{v}}_T \rangle = \langle 66, 1 \rangle$ may be obtained according to the formula (2.8). A Doppler spacing $\bar{d}_T = 20$ may be obtained according to the formula (2.7). A quantity of complete cyclic shifts in Doppler domain: $\bar{l}_T = 7$, may be obtained according to the formula (2.5). Therefore, there are seven Doppler domain complete sequences. A quantity of residual cyclic shifts in delay domain: $\bar{k}_T = 0$, may be obtained according to the formula (2.6). Therefore, there is no delay domain residual cyclic shift sequence.

In conclusion, a value range of the first parameter $k$ and the second parameter $l$ is $\{0 \le k < 3, 0 \le l < 7\} \cup \{k \in \emptyset, l = 7\}$. It can be learned from FIG. 12A that the first group of indexes supports a total of $\bar{l}_T \cdot \lfloor \bar{\tau}_T / \Delta_T \rfloor + \bar{k}_T = 21$ cyclic shift sequences. The 21 cyclic shift sequences are cyclic shift sequences corresponding to circles 0 to 3, cyclic shift sequences corresponding to circles a to a3, cyclic shift sequences corresponding to circles b to b3, cyclic shift sequences corresponding to circles c to c3, cyclic shift sequences corresponding to circles d to d3, cyclic shift sequences corresponding to circles e to e3, and cyclic shift sequences corresponding to circles f to f3.

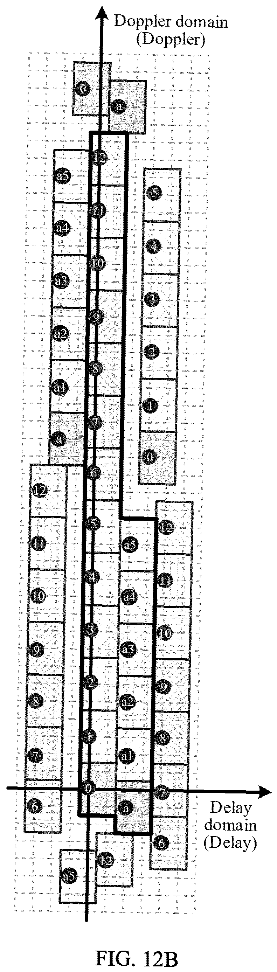

FIG. 12B is still another diagram of determining cyclic shift sequences in ascending order of Doppler according to an embodiment of this application. When a sequence length N = 139, a root index u = 40, and a zero ambiguity zone $\Delta_T \times \Delta_F = 2 \times 3$, a second group of indexes determined in ascending order of Doppler may be obtained according to the formula (2.9). Expressions of a delay index $\tau_{k,l}$ and a Doppler domain index $v_{k,l}$ are as follows:

$$\begin{cases} \tau_{k,l} = \mathrm{sgn}(\bar{\tau}_F - N/2) \cdot k\Delta_T = 2k \\ v_{k,l} = l\Delta_F - k \cdot (\bar{v}_F \bmod \Delta_F) = 3l - k \end{cases}$$

A value range of a first parameter $k$ and a second parameter $l$ is $\left\{0 \le k < \bar{k}_F, 0 \le l < \lfloor \bar{v}_F / \Delta_F \rfloor \right\} \cup \left\{k = \bar{k}_F, 0 \le l < \bar{l}_F \right\}$. Doppler constraint coordinates $\langle \bar{\tau}_F, \bar{v}_F \rangle = (138, 40)$ may be obtained according to the formula (2.10). Therefore, a second quantity $\lfloor \bar{v}_F / \Delta_F \rfloor$ of cyclic shifts is 13. It can be learned from FIG. 12B that 13 cyclic shift sequences may be obtained by performing cyclic shifts on a root sequence in Doppler domain. The 13 cyclic shift sequences are sequences respectively corresponding to circles with sequence numbers 0, 1, 2, 3, and 4 to 12. Inverse Doppler constraint coordinates $\langle \bar{\bar{\tau}}_F, \bar{\bar{v}}_F \rangle = \langle 1, 99 \rangle$ may be obtained according to the formula (2.14). A delay spacing $\bar{d}_F = 3$ may be obtained according to the formula (2.13). A quantity of complete cyclic shifts in delay domain: $\bar{k}_F = 1$, may be obtained according to the formula (2.11). Therefore, there is one delay domain complete sequence. A quantity of residual cyclic shifts in Doppler domain: $\bar{l}_F = 6$, may be obtained according to the formula (2.12). Therefore, there are six delay domain residual cyclic shift sequences.

In conclusion, the value range of the first parameter $k$ and the second parameter $l$ is $\{0 \le k < 1, 0 \le l < 13\} \cup \{k = 1, 0 \le l < 6\}$. It can be learned from FIG. 12B that the second group of indexes supports a total of $\bar{k}_F \cdot \lfloor \bar{v}_F / \Delta_F \rfloor + \bar{l}_F = 19$ cyclic shift sequences: cyclic shift sequences corresponding to circles 0 to 12 and cyclic shift sequences corresponding to circles a to a5.

In conclusion, the quantity (21) of cyclic shifts determined based on the first group of indexes (in ascending order of delays) is greater than the quantity (19) of cyclic shifts determined based on the second group of indexes (in ascending order of Doppler). Therefore, for the root sequence (u = 40), the cyclic shift sequence may be determined based on the first group of indexes (in an order of delays).

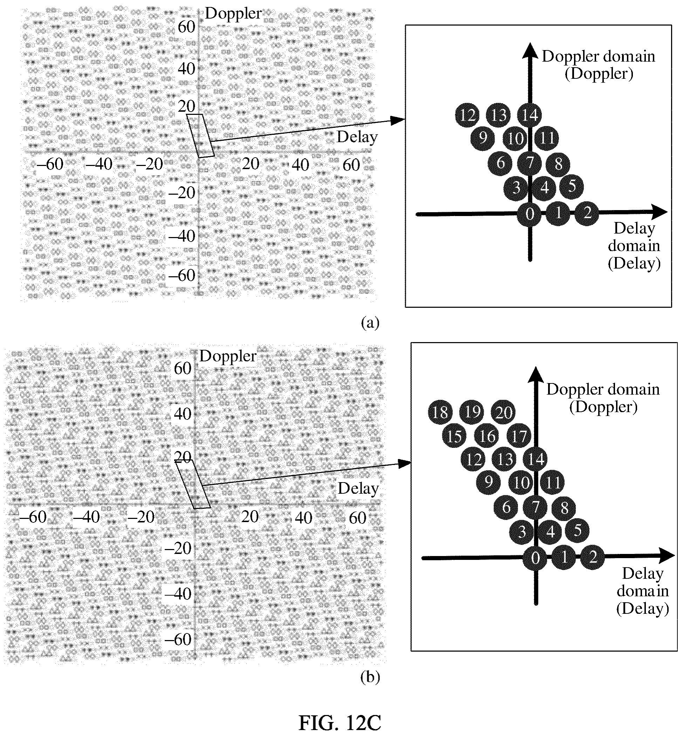

FIG. 12C is a diagram of simulation of Implementation 5 according to an embodiment of this application. (a) in FIG. 12C is a diagram of simulation of an ambiguity function of a cyclic shift sequence determined according to an LTE/NR protocol, and (b) in FIG. 12C is a diagram of simulation of ambiguity functions of cyclic shift sequences in zero ambiguity zones determined in Implementation 5 provided in this application.

When a sequence length $N = 139$, a root index $u = 40$, and an ambiguity zone $\Delta_T \times \Delta_F = 2 \times 3$, if an expression of the cyclic shift sequence is represented as $s_u(n) = e^{-j\pi u(n+C_{k,l})(n+C_{k,l+1})/N}$, $n = 0, 1, ..., N - 1$, it can be learned from (a) in FIG. 12C that 15 cyclic shift indexes $C_{k,l} \in \{0, 2, 4, 13, 15, 17, 26, 28, 30, 39, 41, 43, 52, 54, 56\}$ may be determined according to the LTE/NR protocol, which are respectively corresponding to cyclic shift sequences respectively represented by circles with sequence numbers 0 to 14 in (a) in FIG. 12C.

It can be learned from (b) in FIG. 12C that 21 cyclic shift indexes $C_{k,l} \in \{0, 2, 4, 19, 21, 23, 38, 40, 42, 57, 59, 61, 79, 81, 83, 98, 100, 102, 117, 119, 121\}$ may be determined in this embodiment of this application. For delay domain indexes and Doppler domain indexes $\langle \tau_{k,l}, \nu_{k,l} \rangle \in$

$$\left\{ \begin{matrix} \langle 0, 0 \rangle, \langle 2, 0 \rangle, \langle 4, 0 \rangle, \langle -1, 3 \rangle, \langle 1, 3 \rangle, \langle 3, 3 \rangle, \langle -2, 6 \rangle, \langle 0, 6 \rangle, \langle 2, 6 \rangle, \langle -3, 9 \rangle, \langle -1, 9 \rangle, \langle 1, 9 \rangle, \\ \langle -4, 12 \rangle, \langle -2, 12 \rangle, \langle 0, 12 \rangle, \langle -5, 15 \rangle, \langle -3, 15 \rangle, \langle -1, 15 \rangle, \langle -6, 18 \rangle, \langle -4, 18 \rangle, \langle -2, 18 \rangle \end{matrix} \right\}$$ included in the 21 cyclic shift indexes, cyclic shift sequences determined based on the 21 cyclic shift indexes are respectively corresponding to cyclic shift sequences respectively represented by circles with sequence numbers 0 to 20 in (b) in FIG. 12C.

When the sequence length $N = 139$, the root index $u = 40$, and the zero ambiguity zone $\Delta_T \times \Delta_F = 2 \times 3$, more available cyclic shift sequences can be determined in this embodiment of this application compared with those determined according to the LTE/NR protocol.

The foregoing describes in detail the method in embodiments of this application. The following provides apparatuses in embodiments of this application.

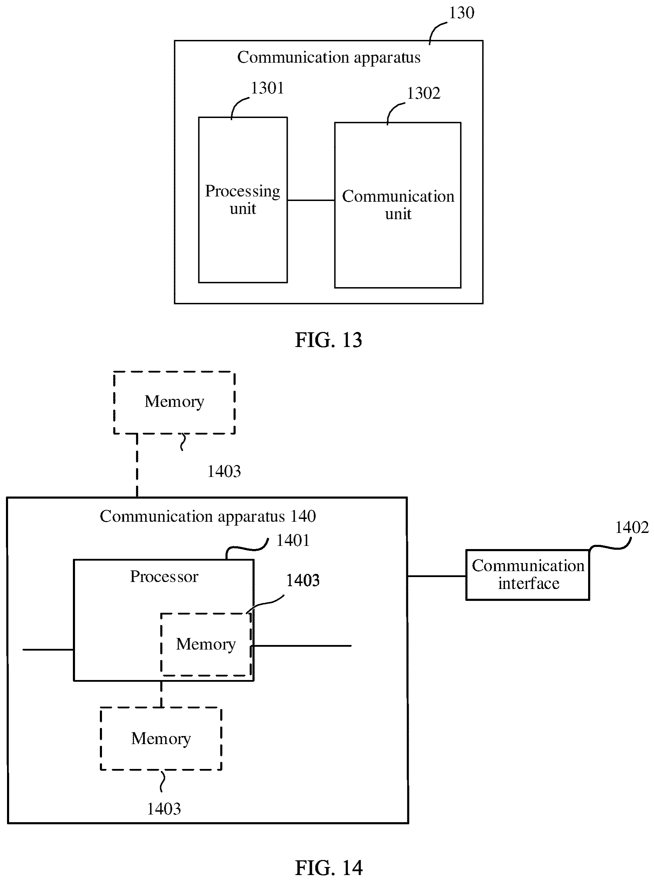

An embodiment of this application provides a communication apparatus. The communication apparatus may include modules or units that are in one-to-one correspondence with the methods/operations/steps/actions described in the foregoing method embodiments. The module or unit may be a hardware circuit, software, or a combination of the hardware circuit and the software. For example, FIG. 13 is a diagram of a structure of a communication apparatus 130 according to an embodiment of this application. The communication apparatus 130 may include a processing unit 1301 and a communication unit 1302. The communication apparatus 130 is configured to implement the foregoing communication method, for example, the communication method in the embodiment shown in FIG. 5A.

Optionally, the communication apparatus 130 may be the first apparatus or the second apparatus in the foregoing embodiments, for example, the first apparatus or the second apparatus in the embodiment shown in FIG. 5A.

In a possible implementation, the communication apparatus 130 is the first apparatus or a network apparatus in the foregoing embodiments,

the processing unit 1301 is configured to: obtain a cyclic shift sequence, where the cyclic shift sequence is obtained by performing a cyclic shift on a root sequence based on a cyclic shift index, the cyclic shift index includes a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and
the communication unit 1302 is configured to output the cyclic shift sequence.

In a possible implementation, the communication apparatus 130 is the second apparatus or a network device in the foregoing embodiments,

the communication unit 1302 is configured to receive a cyclic shift sequence; and
the processing unit 1301 is configured to process the cyclic shift sequence.

In a possible implementation, the cyclic shift index is determined based on a first sequence capacity and a second sequence capacity. The first sequence capacity is a sequence capacity obtained after a cyclic shift is performed on the root sequence based on the first group of indexes, and the second sequence capacity is a sequence capacity obtained after a cyclic shift is performed on the root sequence based on the second group of indexes.

In a possible implementation, when the first sequence capacity is greater than or equal to the second sequence capacity, the cyclic shift index is the first group of indexes; or when the first sequence capacity is less than the second sequence capacity, the cyclic shift index is the second group of indexes.

In a possible implementation, the cyclic shift sequence is a sequence in a sequence set, zero ambiguity zones of cyclic shift sequences included in the sequence set do not overlap each other, the sequence set is obtained by performing cyclic shifts on the root sequence based on a cyclic shift index set, and the cyclic shift index is one index in the cyclic shift index set.

In a possible implementation, the first group of indexes is determined based on delay constraint coordinates. The delay constraint coordinates are coordinates of a peak with a smallest delay in peaks of a zero ambiguity zone that is of the root sequence and that overlaps a zero ambiguity zone of a delay cyclic shift sequence. The delay cyclic shift sequence is a sequence obtained by performing, in delay domain, a cyclic shift on the root sequence located at an origin of a delay domain-Doppler domain coordinate system.

In a possible implementation, the first group of indexes is determined based on the delay constraint coordinates, a preset maximum delay, and a preset maximum Doppler shift. The delay constraint coordinates and the preset maximum delay are used to determine a first quantity of cyclic shifts. The first quantity of cyclic shifts is a quantity of sequences that are obtained by performing cyclic shifts on the root sequence in delay domain and whose zero ambiguity zones are adjacent and do not overlap each other.

In a possible implementation, the first group of indexes is determined based on the delay constraint coordinates, the quantity of complete cyclic shifts in Doppler domain, and the quantity of residual cyclic shifts in delay domain.

The quantity of complete cyclic shifts in Doppler domain is a quantity of Doppler domain complete sequences, and the Doppler domain complete sequence is a Doppler domain fixed sequence that satisfies a first preset condition.

The quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition.

The Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

In a possible implementation, the quantity of complete cyclic shifts in Doppler domain is determined based on a Doppler spacing. The quantity of residual cyclic shifts in delay domain is determined based on the quantity of complete cyclic shifts in Doppler domain, the delay constraint coordinates, and inverse delay constraint coordinates. The inverse delay constraint coordinates and the delay constraint coordinates are used to determine the Doppler spacing.

In a possible implementation, the first quantity of cyclic shifts, the quantity of complete cyclic shifts in Doppler domain, and the quantity of residual cyclic shifts in delay domain are used to determine the first sequence capacity.

In a possible implementation, the second group of indexes is determined based on Doppler constraint coordinates. The Doppler constraint coordinates are coordinates of a peak with a smallest Doppler shift in peaks of a zero ambiguity zone that is of the root sequence and that overlaps a zero ambiguity zone of a Doppler cyclic shift sequence. The Doppler cyclic shift sequence is a sequence obtained by performing, in Doppler domain, a cyclic shift on the root sequence located at an origin of a delay domain-Doppler domain coordinate system.

In a possible implementation, the second group of indexes is determined based on the Doppler constraint coordinates, a preset maximum delay, and a preset maximum Doppler shift. The Doppler constraint coordinates and the preset maximum Doppler shift are used to determine a second quantity of cyclic shifts. The second quantity of cyclic shifts is a quantity of sequences that are obtained by performing cyclic shifts on the root sequence in Doppler domain and whose zero ambiguity zones are adjacent and do not overlap each other.

In a possible implementation, the second group of indexes is determined based on the Doppler constraint coordinates, a quantity of complete cyclic shifts in delay domain, and a quantity of residual cyclic shifts in Doppler domain. The quantity of complete cyclic shifts in delay domain is a quantity of delay domain complete sequences, and the delay domain complete sequence is a delay domain fixed sequence that satisfies a second preset condition. The quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition.

The delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

In a possible implementation, the quantity of complete cyclic shifts in delay domain is determined based on a delay spacing. The quantity of residual cyclic shifts in Doppler domain is determined based on the quantity of complete cyclic shifts in delay domain, the Doppler constraint coordinates, and inverse Doppler constraint coordinates. The inverse Doppler constraint coordinates and the Doppler constraint coordinates are used to determine the delay spacing.

In a possible implementation, the second quantity of cyclic shifts, the quantity of complete cyclic shifts in delay domain, and the quantity of residual cyclic shifts in Doppler domain are used to determine the second sequence capacity.

In a possible implementation, the cyclic shift sequence is used to generate a random access signal or a sensing signal.

In a possible implementation, an expression of the first group of indexes is:

$$\begin{cases} \tau_{k,l} = k\Delta_T - l \cdot (\bar{\tau}_T \bmod \Delta_T) \\ \nu_{k,l} = \text{sgn}(\bar{\nu}_T - N/2) \cdot l\Delta_F \end{cases}$$

where $\tau_{k,l}$ represents a delay domain index in the first group of indexes, $\nu_{k,l}$ represents a Doppler domain index in the first group of indexes, $\langle \bar{\tau}_T, \bar{\nu}_T \rangle$ represents the delay constraint coordinates, $k$ represents a first parameter, $l$ represents a second parameter, a value range of $k$ and $l$ is $\{0 \le k < \lfloor \bar{\tau}_T/\Delta_T \rfloor, 0 \le l < \bar{l}_T\} \cup \{0 \le k < \bar{k}_T, l = \bar{l}_T\}$, $\bar{l}_T$ represents the quantity of complete cyclic shifts in Doppler domain, $\bar{k}_T$ represents the quantity of residual cyclic shifts in delay domain, and $\Delta_T$ represents the preset maximum delay.

In a possible implementation, an expression of the delay constraint coordinates $\langle \bar{\tau}_T, \bar{\nu}_T \rangle$ is:

$$\begin{cases} \bar{\tau}_T = \min_{v \in \{\pm 1, \pm 2, \ldots, \pm(\Delta_F - 1)\}} - u^{-1}v \bmod N \\ \bar{\nu}_T = -u\bar{\tau}_T \bmod N \end{cases}$$

where $N$ represents a sequence length, the sequence length is a prime number, $u$ represents a root index, v represents a Doppler shift, and $\Delta_F$ represents the preset maximum Doppler shift;

an expression of the quantity of complete cyclic shifts in Doppler domain is:

$$\bar{l}_T = \left\lfloor \frac{\bar{d}_T + (\Delta_F - 1)/2}{\Delta_F} \right\rfloor$$

where $\bar{l}_T$ represents the quantity of complete cyclic shifts in Doppler domain, and $\bar{d}_T$ represents the delay spacing;
an expression of the quantity of residual cyclic shifts in delay domain is as follows:

$$\bar{k}_T = \max \left\{ \left\lfloor \left( \bar{\bar{\tau}}_T - \bar{\tau}_T \cdot \left\lfloor \frac{(\bar{l}_T + 1)\Delta_F - \min\{\bar{\nu}_T, N - \bar{\nu}_T\} - 1}{\min\{\bar{\nu}_T, N - \bar{\nu}_T\}} \right\rfloor + \bar{l}_T \cdot (\bar{\tau}_T \bmod \Delta_T) \right) \middle/ \Delta_T \right\rfloor, 0 \right\}$$

where $\bar{k}_T$ represents the quantity of residual cyclic shifts in delay domain, $\langle \bar{\bar{\tau}}_T, \bar{\bar{\nu}}_T \rangle$ represents the inverse delay constraint coordinates, and $\Delta_T$ represents the preset maximum delay;
an expression of the delay spacing $\bar{d}_T$ is:

$$\bar{d}_T = \min \left\{ d_T \middle| \bar{\tau}_T \cdot \left\lfloor \frac{d_T - \min\{\bar{\nu}_T, N - \bar{\nu}_T\} + (\Delta_F - 1)/2}{\min\{\bar{\nu}_T, N - \bar{\nu}_T\}} \right\rfloor - \bar{\tau}_T \bmod \Delta_T \cdot \left( \left\lfloor \frac{d_T + (\Delta_F - 1)/2}{\Delta_F} \right\rfloor + 1 \right) \ge \bar{\bar{\tau}}_T - \bar{\tau}_T \right\}; \text{ and}$$

an expression of the inverse delay constraint coordinates $\langle \bar{\bar{\tau}}_T, \bar{\bar{\nu}}_T \rangle$ is as follows:

$$\begin{cases} \bar{\bar{\tau}}_T = \min_{v \in \{1,2,\ldots,\Delta_F - 1\}} - \text{sgn}(\bar{\nu}_T - N/2) u^{-1}v \bmod N \\ \bar{\bar{\nu}}_T = -u\bar{\bar{\tau}}_T \bmod N \end{cases}.$$

In a possible implementation, an expression of the second group of indexes is:

$$\begin{cases} \tau_{k,l} = \text{sgn}(\bar{\tau}_F - N/2) \cdot k\Delta_T \\ \nu_{k,l} = l\Delta_F - k \cdot (\bar{\nu}_F \bmod \Delta_F) \end{cases}$$

where $\tau_{k,l}$ represents a delay domain cyclic shift in the second group of indexes, $\nu_{k,l}$ represents a Doppler cyclic shift in the second group of indexes, $\langle \bar{\tau}_F, \bar{\nu}_F \rangle$ represents the Doppler constraint coordinates, $k$ represents a first parameter, $l$ represents a second parameter, a value range of $k$ and $l$ is

$$\left\{0 \leq k < \bar{k}_{\mathrm{F}}, 0 \leq l < \lfloor \bar{v}_{\mathrm{F}}/\Delta_{\mathrm{F}} \rfloor\right\} \cup \left\{k = \bar{k}_{\mathrm{F}}, 0 \leq l < \bar{l}_{\mathrm{F}}\right\}$$

, $\bar{l}_{\mathrm{F}}$ represents the quantity of complete cyclic shifts in delay domain, $\bar{k}_{\mathrm{F}}$ represents the quantity of residual cyclic shifts in Doppler domain, and $\Delta_{\mathrm{F}}$ represents the preset maximum Doppler shift.

In a possible implementation, an expression of the Doppler constraint coordinates $\langle \bar{\tau}_{\mathrm{F}}, \bar{v}_{\mathrm{F}} \rangle$ is as follows:

$$\begin{cases} \bar{v}_{\mathrm{F}} = \min\limits_{\tau \in \{\pm 1, \pm 2, \ldots, \pm(\Delta_{\mathrm{T}}-1)\}} - u\tau \bmod N \\ \bar{\tau}_{\mathrm{F}} = -u^{-1}\bar{v}_{\mathrm{F}} \bmod N \end{cases}$$

where $N$ represents a sequence length, the sequence length is a prime number, $u$ represents a root index, $\tau$ represents a delay, and $\Delta_{\mathrm{T}}$ represents the preset maximum delay;

an expression of the quantity of complete cyclic shifts in delay domain is as follows:

$$\bar{k}_{\mathrm{F}} = \left\lfloor \frac{\bar{d}_{\mathrm{F}}}{\Delta_{\mathrm{T}}} \right\rfloor$$

where $\bar{k}_{\mathrm{F}}$ represents the quantity of complete cyclic shifts in delay domain, and $\bar{d}_{\mathrm{F}}$ represents the Doppler spacing;
an expression of the quantity $\bar{l}_{\mathrm{F}}$ of residual cyclic shifts in Doppler domain is as follows:

$$\bar{l}_{\mathrm{F}} = \max\left\{ \left\lfloor \left( \left( \bar{\bar{v}}_{\mathrm{F}} - \bar{v}_{\mathrm{F}} \cdot \left\lfloor \frac{(\bar{k}_{\mathrm{F}}+1)\Delta_{\mathrm{T}} - \min\{\bar{\bar{\tau}}_{\mathrm{F}}, N-\bar{\bar{\tau}}_{\mathrm{F}}\} - 1}{\min\{\bar{\tau}_{\mathrm{F}}, N-\bar{\tau}_{\mathrm{F}}\}} \right\rfloor + \bar{k}_{\mathrm{F}} \cdot (\bar{v}_{\mathrm{F}} \bmod \Delta_{\mathrm{F}}) \right) \middle/ \Delta_{\mathrm{F}} \right\rfloor, 0 \right\}$$

where $\langle \bar{\bar{\tau}}_{\mathrm{F}}, \bar{\bar{v}}_{\mathrm{F}} \rangle$ represents the inverse Doppler constraint coordinates, and $\Delta_{\mathrm{F}}$ represents the preset maximum Doppler shift;
an expression of the delay spacing $\bar{d}_{\mathrm{F}}$ is as follows:

$$\bar{d}_{\mathrm{F}} = \min\left\{ d_{\mathrm{F}} \middle| \bar{v}_{\mathrm{F}} \cdot \left\lfloor \frac{d_{\mathrm{F}} - \min\{\bar{\bar{\tau}}_{\mathrm{F}}, N-\bar{\bar{\tau}}_{\mathrm{F}}\}}{\min\{\bar{\tau}_{\mathrm{F}}, N-\bar{\tau}_{\mathrm{F}}\}} \right\rfloor - \bar{v}_{\mathrm{F}} \bmod \Delta_{\mathrm{F}} \cdot \left( \left\lfloor \frac{d_{\mathrm{F}}}{\Delta_{\mathrm{T}}} \right\rfloor + 1 \right) \geq \bar{\bar{v}}_{\mathrm{F}} - \bar{v}_{\mathrm{F}} \right\};$$

and

an expression of the inverse Doppler constraint coordinates $\langle \bar{\bar{\tau}}_{\mathrm{F}}, \bar{\bar{v}}_{\mathrm{F}} \rangle$ is as follows:

$$\begin{cases} \bar{\bar{v}}_{\mathrm{F}} = \min_{\tau \in \{1, 2, \ldots, \Delta_{\mathrm{T}}-1\}} - \mathrm{sgn}(\bar{\tau}_{\mathrm{F}} - N/2)\, u\tau \bmod N \\ \bar{\bar{\tau}}_{\mathrm{F}} = -u^{-1}\bar{\bar{v}}_{\mathrm{F}} \bmod N \end{cases}.$$

In a possible implementation,

when $\bar{l}_{\mathrm{T}} \cdot \lfloor \bar{\tau}_{\mathrm{T}}/\Delta_{\mathrm{T}} \rfloor + \bar{k}_{\mathrm{T}} \geq \bar{k}_{\mathrm{F}} \cdot \lfloor \bar{v}_{\mathrm{F}}/\Delta_{\mathrm{F}} \rfloor + \bar{l}_{\mathrm{F}}$, the cyclic shift index is the first group of indexes; or

when $\bar{l}_{\mathrm{T}} \cdot \lfloor \bar{\tau}_{\mathrm{T}}/\Delta_{\mathrm{T}} \rfloor + \bar{k}_{\mathrm{T}} < \bar{k}_{\mathrm{F}} \cdot \lfloor \bar{v}_{\mathrm{F}}/\Delta_{\mathrm{F}} \rfloor + \bar{l}_{\mathrm{F}}$, the cyclic shift index is the second group of indexes.

In a possible implementation, an expression of a discrete-time signal of the cyclic shift sequence is:

$$s_{u,k,l}(n) = e^{-j\pi u(n+C_{k,l})(n+C_{k,l}+1)/N}, \quad n = 0, 1, \ldots, N-1$$

where $s_{u,k,l}(n)$ represents the cyclic shift sequence, $N$ represents the sequence length, the sequence length is a prime number, $u$ represents the root index, $C_{k,l}$ represents the cyclic shift index, $C_{k,l} = (\tau_{k,l} + u^{-1}v_{k,l}) \bmod N$, $\tau_{k,l}$ represents the delay domain index, $v_{k,l}$ represents the Doppler domain index, $k$ represents the first parameter, and $l$ represents the second parameter.

FIG. 14 is a diagram of a structure of a communication apparatus 140 according to an embodiment of this application. The communication apparatus 140 may be configured to implement functions of the first apparatus and the second apparatus in the foregoing method. The communication apparatus 140 is an apparatus that has a computing capability and/or a communication capability. The communication apparatus herein may be a physical device, for example, a network device or a terminal device, or may be a communication unit, a component, or a chip in the network device, or may be a communication unit, a component, or a chip in the terminal device, or may be an apparatus that is used in cooperation with the network device, or may be an apparatus that is used in cooperation with the terminal device.

As shown in FIG. 14, the communication apparatus 140 includes a processor 1401. In a possible implementation, the communication apparatus 140 may further include at least one communication interface 1402, or the processor 1401 is coupled to the communication interface 1402. In another possible implementation, the communication apparatus 140 may further include at least one memory 1403. The memory 1403 may be integrated with the processor 1401, disposed separately, or located outside the communication apparatus 140. It should be understood that quantities of processors and memories in the communication apparatus 140 are not limited in this application.

The processor 1401 is a module for performing an operation, and may include any one or more of processors such as a controller (for example, a storage controller), a logic circuit, a baseband processor, a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), a field programmable gate array (field programmable gate array, FPGA), an application-specific integrated circuit (Application-Specific Integrated Circuit, ASIC), and a microcontrol unit (Microcontroller Unit, MCU).

The communication interface 1402 is configured to provide an information input or output for the at least one processor, and/or the communication interface 1402 may be configured to receive data sent from the outside and/or send data to the outside. The communication interface 1402 may be an input/output interface, may be a wired link interface including, for example, an Ethernet cable, or may be a wireless link (Wi-Fi, Bluetooth, universal wireless transmission, and another wireless communication technology) interface. Optionally, the communication interface 1402 may further include a transmitter (for example, a radio frequency transmitter or an antenna), a receiver, or the like that is coupled to the interface. For example, when the communication apparatus 140 is the first apparatus, the communication interface 1402 is configured to send a cyclic shift sequence. When the communication apparatus 140 is the second apparatus, the communication interface 1402 is configured to receive a cyclic shift sequence.

The memory 1403 is configured to provide storage space. The storage space may optionally store application data, user data, an operating system, a computer program, a configuration file, and the like. The memory 1403 may include a volatile memory (volatile memory), for example, a random access memory (random access memory, RAM). The memory 1403 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1403 may further include a bus (not shown in FIG. 14). The bus may be a peripheral component interconnect (peripheral component interconnect, PCI) bus, an extended industry standard structure (extended industry standard architecture, EISA) bus, or the like. The bus may be classified into an address bus, a data bus, a control bus, or the like. The bus may be represented by using one line, but this does not mean that there is only one bus or only one type of bus. The bus may include a path for transmission of information between various parts (for example, the memory 1403, the processor 1401, and the communication interface 1402) of the communication apparatus 140.

In this embodiment of this application, the memory 1403 stores executable instructions. The processor 1401 executes the executable instructions to implement the foregoing communication method, for example, the communication method in the embodiment in FIG. 5A. Details are not described herein again. In other words, the memory 1403 stores instructions used to perform the communication method.

When the communication apparatus 140 is a chip used in a terminal, the chip in the terminal implements functions of the terminal in the foregoing method embodiments. The chip in the terminal receives information from another module (for example, a radio frequency module or an antenna) in the terminal. The information is sent by another terminal or a network device to the terminal. Alternatively, the chip in the terminal outputs information to another module (for example, a radio frequency module or an antenna) in the terminal. The information is sent by the terminal to another terminal or a network device.

When the communication apparatus 140 is a chip used in a network device, the chip in the network device implements functions of the network device in the foregoing method embodiments. The chip in the network device receives information from another module (for example, a radio frequency module or an antenna) in the network device. The information is sent by a terminal or another network device to the network device. Alternatively, the chip in the network device outputs information to another module (for example, a radio frequency module or an antenna) in the network device. The information is sent by the network device to a terminal or another network device.

An embodiment of this application may further provide a computer program product. The computer program product includes computer instructions. When the instructions are run on at least one processor, the foregoing communication method, for example, the communication method in the embodiment in FIG. 5A, is implemented.

In a possible implementation, the computer program product may be a software installation package or an image package. When the foregoing method needs to be used, the computer program product may be downloaded, and the computer program product is executed on a computing device.

An embodiment of this application further provides a communication system. The communication system includes a terminal device and a network device. For specific descriptions, refer to the communication method shown in FIG. 5A.

An embodiment of this application may further provide a computer program. The computer program is used to implement the foregoing communication method, for example, the communication method in the embodiment in FIG. 5A.

An embodiment of this application further provides a computer-readable storage medium. The computer-readable storage medium includes instructions. The instructions are used to implement the foregoing communication method, for example, the communication method in the embodiment in FIG. 5A.

The computer-readable storage medium may be any usable medium that can be stored by a communication apparatus, or a data storage device like a data center including one or more usable media. The usable medium may be a magnetic medium (for example, a floppy disk, a hard disk drive, or a magnetic tape), an optical medium (for example, a digital versatile disc (Digital Video Disc, DVD)), a semiconductor medium (for example, a solid-state drive), or the like.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. "And/or" describes an association relationship between associated objects, and represents that three relationships may exist. For example, A and/or B may represent the following three cases: Only A exists, both A and B exist, and only B exists, where A and B may be singular or plural. A character "/" usually indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first container storage management apparatus and a second container storage management apparatus are merely for ease of description, but do not indicate differences in apparatus structures, deployment sequences, importance degrees, and the like of the first container storage management apparatus and the first container storage management apparatus.

Persons of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A communication method, wherein the method comprises:

   obtaining, by a first apparatus, a cyclic shift sequence, wherein the cyclic shift sequence is obtained by performing a cyclic shift on a root sequence based on a cyclic shift index, the cyclic shift index comprises a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and
   outputting, by the first apparatus, the cyclic shift sequence.

2. A communication method, wherein the method comprises:

receiving, by a second apparatus, a cyclic shift sequence, wherein the cyclic shift sequence is obtained by performing a cyclic shift on a root sequence based on a cyclic shift index, the cyclic shift index comprises a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and

processing, by the second apparatus, the cyclic shift sequence.

3. The method according to claim 1 or 2, wherein the cyclic shift index is determined based on a first sequence capacity and a second sequence capacity, the first sequence capacity is a sequence capacity obtained after a cyclic shift is performed on the root sequence based on the first group of indexes, and the second sequence capacity is a sequence capacity obtained after a cyclic shift is performed on the root sequence based on the second group of indexes.

4. The method according to claim 3, wherein when the first sequence capacity is greater than or equal to the second sequence capacity, the cyclic shift index is the first group of indexes; or

   when the first sequence capacity is less than the second sequence capacity, the cyclic shift index is the second group of indexes.

5. The method according to any one of claims 1 to 4, wherein the cyclic shift sequence is a sequence in a sequence set, zero ambiguity zones of cyclic shift sequences comprised in the sequence set do not overlap each other, the sequence set is obtained by performing cyclic shifts on the root sequence based on a cyclic shift index set, and the cyclic shift index is one index in the cyclic shift index set.

6. The method according to any one of claims 1 to 5, wherein the first group of indexes is determined based on delay constraint coordinates, the delay constraint coordinates are coordinates of a peak with a smallest delay in peaks of a zero ambiguity zone that is of the root sequence and that overlaps a zero ambiguity zone of a delay cyclic shift sequence, and the delay cyclic shift sequence is a sequence obtained by performing, in delay domain, a cyclic shift on the root sequence located at an origin of a delay domain-Doppler domain coordinate system.

7. The method according to claim 6, wherein the first group of indexes is determined based on the delay constraint coordinates, a preset maximum delay, and a preset maximum Doppler shift, the delay constraint coordinates and the preset maximum delay are used to determine a first quantity of cyclic shifts, and the first quantity of cyclic shifts is a quantity of sequences that are obtained by performing cyclic shifts on the root sequence in delay domain and whose zero ambiguity zones are adjacent and do not overlap each other.

8. The method according to claim 6 or 7, wherein the first group of indexes is determined based on the delay constraint coordinates, a quantity of complete cyclic shifts in Doppler domain, and a quantity of residual cyclic shifts in delay domain;

   the quantity of complete cyclic shifts in Doppler domain is a quantity of Doppler domain complete sequences, and the Doppler domain complete sequence is a Doppler domain fixed sequence that satisfies a first preset condition; the quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition; and

   the Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

9. The method according to claim 8, wherein the quantity of complete cyclic shifts in Doppler domain is determined based on a Doppler spacing, the quantity of residual cyclic shifts in delay domain is determined based on the quantity of complete cyclic shifts in Doppler domain, the delay constraint coordinates, and inverse delay constraint coordinates, and the inverse delay constraint coordinates and the delay constraint coordinates are used to determine the Doppler spacing.

10. The method according to claim 8 or 9, wherein the first quantity of cyclic shifts, the quantity of complete cyclic shifts in Doppler domain, and the quantity of residual cyclic shifts in delay domain are used to determine the first sequence capacity.

**11.** The method according to any one of claims 1 to 5, wherein the second group of indexes is determined based on Doppler constraint coordinates, the Doppler constraint coordinates are coordinates of a peak with a smallest Doppler shift in peaks of a zero ambiguity zone that is of the root sequence and that overlaps a zero ambiguity zone of a Doppler cyclic shift sequence, and the Doppler cyclic shift sequence is a sequence obtained by performing, in Doppler domain, a cyclic shift on the root sequence located at an origin of a delay domain-Doppler domain coordinate system.

**12.** The method according to claim 11, wherein the second group of indexes is determined based on the Doppler constraint coordinates, a preset maximum delay, and a preset maximum Doppler shift, the Doppler constraint coordinates and the preset maximum Doppler shift are used to determine a second quantity of cyclic shifts, and the second quantity of cyclic shifts is a quantity of sequences that are obtained by performing cyclic shifts on the root sequence in Doppler domain and whose zero ambiguity zones are adjacent and do not overlap each other.

**13.** The method according to claim 12, wherein the second group of indexes is determined based on the Doppler constraint coordinates, a quantity of complete cyclic shifts in delay domain, and a quantity of residual cyclic shifts in Doppler domain;

the quantity of complete cyclic shifts in delay domain is a quantity of delay domain complete sequences, and the delay domain complete sequence is a delay domain fixed sequence that satisfies a second preset condition; the quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition; and the delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

**14.** The method according to claim 13, wherein the quantity of complete cyclic shifts in delay domain is determined based on a delay spacing, the quantity of residual cyclic shifts in Doppler domain is determined based on the quantity of complete cyclic shifts in delay domain, the Doppler constraint coordinates, and inverse Doppler constraint coordinates, and the inverse Doppler constraint coordinates and the Doppler constraint coordinates are used to determine the delay spacing.

**15.** The method according to claim 13 or 14, wherein the second quantity of cyclic shifts, the quantity of complete cyclic shifts in delay domain, and the quantity of residual cyclic shifts in Doppler domain are used to determine the second sequence capacity.

**16.** The method according to any one of claims 1 to 15, wherein the cyclic shift sequence is used to generate a random access signal or a sensing signal.

**17.** The method according to any one of claims 6 to 11, wherein an expression of the first group of indexes is:

$$\begin{cases} \tau_{k,l} = k\Delta_{\mathrm{T}} - l \cdot (\bar{\tau}_{\mathrm{T}} \bmod \Delta_{\mathrm{T}}) \\ v_{k,l} = \mathrm{sgn}(\bar{v}_{\mathrm{T}} - N/2) \cdot l\Delta_{\mathrm{F}} \end{cases}$$

wherein $\tau_{k,l}$ represents a delay domain index in the first group of indexes, $v_{k,l}$ represents a Doppler domain index in the first group of indexes, $\langle \bar{\tau}_{\mathrm{T}}, \bar{v}_{\mathrm{T}} \rangle$ represents the delay constraint coordinates, $k$ represents a first parameter, $l$ represents a second parameter, a value range of $k$ and $l$ is $\left\{ 0 \leq k < \lfloor \bar{\tau}_{\mathrm{T}}/\Delta_{\mathrm{T}} \rfloor, 0 \leq l < \bar{l}_{\mathrm{T}} \right\} \cup \left\{ 0 \leq k < \bar{k}_{\mathrm{T}}, l = \bar{l}_{\mathrm{T}} \right\}$, $\bar{l}_{\mathrm{T}}$ represents the quantity of complete cyclic shifts in Doppler domain, $\bar{k}_{\mathrm{T}}$ represents the quantity of residual cyclic shifts in delay domain, $\Delta_{\mathrm{T}}$ represents the preset maximum delay, and $\Delta_{\mathrm{F}}$ represents the preset maximum Doppler shift.

**18.** The method according to claim 17, wherein

an expression of the delay constraint coordinates $\langle \bar{\tau}_{\mathrm{T}}, \bar{v}_{\mathrm{T}} \rangle$ is:

$$\begin{cases} \bar{\tau}_T = \min\limits_{v\in\{\pm 1,\pm 2,...,\pm(\Delta_F-1)\}} - u^{-1}v \bmod N \\ \bar{v}_T = -u\bar{\tau}_T \bmod N \end{cases}$$

wherein $N$ represents a sequence length, the sequence length is a prime number, $u$ represents a root index, and v represents a Doppler shift;

an expression of the quantity of complete cyclic shifts in Doppler domain is:

$$\bar{l}_T = \left\lfloor \frac{\bar{d}_T + (\Delta_F-1)/2}{\Delta_F} \right\rfloor$$

wherein $\bar{l}_T$ represents the quantity of complete cyclic shifts in Doppler domain, and $\bar{d}_T$ represents the delay spacing;

an expression of the quantity of residual cyclic shifts in delay domain is as follows:

$$\bar{k}_T = \max\left\{ \left\lfloor \left( \bar{\bar{\tau}}_T - \bar{\tau}_T \cdot \left\lfloor \frac{(\bar{l}_T + 1)\Delta_F - \min\{\bar{v}_T, N-\bar{v}_T\} - 1}{\min\{\bar{v}_T, N-\bar{v}_T\}} \right\rfloor + \bar{l}_T \cdot (\bar{\tau}_T \bmod \Delta_T) \right) \Big/ \Delta_T \right\rfloor, 0 \right\}$$

wherein $\bar{k}_T$ represents the quantity of residual cyclic shifts in delay domain, $\langle\bar{\bar{\tau}}_T, \bar{\bar{v}}_T\rangle$ represents the inverse delay constraint coordinates, and $\Delta_T$ represents the preset maximum delay;

an expression of the delay spacing $\bar{d}_T$ is:

$$\bar{d}_T = \min\left\{ d_T \Big| \bar{\tau}_T \cdot \left\lfloor \frac{d_T - \min\{\bar{v}_T, N-\bar{v}_T\} + (\Delta_F-1)/2}{\min\{\bar{v}_T, N-\bar{v}_T\}} \right\rfloor - \bar{\tau}_T \bmod \Delta_T \cdot \left( \left\lfloor \frac{d_T + (\Delta_F-1)/2}{\Delta_F} \right\rfloor + 1 \right) \geq \bar{\bar{\tau}}_T - \bar{\tau}_T \right\}; \text{ and}$$

an expression of the inverse delay constraint coordinates $\langle\bar{\bar{\tau}}_T, \bar{\bar{v}}_T\rangle$ is as follows:

$$\begin{cases} \bar{\bar{\tau}}_T = \min_{v\in\{1,2,...,\Delta_F-1\}} - \text{sgn}(\bar{v}_T - N/2)\, u^{-1}v \bmod N \\ \bar{\bar{v}}_T = -u\bar{\bar{\tau}}_T \bmod N \end{cases}.$$

**19.** The method according to any one of claims 12 to 16, wherein an expression of the second group of indexes is:

$$\begin{cases} \tau_{k,l} = \text{sgn}(\bar{\tau}_F - N/2) \cdot k\Delta_T \\ v_{k,l} = l\Delta_F - k \cdot (\bar{v}_F \bmod \Delta_F) \end{cases}$$

wherein $\tau_{k,l}$ represents a delay domain cyclic shift in the second group of indexes, $v_{k,l}$ represents a Doppler cyclic shift in the second group of indexes, $\langle\bar{\tau}_F, \bar{v}_F\rangle$ represents the Doppler constraint coordinates, $k$ represents a first parameter, $l$ represents a second parameter, a value range of $k$ and $l$ is $\{0 \leq k < \bar{k}_F, 0 \leq l < \lfloor\bar{v}_F/\Delta_F\rfloor\} \cup \{k = \bar{k}_F, 0 \leq l < \bar{l}_F\}$, $\bar{l}_F$ represents the quantity of complete cyclic shifts in delay domain, $\bar{k}_F$ represents the quantity of residual cyclic shifts in Doppler domain, and $\Delta_F$ represents the preset maximum Doppler shift.

**20.** The method according to claim 19, wherein an expression of the Doppler constraint coordinates $\langle\bar{\tau}_F, \bar{v}_F\rangle$ is as follows:

$$\begin{cases} \bar{v}_F = \min\limits_{\tau\in\{\pm 1,\pm 2,...,\pm(\Delta_T-1)\}} - u\tau \bmod N \\ \bar{\tau}_F = -u^{-1}\bar{v}_F \bmod N \end{cases}$$

wherein $N$ represents a sequence length, the sequence length is a prime number, $u$ represents a root index, $\tau$

represents a delay, and $\Delta_T$ represents the preset maximum delay;
an expression of the quantity of complete cyclic shifts in delay domain is as follows:

$$\bar{k}_F = \left\lfloor \frac{\bar{d}_F}{\Delta_T} \right\rfloor$$

wherein $\bar{k}_F$ represents the quantity of complete cyclic shifts in delay domain, and $\bar{d}_F$ represents the Doppler spacing;
an expression of the quantity $\bar{l}_F$ of residual cyclic shifts in Doppler domain is as follows:

$$\bar{l}_F = \max\left\{ \left\lfloor \left( \bar{\bar{v}}_F - \bar{v}_F \cdot \left\lfloor \frac{(\bar{k}_F + 1)\Delta_T - \min\{\bar{\bar{\tau}}_F, N - \bar{\tau}_F\} - 1}{\min\{\bar{\tau}_F, N - \bar{\tau}_F\}} \right\rfloor + \bar{k}_F \cdot (\bar{v}_F \bmod \Delta_F) \right) \Big/ \Delta_F \right\rfloor, 0 \right\}$$

wherein $\langle \bar{\bar{\tau}}_F, \bar{\bar{v}}_F \rangle$ represents the inverse Doppler constraint coordinates, and $\Delta_F$ represents the preset maximum Doppler shift;
an expression of the delay spacing $\bar{d}_F$ is as follows:

$$\bar{d}_F = \min\left\{ d_F \,\Big|\, \bar{v}_F \cdot \left\lfloor \frac{d_F - \min\{\bar{\bar{\tau}}_F, N - \bar{\tau}_F\}}{\min\{\bar{\tau}_F, N - \bar{\tau}_F\}} \right\rfloor - \bar{v}_F \bmod \Delta_F \cdot \left( \left\lfloor \frac{d_F}{\Delta_T} \right\rfloor + 1 \right) \geq \bar{\bar{v}}_F - \bar{v}_F \right\}; \text{ and}$$

an expression of the inverse Doppler constraint coordinates $\langle \bar{\bar{\tau}}_F, \bar{\bar{v}}_F \rangle$ is as follows:

$$\begin{cases} \bar{\bar{v}}_F = \min_{\tau \in \{1,2,\ldots,\Delta_T - 1\}} - \operatorname{sgn}(\bar{\tau}_F - N/2)\, u\tau \bmod N \\ \bar{\bar{\tau}}_F = -u^{-1}\bar{\bar{v}}_F \bmod N \end{cases}.$$

21. The method according to any one of claims 17 to 20, wherein

when $\bar{l}_T \cdot \lfloor \bar{\tau}_T/\Delta_T \rfloor + \bar{k}_T \geq \bar{k}_F \cdot \lfloor \bar{v}_F/\Delta_F \rfloor + \bar{l}_F$, the cyclic shift index is the first group of indexes; or

when $\bar{l}_T \cdot \lfloor \bar{\tau}_T/\Delta_T \rfloor + \bar{k}_T < \bar{k}_F \cdot \lfloor \bar{v}_F/\Delta_F \rfloor + \bar{l}_F$, the cyclic shift index is the second group of indexes.

22. The method according to any one of claims 1 to 21, wherein an expression of a discrete-time signal of the cyclic shift sequence is:

$$s_{u,k,l}(n) = e^{-j\pi u(n + C_{k,l})(n + C_{k,l} + 1)/N}, n = 0, 1, \ldots, N - 1$$

wherein $s_{u,k,l}(n)$ represents the cyclic shift sequence, $N$ represents the sequence length, the sequence length is a prime number, $u$ represents the root index, $C_{k,l}$ represents the cyclic shift index, $C_{k,l} = (\tau_{k,l} + u^{-1}v_{k,l}) \bmod N$, $\tau_{k,l}$ represents the delay domain index, $v_{k,l}$ represents the Doppler domain index, $k$ represents the first parameter, and $l$ represents the second parameter.

23. A communication apparatus, wherein the communication apparatus comprises a communication unit and a processing unit, wherein

the processing unit is configured to obtain a cyclic shift sequence, wherein the cyclic shift sequence is obtained by performing a cyclic shift on a root sequence based on a cyclic shift index, the cyclic shift index comprises a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and
the communication unit is configured to output the cyclic shift sequence.

24. A communication apparatus, wherein the communication apparatus comprises a communication unit and a processing unit, wherein

the communication unit is configured to receive a cyclic shift sequence, wherein the cyclic shift sequence is obtained by performing a cyclic shift on a root sequence based on a cyclic shift index, the cyclic shift index comprises a delay domain index and a Doppler domain index, the cyclic shift index is a first group of indexes or a second group of indexes, the first group of indexes is determined in ascending order or descending order of delays, and the second group of indexes is determined in ascending order or descending order of Doppler; and the processing unit is configured to process the cyclic shift sequence.

25. The apparatus according to claim 23 or 24, wherein the cyclic shift index is determined based on a first sequence capacity and a second sequence capacity, the first sequence capacity is a sequence capacity obtained after a cyclic shift is performed on the root sequence based on the first group of indexes, and the second sequence capacity is a sequence capacity obtained after a cyclic shift is performed on the root sequence based on the second group of indexes.

26. The apparatus according to claim 25, wherein when the first sequence capacity is greater than or equal to the second sequence capacity, the cyclic shift index is the first group of indexes; or
when the first sequence capacity is less than the second sequence capacity, the cyclic shift index is the second group of indexes.

27. The apparatus according to any one of claims 23 to 26, wherein the cyclic shift sequence is a sequence in a sequence set, zero ambiguity zones of cyclic shift sequences comprised in the sequence set do not overlap each other, the sequence set is obtained by performing cyclic shifts on the root sequence based on a cyclic shift index set, and the cyclic shift index is one index in the cyclic shift index set.

28. The apparatus according to any one of claims 23 to 27, wherein the first group of indexes is determined based on delay constraint coordinates, the delay constraint coordinates are coordinates of a peak with a smallest delay in peaks of a zero ambiguity zone that is of the root sequence and that overlaps a zero ambiguity zone of a delay cyclic shift sequence, and the delay cyclic shift sequence is a sequence obtained by performing, in delay domain, a cyclic shift on the root sequence located at an origin of a delay domain-Doppler domain coordinate system.

29. The apparatus according to claim 28, wherein the first group of indexes is determined based on the delay constraint coordinates, a preset maximum delay, and a preset maximum Doppler shift, the delay constraint coordinates and the preset maximum delay are used to determine a first quantity of cyclic shifts, and the first quantity of cyclic shifts is a quantity of sequences that are obtained by performing cyclic shifts on the root sequence in delay domain and whose zero ambiguity zones are adjacent and do not overlap each other.

30. The apparatus according to claim 29, wherein the first group of indexes is determined based on the delay constraint coordinates, a quantity of complete cyclic shifts in Doppler domain, and a quantity of residual cyclic shifts in delay domain;

the quantity of complete cyclic shifts in Doppler domain is a quantity of Doppler domain complete sequences, and the Doppler domain complete sequence is a Doppler domain fixed sequence that satisfies a first preset condition; the quantity of residual cyclic shifts in delay domain is a quantity of sequences that are obtained by performing cyclic shifts on a Doppler domain residual sequence in delay domain and whose zero ambiguity zones are adjacent and do not overlap each other, and the Doppler domain residual sequence is a Doppler domain fixed sequence that does not satisfy the first preset condition; and the Doppler domain fixed sequence is a sequence obtained by performing a cyclic shift on the root sequence in Doppler domain, and the first preset condition is that a quantity of sequences that are obtained by performing cyclic shifts on the Doppler domain fixed sequence in delay domain and whose zero ambiguity zones are adjacent and do not overlap each other is equal to the first quantity of cyclic shifts.

31. The apparatus according to claim 30, wherein the quantity of complete cyclic shifts in Doppler domain is determined based on a Doppler spacing, the quantity of residual cyclic shifts in delay domain is determined based on the quantity of complete cyclic shifts in Doppler domain, the delay constraint coordinates, and inverse delay constraint coordinates, and the inverse delay constraint coordinates and the delay constraint coordinates are used to determine the Doppler spacing.

**32.** The apparatus according to claim 30 or 31, wherein the first quantity of cyclic shifts, the quantity of complete cyclic shifts in Doppler domain, and the quantity of residual cyclic shifts in delay domain are used to determine the first sequence capacity.

**33.** The apparatus according to any one of claims 23 to 27, wherein the second group of indexes is determined based on Doppler constraint coordinates, the Doppler constraint coordinates are coordinates of a peak with a smallest Doppler shift in peaks of a zero ambiguity zone that is of the root sequence and that overlaps a zero ambiguity zone of a Doppler cyclic shift sequence, and the Doppler cyclic shift sequence is a sequence obtained by performing, in Doppler domain, a cyclic shift on the root sequence located at an origin of a delay domain-Doppler domain coordinate system.

**34.** The apparatus according to claim 33, wherein the second group of indexes is determined based on the Doppler constraint coordinates, a preset maximum delay, and a preset maximum Doppler shift, the Doppler constraint coordinates and the preset maximum Doppler shift are used to determine a second quantity of cyclic shifts, and the second quantity of cyclic shifts is a quantity of sequences that are obtained by performing cyclic shifts on the root sequence in Doppler domain and whose zero ambiguity zones are adjacent and do not overlap each other.

**35.** The apparatus according to claim 34, wherein the second group of indexes is determined based on the Doppler constraint coordinates, a quantity of complete cyclic shifts in delay domain, and a quantity of residual cyclic shifts in Doppler domain;

the quantity of complete cyclic shifts in delay domain is a quantity of delay domain complete sequences, and the delay domain complete sequence is a delay domain fixed sequence that satisfies a second preset condition;
the quantity of residual cyclic shifts in Doppler domain is a quantity of sequences that are obtained by performing cyclic shifts on a delay domain residual sequence in Doppler domain and whose zero ambiguity zones are adjacent and do not overlap each other, and the delay domain residual sequence is a delay domain fixed sequence that does not satisfy the second preset condition; and
the delay domain fixed sequence is a sequence obtained by performing a cyclic shift on the root sequence in delay domain, and the second preset condition is that a quantity of sequences that are obtained by performing cyclic shifts on the delay domain fixed sequence in Doppler domain and whose zero ambiguity zones are adjacent and do not overlap each other is equal to the second quantity of cyclic shifts.

**36.** The apparatus according to claim 35, wherein the quantity of complete cyclic shifts in delay domain is determined based on a delay spacing, the quantity of residual cyclic shifts in Doppler domain is determined based on the quantity of complete cyclic shifts in delay domain, the Doppler constraint coordinates, and inverse Doppler constraint coordinates, and the inverse Doppler constraint coordinates and the Doppler constraint coordinates are used to determine the delay spacing.

**37.** The apparatus according to claim 35 or 36, wherein the second quantity of cyclic shifts, the quantity of complete cyclic shifts in delay domain, and the quantity of residual cyclic shifts in Doppler domain are used to determine the second sequence capacity.

**38.** The apparatus according to any one of claims 28 to 32, wherein an expression of the first group of indexes is:

$$\begin{cases} \tau_{k,l} = k\Delta_{\mathrm{T}} - l \cdot (\bar{\tau}_{\mathrm{T}} \bmod \Delta_{\mathrm{T}}) \\ v_{k,l} = \mathrm{sgn}(\bar{v}_{\mathrm{T}} - N/2) \cdot l\Delta_{\mathrm{F}} \end{cases}$$

wherein $\tau_{k,l}$ represents a delay domain index in the first group of indexes, $v_{k,l}$ represents a Doppler domain index in the first group of indexes, $\langle \bar{\tau}_{\mathrm{T}}, \bar{v}_{\mathrm{T}} \rangle$ represents the delay constraint coordinates, $k$ represents a first parameter, $l$ represents a second parameter, a value range of $k$ and $l$ is $\{0 \le k < \lfloor \bar{\tau}_{\mathrm{T}}/\Delta_{\mathrm{T}} \rfloor, 0 \le l < \bar{l}_{\mathrm{T}}\} \cup \{0 \le k < \bar{k}_{\mathrm{T}}, l = \bar{l}_{\mathrm{T}}\}$, $\bar{l}_{\mathrm{T}}$ represents the quantity of complete cyclic shifts in Doppler domain, $\bar{k}_{\mathrm{T}}$ represents the quantity of residual cyclic shifts in delay domain, and $\Delta_{\mathrm{T}}$ represents the preset maximum delay.

**39.** The apparatus according to claim 38, wherein

an expression of the delay constraint coordinates $\langle \bar{\tau}_{\mathrm{T}}, \bar{v}_{\mathrm{T}} \rangle$ is:

$$\begin{cases} \bar{\tau}_T = \min_{v \in \{\pm 1, \pm 2, \ldots, \pm(\Delta_F - 1)\}} -u^{-1}v \bmod N \\ \bar{v}_T = -u\bar{\tau}_T \bmod N \end{cases}$$

wherein $N$ represents a sequence length, the sequence length is a prime number, $u$ represents a root index, v represents a Doppler shift, and $\Delta_F$ represents the preset maximum Doppler shift;
an expression of the quantity of complete cyclic shifts in Doppler domain is:

$$\bar{l}_T = \left\lfloor \frac{\bar{d}_T + (\Delta_F - 1)/2}{\Delta_F} \right\rfloor$$

wherein $\bar{l}_T$ represents the quantity of complete cyclic shifts in Doppler domain, and $\bar{d}_T$ represents the delay spacing;
an expression of the quantity of residual cyclic shifts in delay domain is as follows:

$$\bar{k}_T = \max\left\{ \left\lfloor \left( \bar{\bar{\tau}}_T - \bar{\tau}_T \cdot \left\lfloor \frac{(\bar{l}_T + 1)\Delta_F - \min\{\bar{v}_T, N - \bar{v}_T\} - 1}{\min\{\bar{v}_T, N - \bar{v}_T\}} \right\rfloor + \bar{l}_T \cdot (\bar{\tau}_T \bmod \Delta_T) \right) \middle/ \Delta_T \right\rfloor, 0 \right\}$$

wherein $\bar{k}_T$ represents the quantity of residual cyclic shifts in delay domain, $\langle \bar{\bar{\tau}}_T, \bar{\bar{v}}_T \rangle$ represents the inverse delay constraint coordinates, and $\Delta_T$ represents the preset maximum delay;
an expression of the delay spacing $\bar{d}_T$ is:

$$\bar{d}_T = \min\left\{ d_T \middle| \bar{\tau}_T \cdot \left\lfloor \frac{d_T - \min\{\bar{v}_T, N - \bar{v}_T\} + (\Delta_F - 1)/2}{\min\{\bar{v}_T, N - \bar{v}_T\}} \right\rfloor - \bar{\tau}_T \bmod \Delta_T \cdot \left( \left\lfloor \frac{d_T + (\Delta_F - 1)/2}{\Delta_F} \right\rfloor + 1 \right) \geq \bar{\bar{\tau}}_T - \bar{\tau}_T \right\}; \text{ and}$$

an expression of the inverse delay constraint coordinates $\langle \bar{\bar{\tau}}_T, \bar{\bar{v}}_T \rangle$ is as follows:

$$\begin{cases} \bar{\bar{\tau}}_T = \min_{v \in \{1, 2, \ldots, \Delta_F - 1\}} -\text{sgn}(\bar{v}_T - N/2) \, u^{-1}v \bmod N \\ \bar{\bar{v}}_T = -u\bar{\bar{\tau}}_T \bmod N \end{cases}.$$

40. The apparatus according to any one of claims 33 to 37, wherein an expression of the second group of indexes is:

$$\begin{cases} \tau_{k,l} = \text{sgn}(\bar{\tau}_F - N/2) \cdot k\Delta_T \\ v_{k,l} = l\Delta_F - k \cdot (\bar{v}_F \bmod \Delta_F) \end{cases}$$

wherein $\tau_{k,l}$ represents a delay domain cyclic shift in the second group of indexes, $v_{k,l}$ represents a Doppler cyclic shift in the second group of indexes, $\langle \bar{\tau}_F, \bar{v}_F \rangle$ represents the Doppler constraint coordinates, $k$ represents a first parameter, $l$ represents a second parameter, a value range of $k$ and $l$ is $\{0 \leq k < \bar{k}_F, 0 \leq l < \lfloor \bar{v}_F / \Delta_F \rfloor\} \cup \{k = \bar{k}_F, 0 \leq l < \bar{l}_F\}$, $\bar{l}_F$ represents the quantity of complete cyclic shifts in delay domain, $\bar{k}_F$ represents the quantity of residual cyclic shifts in Doppler domain, and $\Delta_F$ represents the preset maximum Doppler shift.

41. The apparatus according to claim 40, wherein an expression of the Doppler constraint coordinates $\langle \bar{\tau}_F, \bar{v}_F \rangle$ is as follows:

$$\begin{cases} \bar{v}_F = \min_{\tau \in \{\pm 1, \pm 2, \ldots, \pm(\Delta_T - 1)\}} -u\tau \bmod N \\ \bar{\tau}_F = -u^{-1}\bar{v}_F \bmod N \end{cases}$$

wherein $N$ represents a sequence length, the sequence length is a prime number, $u$ represents a root index, $\tau$ represents a delay, and $\Delta_T$ represents the preset maximum delay;

an expression of the quantity of complete cyclic shifts in delay domain is as follows:

$$\bar{k}_F = \left\lfloor \frac{\bar{d}_F}{\Delta_T} \right\rfloor$$

wherein $\bar{k}_F$ represents the quantity of complete cyclic shifts in delay domain, and $\bar{d}_F$ represents the Doppler spacing;

an expression of the quantity $\bar{l}_F$ of residual cyclic shifts in Doppler domain is as follows:

$$\bar{l}_F = \max\left\{ \left\lfloor \left( \left( \bar{\bar{v}}_F - \bar{v}_F \cdot \left\lfloor \frac{(\bar{k}_F + 1)\Delta_T - \min\{\bar{\bar{\tau}}_F, N - \bar{\bar{\tau}}_F\} - 1}{\min\{\bar{\bar{\tau}}_F, N - \bar{\bar{\tau}}_F\}} \right\rfloor + \bar{k}_F \cdot (\bar{v}_F \bmod \Delta_F) \right) \middle/ \Delta_F \right\rfloor, 0 \right\}$$

wherein $\langle \bar{\bar{\tau}}_F, \bar{\bar{v}}_F \rangle$ represents the inverse Doppler constraint coordinates, and $\Delta_F$ represents the preset maximum Doppler shift;

an expression of the delay spacing $\bar{d}_F$ is as follows:

$$\bar{d}_F = \min\left\{ d_F \middle| \bar{v}_F \cdot \left\lfloor \frac{d_F - \min\{\bar{\bar{\tau}}_F, N - \bar{\bar{\tau}}_F\}}{\min\{\bar{\bar{\tau}}_F, N - \bar{\bar{\tau}}_F\}} \right\rfloor - \bar{v}_F \bmod \Delta_F \cdot \left( \left\lfloor \frac{d_F}{\Delta_T} \right\rfloor + 1 \right) \geq \bar{\bar{v}}_F - \bar{v}_F \right\}; \text{ and}$$

an expression of the inverse Doppler constraint coordinates $\langle \bar{\bar{\tau}}_F, \bar{\bar{v}}_F \rangle$ is as follows:

$$\begin{cases} \bar{\bar{v}}_F = \min_{\tau \in \{1,2,\dots,\Delta_T - 1\}} - \operatorname{sgn}(\bar{\tau}_F - N/2)\, u\tau \bmod N \\ \bar{\bar{\tau}}_F = -\, u^{-1} \bar{\bar{v}}_F \bmod N \end{cases} .$$

42. The apparatus according to any one of claims 38 to 41, wherein

when $\bar{l}_T \cdot \lfloor \bar{\tau}_T / \Delta_T \rfloor + \bar{k}_T \geq \bar{k}_F \cdot \lfloor \bar{v}_F / \Delta_F \rfloor + \bar{l}_F$, the cyclic shift index is the first group of indexes; or

when $\bar{l}_T \cdot \lfloor \bar{\tau}_T / \Delta_T \rfloor + \bar{k}_T < \bar{k}_F \cdot \lfloor \bar{v}_F / \Delta_F \rfloor + \bar{l}_F$, the cyclic shift index is the second group of indexes.

43. The apparatus according to any one of claims 23 to 42, wherein an expression of a discrete-time signal of the cyclic shift sequence is:

$$s_{u,k,l}(n) = e^{-j\pi u(n + C_{k,l})(n + C_{k,l} + 1)/N}, n = 0, 1, \dots, N-1$$

wherein $s_{u,k,l}(n)$ represents the cyclic shift sequence, $N$ represents the sequence length, the sequence length is a prime number, $u$ represents the root index, $C_{k,l}$ represents the cyclic shift index, $C_{k,l} = (\tau_{k,l} + u^{-1}v_{k,l}) \bmod N$, $\tau_{k,l}$ represents the delay domain index, $v_{k,l}$ represents the Doppler domain index, $k$ represents the first parameter, and $l$ represents the second parameter.

44. A communication system, wherein the communication system comprises a first apparatus and a second apparatus, wherein

the first apparatus is configured to perform the method according to claim 1 or any one of claims 3 to 22, and the second apparatus is configured to perform the method according to any one of claims 2 to 22.

45. A communication apparatus, wherein the communication apparatus comprises a processor, and the processor is configured to cause the communication apparatus to implement the method according to any one of claims 1 to 22 by executing instructions stored in a memory or by using a logic circuit.

46. A computer-readable storage medium, wherein the computer-readable storage medium stores a computer program, and when the computer program is run on a processor, the method according to any one of claims 1 to 22 is performed.

47. A computer program product, wherein the computer program product comprises a computer program or instructions, and when the computer program or the instructions are executed, the method according to any one of claims 1 to 22 is performed.

48. A chip system, wherein the chip system comprises at least one processor and an interface circuit, the interface circuit and the at least one processor are interconnected through a line, and the processor is configured to implement the method according to any one of claims 1 to 22.

49. A communication system, comprising the communication apparatus according to claim 23 or claims 25 to 43 and the communication apparatus according to claims 24 to 43.

FIG. 1

FIG. 2

$\Delta_T \leq u^{-1} < N_{ZC}/3$

$N_{ZC}/3 \leq u^{-1} < (N_{ZC}-\Delta_T)/2$

FIG. 3A

FIG. 3B

FIG. 4A

FIG. 4B

FIG. 4C

FIG. 5A

$N$: Sequence length
$u$: Root index
$D_T$: Preset maximum delay
$D_F$: Preset maximum Doppler shift

FIG. 5B

FIG. 6A

FIG. 6B

FIG. 6C

FIG. 7A

FIG. 7B

FIG. 7C

FIG. 8A

FIG. 8B

(a)

(b)

FIG. 8C

FIG. 9A

FIG. 9B

(a)

(b)

FIG. 9C

71

FIG. 10A

FIG. 10B

(a)

(b)

FIG. 10C

FIG. 11A

FIG. 11B

FIG. 11C(a)

FIG. 11C(b)

FIG. 12A

FIG. 12B

(a)

(b)

FIG. 12C

130

Communication apparatus

1301

1302

Processing unit

Communication unit

FIG. 13

Memory

1403

Communication apparatus 140

1401

Processor

1403

Memory

1402

Communication interface

Memory

1403

FIG. 14

## INTERNATIONAL SEARCH REPORT

| International application No. |
|---|
| **PCT/CN2023/082622** |

**A. CLASSIFICATION OF SUBJECT MATTER**

H04W74/08(2009.01)i

According to International Patent Classification (IPC) or to both national classification and IPC

**B. FIELDS SEARCHED**

Minimum documentation searched (classification system followed by classification symbols)

IPC: H04W,H04M,H04L

Documentation searched other than minimum documentation to the extent that such documents are included in the fields searched

Electronic data base consulted during the international search (name of data base and, where practicable, search terms used)

3GPP; IEEE; WPABS; VEN; EPTXT; USTXT; WOTXT; CNTXT; CNKI: 循环移位, 时延, 延迟, 延时, 多普勒, 频偏, 频率偏移, 索引, 因子, ZC, cyclic shift, latency, delay, Doppler, frequency offset, index, factor

**C. DOCUMENTS CONSIDERED TO BE RELEVANT**

| Category* | Citation of document, with indication, where appropriate, of the relevant passages | Relevant to claim No. |
|---|---|---|
| X | CN 103384231 A (ZTE CORP.) 06 November 2013 (2013-11-06) description, paragraphs 70-109 and 134, and figure 1 | 1-3, 16, 23-25, 44-49 |
| X | CN 101641925 A (LG ELECTRONICS INC.) 03 February 2010 (2010-02-03) description, page 11, line 1-page 31, line 8 | 1-3, 16, 23-25, 44-49 |
| X | CN 101764780 A (BEIJING VIMICRO CO., LTD.) 30 June 2010 (2010-06-30) description, paragraphs 76-189 | 1-3, 16, 23-25, 44-49 |
| A | CN 113765633 A (HUAWEI TECHNOLOGIES CO., LTD.) 07 December 2021 (2021-12-07) entire document | 1-49 |
| A | WO 2018127085 A1 (HUAWEI TECHNOLOGIES CO., LTD.) 12 July 2018 (2018-07-12) entire document | 1-49 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2023** | **23 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082622**

| Patent document cited in search report | | | Publication date (day/month/year) | Patent family member(s) | | | Publication date (day/month/year) |
|---|---|---|---|---|---|---|---|
| CN | 103384231 | A | 06 November 2013 | None | | | |
| CN | 101641925 | A | 03 February 2010 | ES | 2886178 | T3 | 16 December 2021 |
| | | | | TW | 201519609 | A | 16 May 2015 |
| | | | | TWI | 580229 | B | 21 April 2017 |
| | | | | EP | 4156618 | A1 | 29 March 2023 |
| | | | | JP | 2013102497 | A | 23 May 2013 |
| | | | | JP | 5613782 | B2 | 29 October 2014 |
| | | | | TW | 200835245 | A | 16 August 2008 |
| | | | | TWI | 487332 | B | 01 June 2015 |
| | | | | EP | 2456155 | A1 | 23 May 2012 |
| | | | | EP | 2456155 | B1 | 06 June 2018 |
| | | | | HK | 1115253 | A1 | 21 November 2008 |
| | | | | EP | 3767908 | A1 | 20 January 2021 |
| | | | | ES | 2385168 | T3 | 19 July 2012 |
| | | | | JP | 2010516076 | A | 13 May 2010 |
| | | | | JP | 5180229 | B2 | 10 April 2013 |
| | | | | GB | 0912397 | D0 | 26 August 2009 |
| | | | | GB | 2458415 | A | 23 September 2009 |
| | | | | GB | 2458415 | B | 07 September 2011 |
| | | | | GB | 2458415 | C | 30 July 2014 |
| | | | | TW | 201519608 | A | 16 May 2015 |
| | | | | TWI | 581595 | B | 01 May 2017 |
| | | | | MX | 2009006847 | A | 07 July 2009 |
| | | | | ES | 2686302 | T3 | 17 October 2018 |
| | | | | JP | 2013070435 | A | 18 April 2013 |
| | | | | JP | 5613783 | B2 | 29 October 2014 |
| | | | | USRE | 47661 | E | 22 October 2019 |
| | | | | EP | 3393098 | A1 | 24 October 2018 |
| | | | | EP | 3393098 | B1 | 28 July 2021 |
| | | | | EP | 3393098 | B9 | 16 November 2022 |
| CN | 101764780 | A | 30 June 2010 | None | | | |
| CN | 113765633 | A | 07 December 2021 | None | | | |
| WO | 2018127085 | A1 | 12 July 2018 | None | | | |

Form PCT/ISA/210 (patent family annex) (July 2022)

84